(19) Europäisches Patentamt
European Patent Office
Office européen des brevets

(11) **EP 2 526 373 B1**

(12) **EUROPÄISCHE PATENTSCHRIFT**

(45) Veröffentlichungstag und Bekanntmachung des Hinweises auf die Patenterteilung:
**11.12.2013 Patentblatt 2013/50**

(21) Anmeldenummer: **11701455.5**

(22) Anmeldetag: **21.01.2011**

(51) Int Cl.:
**G01B 9/02** *(2006.01)*

(86) Internationale Anmeldenummer:
**PCT/EP2011/000248**

(87) Internationale Veröffentlichungsnummer:
**WO 2011/089010 (28.07.2011 Gazette 2011/30)**

(54) **VERFAHREN UND ANORDNUNG ZUR ROBUSTEN INTERFEROMETRIE**

METHOD AND ASSEMBLY FOR ROBUST INTERFEROMETRY

PROCÉDÉ ET AGENCEMENT D'INTERFÉROMÉTRIE ROBUSTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.12.2010 DE 102010056122
22.01.2010 DE 102010006239**

(43) Veröffentlichungstag der Anmeldung:
**28.11.2012 Patentblatt 2012/48**

(73) Patentinhaber: **Universität Stuttgart
70174 Stuttgart (DE)**

(72) Erfinder:
• **KÖRNER, Klaus
10245 Berlin (DE)**
• **BERGER, Reinhard
73547 Lorch (DE)**
• **OSTEN, Wolfgang
70569 Stuttgart (DE)**

(74) Vertreter: **Müller-Boré & Partner
Patentanwälte
Grafinger Straße 2
81671 München (DE)**

(56) Entgegenhaltungen:
WO-A1-03/019110    DE-A1-102006 015 387
US-A- 4 643 576

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

**Stand der Technik**

In der Offenlegungsschrift DE 10 2006 015 387 A1 [1] von M. Hering u. a. ist eine interferometrische Messvorrichtung auf der Basis der Weißlicht-Interferometrie, auch als Kurzkohärenz-Interferometrie bekannt, beschrieben, bei der die Wellenfronten des reflektierten Objektstrahls und die des reflektierten Referenzstrahls mittels einer Neigungsvorrichtung um einen bestimmten Winkelbetrag zueinander geneigt sind, so dass ein räumliches Interferogramm als Single-Shot-Datensatz entstehen kann. Beispielsweise ist dieser Winkelbetrag hier in einer stark modifizierten Linnik-Interferometer-Anordnung, die auch Merkmale eines Mach-Zehnder-Interferometers aufweist, durch einen Kippspiegel, der vom Licht auf dem Weg zur Detektion nur einmalig passiert wird, realisiert. Dabei ist der Kippspiegel der Linnik-Anordnung nachgeordnet, befindet sich in einem Unendlich-Strahlengang für das Objektlicht und ist noch Bestandteil des Interferometers.

Mit dem Messverfahren auf der Grundlage dieser optischen Anordnung können ein oder mehrere räumliche Interferogramme, auch als Linienstapel auf einer Matrixkamera, als Single-Shot-Datensätze in der Zeitdauer einer Bildaufnahme vollständig zur Verfügung gestellt werden.

Von besonderem Vorteil ist bei diesem Ansatz mit dem Kippspiegel im Unendlich-Strahlengang, dass die Ortsfrequenz für die Schwerpunktwellenlänge, beziehungsweise die Schwerpunktwellenzahl, im räumlichen Interferogramm am Ausgang des Interferometers in erster Näherung nicht von der Neigung der Objektoberfläche in Relation zum Interferometer beeinflusst wird. Diese Invarianz der Ortsfrequenz stellt einen großen Vorteil für die Auswertung von räumlichen Interferogrammen dar.

Diese in [1] beschriebene nachgeordnete Neigungsvorrichtung ist jedoch aufwendig - auch in der Justierung - und in der Regel recht anfällig für unerwünschte Dejustierungen und somit ist das Interferometer in der Regel auch nicht langzeitstabil. Damit kann sich auch die Signalform eines kurzkohärenten räumlichen Interferogramms in unbekannter Weise verändern, was für die Auswertung einen erheblichen Nachteil darstellen kann.

Eine gezielte Veränderung des Winkelbetrages mittels Neigungsvorrichtung, beispielsweise um die Ortsfrequenz für die Schwerpunktwellenlänge im räumlichen Interferogramm vorbestimmt zu verändern, kann zu einem unerwünschten Lateralversatz von Objektwellenfront und Referenzwellenfront bei der Detektion führen, der nur aufwendig oder durch eine Justierung in einigen Fällen gar nicht zu kompensieren ist. Damit ist bei dieser Anordnung die Möglichkeit, die Ortsfrequenz für die Schwerpuriktwellenlänge im räumlichen Interferogramm in einfacher Art und Weise zu verändern, stark eingeschränkt. Weiterhin kann es bei einer suboptimalen Justierung des recht komplexen Interferometers permanent zu einer nur teilweisen lateralen Überdeckung von Objektwellenfront und Referenzwellenfront kommen, was eine Quelle von Messfehlern darstellen oder den Tiefenmessbereich erheblich einschränken kann, da bei fehlender Überlagerung der Interferenzeffekt verschwindet. Insbesondere ist es mit diesem Ansatz nicht möglich, in einem größeren Tiefenmessbereich als der mittels eines einzigen räumlichen Interferogramms adressierte zu messen.

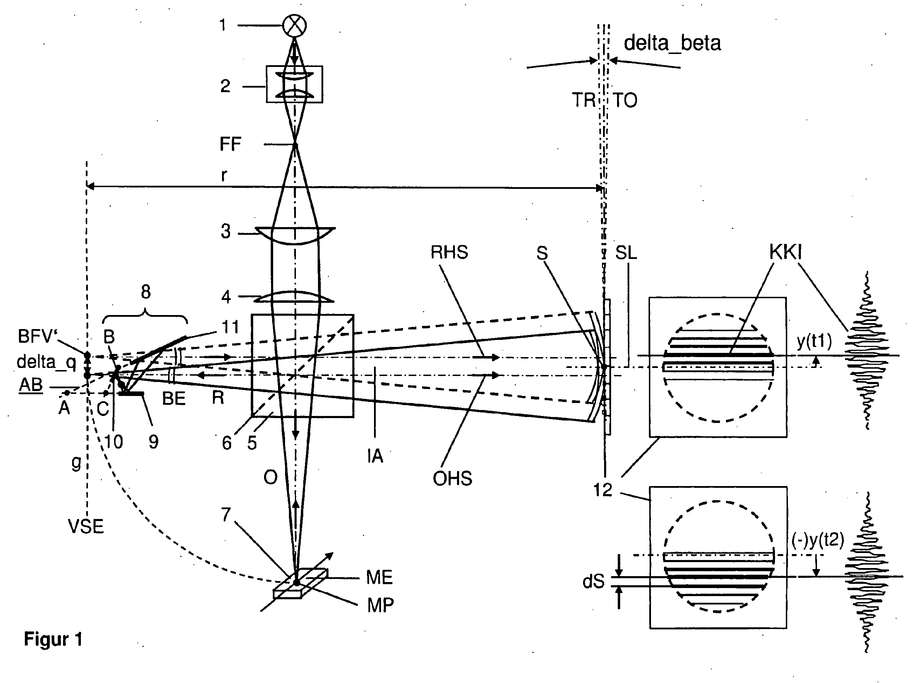

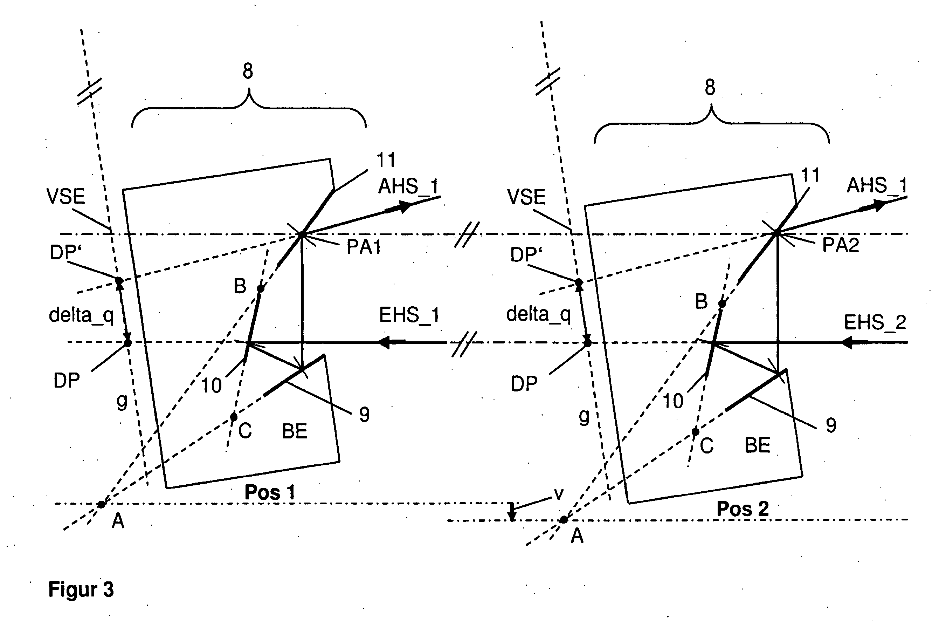

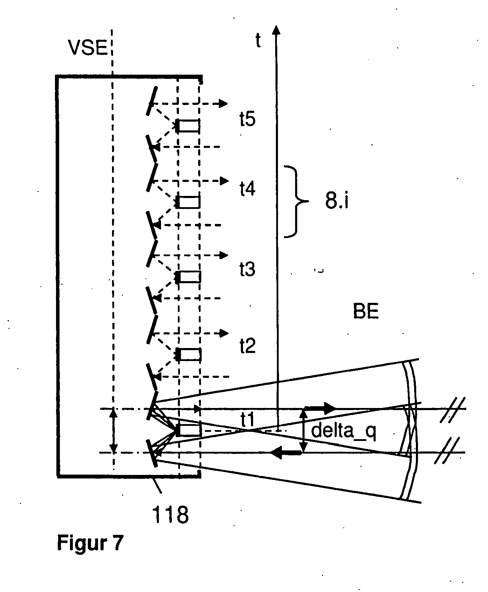

In der Veröffentlichung von M. Hering u. a. in Applied Optics, Vol. 48, Nummer 3, Seite 525 bis 538 vom 20. Januar 2009 [2] zeigen die gemessenen räumlichen Interferogramme in Abbildung 3 das Potenzial dieses Ansatzes gemäß [1]. Die in der Abbildung 1 präsentierte interferometrische One-Shot-Messanordnung stellt einen Experimentalaufbau zu Studienzwecken dar und ist für die wirtschaftliche Umsetzung eher zu komplex und zu voluminös sowie auch sehr justieraufwendig. Das optische Prinzip bedingt, dass hierbei die technischen und konstruktiven Maßnahmen, um eine hohe mechanische Stabilität und Temperatur-Stabilität zu erreichen, recht aufwendig sind. Typische Messergebnisse auf der Grundlage dieses Ansatzes wurden von M. Hering u. a. bereits im Jahr 2006 in den Proceedings of SPIE, Vol. 6188, 61880E-1 bis 61880E-11 in der Figur 7 dargestellt [3].

Das Gewinnen räumlicher Interferogramme für die One-Shot-Messtechnik, beispielsweise zur Messung des Abstandes oder des Profils, mittels Neigungsvorrichtung in Form eines planen Kippspiegels im Interferometer, wobei sich dieser jedoch stets außerhalb des objektabbildenden und auch außerhalb des fokussierten Referenz-Strahlenganges, also in einem Unendlich-Strahlengang befindet, wird als der hier zu betrachtende Stand der Technik angesehen. Räumliche Interferogramme können auch aus einem Lateralen Versatz gewonnen werden, wie das im selbst-referenzierten Shearing-Interferometer der US 4 643 576 gezeigt ist.

Bei diesem Prinzip führt die Neigung einer Objektoberfläche in Bezug zum Interferometer vorteilhafterweise nicht zu einem Verändern der Ortsfrequenz für die Schwerpunktwellenlänge, beziehungsweise die Schwerpunktwellenzahl, in einem räumlichen Interferogramm. Jedoch kann sich der Interferenzkontrast schon bei geringen Kippungen der Objektoberfläche dem Wert null nähern.

Ein vergleichsweise hoher Interferenzkontrast im detektierten räumlichen Interferogramm kann über einen vergleichsweise großen Kippwinkelbereich der Objektoberfläche nur dann erreicht werden, wenn diese Objektoberfläche mittels Optik mit hoher numerischer Apertur und mit lateral nahezu beugungsbegrenzten Fokuspunkten oder fokussierten Linienbildern beleuchtet wird.

Dagegen sind Michelson-Typ-Interferometer mit einem planem Referenzspiegel, bei denen die Ortsfrequenz für die Schwerpunktwellenlänge in einem räumlichen Interferogramm am Ausgang des Interferometers durch Kippung des Referenzspiegels oder durch Kippung des Objekts in Bezug zum Interferometer oder des Interferometers in Bezug zum Objekt zu verändern ist, für Messobjekte mit variierender und unbekannter Oberflächenneigung hinsichtlich der Auswertung von räumlichen Interferogrammen hier nicht von Interesse. Deshalb werden Ansätze auf dieser Grundlage nicht als Stand der Technik in Bezug zu dieser Erfindung angesehen und werden deshalb hier auch nicht weiter betrachtet.

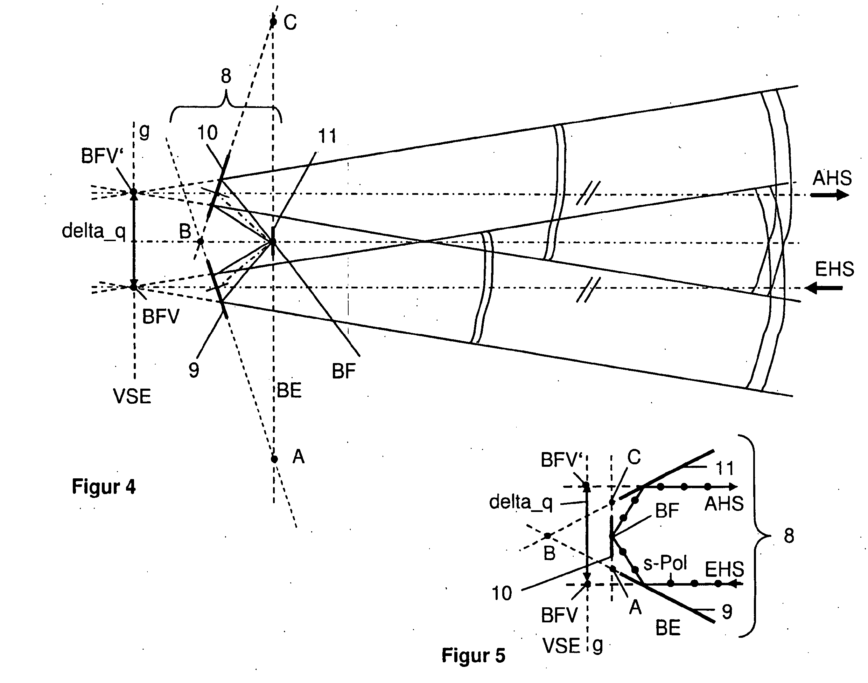

Das Gewinnen räumlicher Interferogramme für die One-Shot-Messtechnik mittels Lateral-Shear zwischen Objekt- und Referenzwellenfronten am Ausgang eines Zweistrahl-Interferometers stellt grundsätzlich eine weitere Möglichkeit der Erzeugung räumlicher Interferogramme für die One-Shot-Messtechnik, beispielsweise zur Erfassung des Abstands, dar. Denn Lateral-Shear kann in einer optischen Anordnung als Grundlage zur Generierung von Interferenzen zueinander geneigter Wellenfronten genutzt werden. Einen ganz klassischen Ansatz stellt dafür eine Michelson-Interferometer-Anordnung mit zwei Dachkant-Reflektoren dar, um die erforderliche Lateral-Shear zu erzeugen. Dieser Ansatz mit zwei Dachkant-Reflektoren wird in der Regel zur Wellenfrontanalyse eingesetzt und ist den Fachleuten gut bekannt, s. a. D. Malacara, Optical Shop Testing, John Wiley & Sons, Inc., 1992, S. 140 -141, Figur 4.16 [4] und auch W. H. Steel, Interferometry, Cambridge University  Um diesen Interferometer-Ansatz mit zwei Dachkant-Reflektoren für die Abstandsmessung und Profilmessung nutzen zu können, muss demzufolge im Objektstrahlengang des Interferometers der Objektoberfläche ein zusätzlicher Planspiegel zugeordnet werden, wobei dieser Planspiegel mit der Objektoberfläche dann eine Dachkante bildet. Im Referenzstrahlengang ist hierbei der zweite Dachkantreflektor angeordnet. Diese Anordnung liefert bei entsprechender Justierung Lateral-Shear, vermeidet die Wellenfront-Inversion, weist aber in der Regel eindeutige Nachteile wegen des Bauvolumens im Objektstrahlengang, also bezüglich der Zugänglichkeit zum Objekt auf, beispielsweise bei der Messung in Innenräumen.

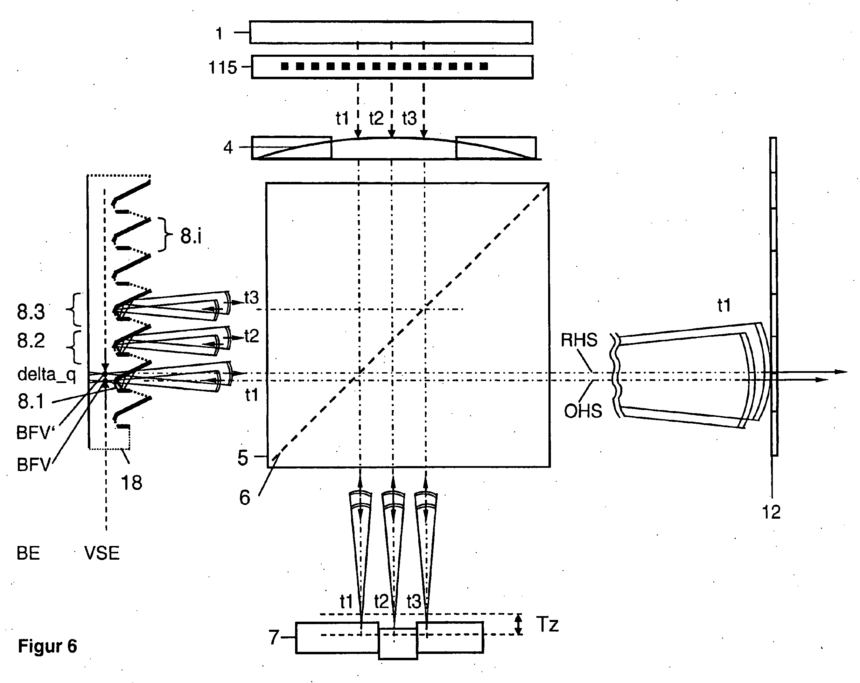

Bekannt ist auch der von D. Kelsall im Jahr 1959 in Proc. Phys. Society, 73, S. 470, Fig. 1 [6] veröffentlichte Ansatz mit zwei Tripelreflektoren als Endreflektoren eines Michelson-Interferometers. Die laterale Verschiebung eines Tripelreflektors erzeugt ebenfalls eine Lateral-Shear zwischen Objekt- und Referenzwellenfronten am Ausgang eines Michelson-Interferometers. Der Einsatz eines Tripelreflektors im Referenzstrahlengang eines Michelson-Interferometers geht ja nach bestem Wissen jedoch bereits auf F. Twyman und A. Green zurück, s. a. US-Patent 1 565 533, Figur 6, [7] zurück.

Diesen Interferometer-Ansatz als Anordnung für einen interferometrischen Sensor zur Abstandsmessung u. a. zu nutzen, bei dem ein Planspiegel des Tripelreflektors in Form einer Würfelecke, auch als Corner Cube bekannt, durch die Objektoberfläche ersetzt ist, führt dazu, dem Objekt oder der Objektoberfläche im Objektstrahlengang noch einen Dachkant-Reflektor oder zwei Planspiegel beiordnen zu müssen, wenn die unerwünschte Wellenfrontinversion zwischen Objekt- und Referenzstrahlung vermieden werden soll. Dies vergrößert aber das Sensorvolumen ganz erheblich, was für viele Applikationen sehr nachteilig ist oder dies schließt den Einsatz einer derartigen Lösung völlig aus. Auch ist hierbei keine Invarianz der Lateral-Shear und damit der Neigung der interferierenden Wellenfronten beispielsweise gegenüber lateralem Wegdriften des Tripelreferenz-Reflektors oder auch des Objekts selbst gegeben. Damit kann sich die Ortsfrequenz für die Schwerpunktwellenlänge im räumlichen Interferogramm ändern, was sehr nachteilig für die Auswertung sein kann.

## Beschreibung der Erfindung

Das Ziel der Erfindung besteht zum einen darin, insbesondere kostengünstige und vor Allem robuste Messverfahren, insbesondere als One-Shot-Messtechnik, zur Erfassung von Abstand, Tiefe, Profil, Form, Welligkeit und/oder Rauheit oder der optischen Weglänge in oder an technischen oder biologischen Objekten, auch in Schichtenform, insbesondere einschließlich eines oder mehrerer Luftabstände in Optiken, oder auch zur optischen Kohärenz-Tomografie (OCT), insbesondere auch mit Single-Shot-Multi-Punkt-Antastung, der wirtschaftlichen Nutzung zuzuführen.

Damit ist also die erfinderische Aufgabe zu lösen, beim optischen Antasten der Objektoberfläche oder eines Objektvolumens mit einem Interferometer optische Signale in bestgeeigneter, also möglichst gut auswertbarer Signalform für ein punktförmiges, linienhaftes Messfeld oder auch einem flächigen Messfeld mit vielen einzelnen Messpunkten insbesondere ohne einen mechanischen, zeitseriell erfolgenden Tiefen-Scan bereitzustellen.

In einem Aspekt sollen dabei insbesondere viele lateral benachbarte Objektelemente oder Objektpunkte gleichzeitig angemessen werden können. Das heißt, es besteht insbesondere die Aufgabe, gut auswertbare optische Signale bei der optischen Antastung von Objekten durch das erfindungsgemäße Verfahren und die erfindungsgemäße Anordnung (oder Vorrichtung) mittels eines das Objekt anmessenden Interferometers möglichst schnell bereitzustellen.

In einem weiteren Aspekt soll dabei insbesondere auch in einem größeren Tiefenbereich und/oder bei größeren Objektabständen gemessen werden können. Das heißt, es besteht insbesondere die Aufgabe, gut auswertbare optische Signalpakete sukzessive, also in mehreren Schritten - mindestens in zwei Schritten - bei der optischen Antastung von Objekten durch ein erfindungsgemäßes Verfahren bereitzustellen.

Die Ortsfrequenz für die Schwerpunktwellenlänge, beziehungsweise die Schwerpunktwellenzahl, kS in einem räumlichen Interferogramm soll dabei in hohem Maße konstant oder vorbestimmt einstellbar sowie von der Neigung der Objektoberfläche in hohem Maße unabhängig sein. Dabei ist im Einzelnen die Aufgabe zu lösen, den Betrag der Neigung interferierender Wellenfronten, die auf einem Detektor ein räumliches Interferogramms bilden, mit einfachen Mitteln, kostengünstig, möglichst langzeitstabil und weitgehend unveränderlich durch Umgebungseinflüsse zu realisieren. Die beim Einsatz eines optischen Systems typischerweise auftretenden Dejustierungen durch Veränderung der Lage von Komponenten, auch durch Temperaturveränderungen im Umfeld sowie durch veränderliche mechanische Verspannungen, z. B. in den Halteelementen der Komponenten im Messsystem, sollen keinen oder nur einen vergleichsweise geringen Einfluss auf den Betrag der Neigung der interferierenden Wellenfronten bei der Detektion haben. Das kann bekannterweise natürlich nur erreicht werden, wenn auch das Spektrum des interferierenden Lichts unveränderlich bleibt.

Einsatzgebiete der erfinderischen Lösung sollen sein: Die Mikroform- und die Mikroprofilmessung, die Messung der Rauheit sowie auch die Miniform-Messung, die FormMessung an nicht oder nur wenig kooperativen Oberflächen, wie auch z.B. menschliches Lebergewebe. Ein Beispiel für die Anwendung der Erfindung ist hier auch die Erfassung der Mikroform am Innenohr beim Menschen in der chirurgischen Operationsphase. Der Einsatz bei endoskopischen 3D-Systemen soll zu gut miniaturisierbaren Sensorlösungen hoher Messgenauigkeit führen.

Ein weiteres Anwendungsgebiet soll auch die Messung von nichtpolierten Asphären und/oder Freiformflächen darstellen.

Eine besondere Motivation für die Anwendung der Erfindung ist die Nutzbarmachung der interferometrischen Verstärkung eines schwachen Objektsignals für Messungen auch in einer mesoskopischen und/oder makroskopischen Skala. Das ist beispielsweise im Maschinenbau von sehr großem Vorteil, wo bei der Messung vieler technischer Objekte eine Messunsicherheit im Sub-Mikrometerbereich nicht in jedem Fall erforderlich ist. Durch die Nutzung der interferometrischen Verstärkung, auch als "Interferometric Gain" bekannt, sollen auch Objektelemente geringster Reflektivität messtechnisch noch vergleichsweise gut in der Tiefe, beispielsweise mit einer Messunsicherheit im einstelligen Mikrometerbereich, erfasst werden können. Deshalb soll die hochgenaue Messung der Form von teilspiegelnden, schwach lichtstreuenden und dabei geneigten Getriebezahnflächen auch ein bevorzugtes Einsatzgebiet der Erfindung darstellen.

Die Messanordnung (bzw. Messvorrichtung) und das Verfahren sollen auch zur optischen Kohärenz-Tomografie (OCT), insbesondere mit Multi-Punkt-Antastung, für technische oder biologische Objekte eingesetzt werden können.

In einer bevorzugten Ausführungsform der erfindungsgemäßen Messanordnung wird auf den Einsatz von Mitteln zur dispersiven Spektroskopie verzichtet.

Hier wird der Begriff Licht stets als Synonym für elektromagnetische Strahlung vom Terahertz-, über den Infrarot- bis zum tiefen UV-Bereich verwendet.

**Merkmale zu einem Aspekt der Anordnung**

1. Es handelt sich um eine Anordnung zur robusten Interferometrie zur Erfassung von Abstand, Tiefe, Profil, Form, Welligkeit und/oder Rauheit oder der optischen Weglänge in oder an technischen oder biologischen Objekten, auch in Schichtform, oder auch zur optischen Kohärenz-Tomografie (OCT) für technische oder biologische Objekte. Im Folgenden wird die Anordnung beschrieben, die Folgende Mittel umfasst:

- eine Quelle kurzkohärenter elektromagnetischer Strahlung zur Beleuchtung des Objekts,

- ein Interferometer, insbesondere auch in Form eines Interferenzmikroskops, mit einem Objekt- und mit mindestens einem Referenzstrahlengang, in dem mindestens ein End-Reflektor angeordnet ist, und einer Messebene oder einem Messvolumen im Objektstrahlengang, in der bzw. dem sich zumindest näherungsweise die optisch anzumessenden Oberflächen- oder Volumenelemente des Objekts befinden.

- sowie mindestens einen gerasterten Detektor zur Detektion elektromagnetischer Strahlung in Form mindestens eines räumlichen Interferogramms.

Die Quelle kurzkohärenter elektromagnetischer Strahlung wird im Folgenden auch als Lichtquelle bezeichnet, wobei hier Licht im Sinne elektromagnetischer Strahlung von Terahertz- über IR-, VIS- bis UV-Strahlung verstanden wird. Die Lichtquelle kann ein lateral feinstrukturiertes Beleuchtungsmuster auf dem Objekt erzeugen. Dabei kann die Lichtquelle einen Punktstrahler, einen lateralen Linienstrahler oder eine Gruppe von Punktstrahlern in Linien- oder Matrixform auch mit einzeln schaltbaren punktförmigen oder linienförmigen Leuchtelementen darstellen.

Die Lichtquelle kann eine ein- oder mehrfarbige LED oder OLED, eine Superlumineszenz-Diode darstellen, einen Superkontinuums-Lichtquelle, einen Laser auf Frequenzkamm-Basis, eine Halogenlampe oder auch Lichtquellen auf der Basis von Glühlicht.

Der gerasterte Detektor kann eine Grauwert- oder Farb-CCD bzw. eine Grauwert- oder Farb-CMOS-Kamera in Linien- oder Matrixform sein.

Der wellenoptische Schärfentiefebereich definiert hier zumindest näherungsweise den Tiefenbereich der Messanordnung, in welchem sich die Messebene befindet, so dass hier auch von einem Messvolumen im Objektvolumen gesprochen werden kann. In diesem müssen sich die zur optischen Antastung kommenden Oberflächen- oder Volumenelemente befinden.

Erfindungsgemäß ist im Referenzstrahlengang des Interferometers mindestens ein End-Reflektor mit drei Planspiegeln als Referenzreflektor, also mindestens ein Drei-Planspiegel-Referenz-Endreflektor, angeordnet und die Flächen dieser drei Planspiegel liegen jeweils zumindest näherungsweise senkrecht zu einer gemeinsamen Bezugsebene BE.

Dabei bilden die drei Spurgeraden der Ebenen, welche durch die Flächen der drei Planspiegel dargestellt werden, in der Bezugsebene BE ein Dreieck ABC, damit bei diesem Interferometer zwischen Referenz- und Objektbündel eine Lateral-Shear besteht, die eine Strecke mit dem Betrag delta_q darstellt. Die Strecken AB, BC und CA dieses Dreiecks ABC müssen dazu eine gewisse Länge aufweisen. Beispielsweise kann die Länge dieser Strecken typischerweise jeweils in der Größenordnung von einigen Zehntel Millimetern bis zu einigen Millimetern mm liegen. Die Winkel dieses Dreiecks sind dabei weder extrem spitz, noch stellt dieses Dreieck ein rechtwinkliges Dreieck dar. Die sich ergebende Lateral-Shear kann einen Betrag delta_q in der Größenordnung typischerweise von 0,1 mm bis zu einigen Millimetern aufweisen. Bei einer Anordnung mit einem lateral hochauflösenden Mikroskop und einer Schwerpunktwellenlänge im UV-Bereich kann der Betrag delta_q jedoch auch in der Größenordnung von wenigen Hundertstel Millimetern sein. Dies basiert auf entsprechend kleinen Längen der Strecken AB, BC und CA und den entsprechenden drei Winkeln des Dreiecks ABC. Dieser Ansatz ist hinsichtlich des Betrages delta_q weit skalierbar.

Die Lateral-Shear vom Betrag delta_q zwischen Referenz- und Objektbündel besteht in der virtuellen Spiegelebene VSE des Drei-Planspiegel-Referenz-Endreflektors im Referenzstrahlengang. Die virtuelle Spiegelebene VSE ist mit der Messebene ME des Objektstrahlenganges durch Strahlteilung zumindest näherungsweise optisch konjugiert. Dabei ist der Drei-Planspiegel-Referenz-Endreflektor winkelmäßig so ausgerichtet, dass elektromagnetische Strahlung aus dem Referenzstrahlengang auf den gerasterten Detektor gelangt.

Eine Spurgerade nennt man bekannterweise in der darstellenden Geometrie die Schnittgerade zwischen einer Ebene im Raum, hier jeweils eine Ebene, die durch eine Planspiegelfläche definiert ist, und einer Grundebene, hier die Bezugsebene BE.

Eine laterale Verschiebung eines Drei-Planspiegel-Referenz-Endreflektors führt nicht zu einer Veränderung des Betrages der Lateral-Shear delta_q. Diese Invarianz wird als ein großer technischer Vorteil angesehen, da sich somit eine hohe Robustheit der Signalentstehung gegenüber derartigen Dejustierungen ergibt. Diese Invarianz stellt auch eine gute Voraussetzung für den Einsatz von Doppelspalt- oder Doppellochblenden in einem abbildenden Detektionsstrahlengang dar, da ein konstanter Betrag der Lateral-Shear delta_q im Detektionsstrahlengang zu einem langzeitig konstanten Abstand räumlich kohärenter Punktbilder führt. Mittels Doppelblende, die auch durch einen räumlichen Lichtmodulator dargestellt sein kann, können diese räumlich kohärenten Punktbilder zur Erzeugung von Point-Diffraction-Interferogrammen mit einem hohen Kontrast genutzt werden. Die Messebene ME im Objektstrahlengäng und die Ebene, in der sich die Doppelblende befindet, sind dabei zumindest näherungsweise optisch konjugiert.

Der Drei-Planspiegel-Referenz-Endreflektor ist ein im erfindungsgemäßen Interferometer Lateral-Shear erzeugender Reflektor. Dabei weist der Drei-Spiegel-Referenz-Endreflektor, wie bereits dargestellt, eine virtuelle Spiegelebene VSE auf. Dieser virtuellen Spiegelebene VSE kann das Auftreten der Lateral-Shear räumlich zugeordnet werden. Beispielsweise führt die Interferenz von einer Objektkugelwelle und einer Referenzkugelwelle, die durch das Interferometer erzeugt werden und deren Kugelzentren durch eine Lateral-Shear vom Betrag delta_q separiert sind, zumindest in einem begrenzten Teilbereich der Detektorebene zu einem räumlichen Interferogramm mit einer zumindest näherungsweise konstanten Ortsfrequenz für die Schwerpunktwellenlänge, da die interferierenden Wellenflächen auf dem Detektor zueinander geneigt sind. In einem begrenzten Ausschnitt der Kugelwellenflächen sind diese in der Regel hinreichend gut durch Planwellen zu approximieren. Diese auf einem Detektor zu registrierende Interferenzerscheinung von zwei räumlich kohärenten Kugelwellenflächen ist dem Fachmann in der Optik als das klassische Youngsche Doppelspaltexperiment hinreichend bekannt, wobei der Spaltabstand d im Doppelspaltexperiment hier der Lateral-Shear mit dem Betrag delta_q entspricht.

Die Lateral-Shear mit dem Betrag delta_q dient hier also als Grundlage für die Erzeugung von einem oder mehreren räumlichen Interferogrammen, welche in ihrer Ortsfrequenz für die Schwerpunktwellenlänge nicht oder nur ganz unwesentlich durch die Neigung der Objektoberfläche zu beeinflussen sind, wenn das punktförmige Zentrum der Objekt-Kugelwelle auf einem Oberflächenelement liegt, also das Objekt auch durch fokussiertes Licht zumindest näherungsweise punktförmig beleuchtet wird. Voraussetzung ist hierbei natürlich auch die Konstanz des Spektrums der zur Interferenz kommenden Lichtanteile. Diese Invarianz der Ortsfrequenz für die Schwerpunktwellenlänge ist für die Auswertung räumlicher Interferogramme von sehr großem Vorteil, da hier beispielsweise aufgrund der Vorab-Kenntnis der Ortsfrequenz für die Schwerpunktwellenlänge im Signal robuste und vergleichsweise schnelle Lock-in Ansätze zur Anwendung kommen können, die zumindest näherungsweise auf diese Ortsfrequenz für die Schwerpunktwellenlänge eingestellt sind. Algorithmen auf der Basis eines Lock-in Ansatzes gestatten, auch aus stark verrauschten und durch Aberrationen beeinflussten Signalen, hier räumliche Interferogramme, Tiefeninformationen mit vergleichsweise geringer Messunsicherheit bereitzustellen. Da hier eine Quelle kurzkohärenter elektromagnetischer Strahlung eingesetzt wird, entstehen hier Kurzkohärenz-Inteferogramme, die eine Einhüllende aufweisen. Im einfachsten Fall kann das Maximum oder der Schwerpunkt der Einhüllenden, beispielsweise zur Bestimmung der Tiefe eines Objektpunktes oder der optischen Weglänge an einem Punkt eines Objekts, verwendet werden. Dabei kann auch die optische Schichtdicke von transparenten Medien bestimmt werden. Dies ist besonders einfach, wenn die Schichtdicke größer als die Kohärenzlänge der elektromagnetischen Strahlung der Quelle ist, da dann die Maxima oder die Schwerpunkte der Einhüllenden der Kurzkohärenz-Inteferogramme deutlich separiert sind. Der dabei im Kurzkohärenz-Interferogramm des tiefer liegenden Objektpunktes auftretende Chirp-Effekt durch Dispersion im brechenden Medium kann bei der Auswertung modellgestützt behandelt werden.

Auf dem gerasterten Detektor wird vorzugsweise für jeden Objektpunkt in einem lateral ausgedehnten Bereich ein kurzkohärentes räumliches Interferogramm detektiert, so dass durch Aufnahme eines einzigen Bildes mit vorzugsweise vielen nebeneinander liegenden räumlichen Interferogrammen und deren Auswertung ein vollständiges Linienprofil gewonnen werden kann.

Es soll hier festgestellt werden, dass grundsätzlich End-Reflektoren mit einer beliebigen ungeradzahligen Anzahl $2n+1$ von Planspiegelflächen - mit n größer/gleich 2 - als Referenzreflektoren eingesetzt werden können, wenn diese Planspiegelflächen jeweils zu einer Bezugsebene BE senkrecht stehen und nur einmal passiert werden. In all diesen Fällen wird die für das Messverfahren benötigte Lateral-Shear delta_q erzeugt. Außerdem tritt optimalerweise keine Inversion der Referenzwellenfront in Bezug zur Objektwellenfront auf, wenn dort nur eine einmalige Reflexion oder eine ebenfalls ungeradzahlige Anzahl $2n+1$ - mit n größer/gleich 1 - am Objekt oder weiteren Planspiegelflächen erfolgt. Hier gilt, dass die Differenz der Anzahl der Reflexionen zwischen Referenz- und Objektstrahlengang $2n$ - mit n größer/gleich 0 - betragen muss. Sowohl aus wirtschaftlicher Sicht als auch aus Gründen eines optimalen Sensordesigns und der Sensorfertigung stellt die Nutzung eines End-Reflektors mit drei Planspiegeln als Referenzreflektor und einem direkten optischen Antasten des Objekts ohne weitere Planspiegel, so dass eine einmalige Reflexion im Objektstrahlengang erfolgt, für die große Mehrzahl der Fälle die optimale technische und auch wirtschaftliche Lösung dar.

**Weitere bevorzugte Merkmale der Anordnung**

2. Vorzugsweise bilden bei der Anordnung zur robusten Interferometrie die drei Spurgeraden in der Bezugsebene BE ein stumpfwinkliges Dreieck ABC. Vorteilhaft ist hierbei, dass bei einer derartigen Spiegelanordnung die Einfallswinkel auf die drei Planspiegel - auch die der Randstrahlen eines Beleuchtungsbündels - unter 60° gehalten werden können. Beispielsweise, wenn der halbe Öffnungswinkel des Beleuchtungsbündels 8,6 Altgrad, also die numerische Apertur etwa 0,15 beträgt, und die Winkelwerte 21 Altgrad, 24 Altgrad und 135 Altgrad betragen.

3. Vorzugsweise bilden bei der Anordnung zur robusten Interferometrie die drei Spurgeraden in der Bezugsebene BE ein spitzwinkliges Dreieck ABC. Beispielsweise können die Winkelwerte in der Größe von 52, 64 und 64 Altgrad sein. Vorteilhaft ist hierbei, dass die Fertigung eines Drei-Spiegel-Referenz-Endreflektors, bei dem die Spurgeraden der drei Planspiegel ein spitzwinkliges Dreieck bilden, in der Regel vergleichsweise einfach ist, beispielsweise durch Single-Point-Diamantbearbeitung oder Abformtechnik, da die Zugänglichkeit zu den Flächen der drei Planspiegel in der Regel gut gegeben ist. Es treten jedoch vergleichsweise große Einfallswinkel auf den drei Planspiegeln auf, was einen erheblichen Einfluss auf die Polarisation des Lichts und den polarisationsabhängigen Reflexionsgrad haben kann.

4. Vorzugsweise sind bei der Anordnung zur robusten Interferometrie die drei Planspiegel in Rachenform angeordnet. Eine Spiegelanordnung in Rachenform lässt sich vergleichsweise gut herstellen.

5. Vorzugsweise sind bei der Anordnung zur robusten Interferometrie die drei Planspiegel in Labyrinthform angeordnet. Also drei einzelne Planspiegelflächen sind in einem Drei-Plänspiegel-Referenz-Endreflektor jeweils als offener Spiegelrachen oder als Spiegellabyrinth angeordnet. Dabei kann der Strahlengang im Drei-Planspiegel-Referenz-Endreflektor beim Rachen in gekreuzter Form bestehen. Beim Labyrinth dagegen kann der Strahlengang in unregel- oder regelmäßiger M-Form ausgebildet sein. Dabei können ein oder mehrere Drei-Spiegel-Referenz-Endreflektoren in einer Metallplatte miniaturisiert ausgebildet sein. Insbesondere bietet sich für die Herstellung der Drei-Spiegel-Referenz-Endreflektoren in Rachenform die Single-Point-Diamantbearbeitungstechnik an. Es kann aber auch die Abform-, Präge- und/oder Drucktechnik zur Anwendung kommen.

6. Vorzugsweise ist bei der Anordnung zur robusten Interferometrie der Drei-Planspiegel-Referenz-Endreflektor winkelmäßig im Interferometer so angeordnet, dass sich der Hauptstrahl des ausgehenden Referenzbündels nach Passieren des Drei-Planspiegel-Referenz-Endreflektors zumindest näherungsweise parallel zum Hauptstrahl des eingehenden Referenzbündels ausbreitet. Dabei weist dann der Versatz der Hauptstrahlen den Betrag der Lateral-Shear delta_q auf. Von Vorteil für die Auswertung von Interferogrammen ist hierbei, dass die Lateral-Shear vom Betrag delta_q invariant hinsichtlich lateraler Verschiebungen des Referenzreflektors ist. Weiterhin gibt es bei einem Drei-Planspiegel-Referenz-Endreflektor mit drei zueinander geneigten Planspiegeln keine Wellenfrontinversion zwischen Objekt- und Referenzstrahlung. Das reduziert die Anforderungen an die Beleuchtungsoptik erheblich. Beim Einsatz einer Lichtquelle mit Strahlformungsoptik zur Beleuchtung des Objekts mit einem Fokusfleck oder einer linienhaften Beleuchtung mit der Längsachse in Richtung der Schnittgeraden g spielt eine kleine Verkippung eines monolithisch ausgebildeten und somit in sich starren Drei-Spiegel-Referenz-Endreflektors eine praktisch untergeordnete Rolle.

In einer Umgebung mit starken Erschütterungen kann eine gepulste Lichtquelle eingesetzt werden, um gut auswertbare Signale auf der Basis räumlicher Interferogramme zu erhalten.

Fällt der Fokuspunkt BF eines Referenzstrahlenbündels auf die virtuelle Spiegelebene VSE des Drei-Spiegel-Referenz-Endreflektors, wird dieser um die Lateral-Shear mit dem Betrag delta_q in der virtuellen Spiegelebene VSE versetzt und es entsteht der Fokuspunkt BF'. Die Strecke, welche die Lateral-Shear mit dem Betrag delta_q darstellt, ist dabei stets parallel zur Schnittgeraden g von Bezugsebene BE und virtueller Spiegelebene VSE.

7. Vorzugsweise ist bei der Anordnung zur robusten Interferometrie ein Objektiv mit der Brennweite f13' bzw. f17', welches das Objektbündel in Richtung Detektion kollimiert, so angeordnet, dass dessen dem Objekt zugewandte Brennebene F13 bzw. F17 mit der virtuellen Spiegelebene VSE des Drei-Planspiegel-Referenz-Endreflektors zusammenfällt. Oder durch eine weitere Abbildungsstufe zwischen einem Objektiv zur Kollimierung und der virtuellen Spiegelebene VSE des Drei-Planspiegel-Referenz-Endreflektors kann dieses Zusammenfallen als optische Konjugation (VSE-F13 bzw. VSE-F17) erreicht werden. Die optische Konjugation kann auch durch Strahlvereinigung erzeugt werden. Die virtuelle Spiegelebene VSE des Drei-Planspiegel-Referenz-Endreflektors, die auch als die virtuelle Reflexionsebene dieses Endreflektors angesehen werden kann, stellt dann eine zur Messebene des Objektstrahlenganges optisch konjugierte Ebene dar. Die Lateral-Shear vom Betrag delta_q entsteht in diesem Fall auch in der Brennebene F13 bzw. F17 des Objektivs welches das Objektbündel in Richtung Detektion kollimiert.

Die virtuelle Spiegelebene VSE stellt also genau eine baugruppenfeste Ebene im beschriebenen Drei-Planspiegel-Referenz-Endreflektor mit drei Planspiegeln dar, auf die der Hauptstrahl eines einfallenden homozentrischen Bündels senkrecht auftreffen kann. Weiterhin kann das Zentrum BF des homozentrischen Bündels in der virtuellen Spiegelebene VSE liegen. Dann ist das Zentrum des ausfallenden homozentrischen Bündels BF' um die Lateral-Shear mit dem Betrag delta_q in der VSE versetzt und dessen Hauptstrahl steht auch senkrecht auf der VSE. Dabei steht die Verbindungsstrecke der beiden Bündelzentren, die ja den Betrag, also die Länge, delta_q aufweist, parallel zur Bezugsebene BE, die durch die drei Planspiegelflächen definiert ist.

Mit diesem erfinderischen Ansatz können die räumlichen Interferogramme von allen Objektpunkten, die sich auf einem beliebigen Punkt des nutzbaren Objektfeldes befinden, welches zumindest näherungsweise in der Brennebene (F13) liegt, auf derselben Detektorfläche detektiert werden. Denn es erfolgt in der Brennebene (F13') kein laterales Wandern des Objektbündels in Abhängigkeit von der lateralen Position eines Messpunktes im Objektfeld. Im Idealfall entstehen dann bei einem achssenkrecht justierten Planspiegel als Objekt, der in der Brennebene F13 liegt, und hochkorrigierter Optik beim lateralen Durchschalten des Beleuchtungsmusters im Objektfeld, wodurch beliebige Punkte im Objektfeld angetastet werden können, die Maxima der Einhüllenden des Kurzkohärenz-Interferogramms bzw. auch deren Schwerpunkte zumindest näherungsweise an jeweils derselben Stelle, also jeweils demselben Pixeln oder in deren unmittelbarer Umgebung, auf dem Detektor. Bei einer schwachen Kippung des Planspiegels um eine Achse senkrecht zur Bezngsebene BE und zeifsequerizieller Abtastung des Planspiegels mit Lichtpunkten einer gesteuerten Lichtquelle entlang einer Linie parallel zur Bezugsebene BE liegen die Schwerpunkte im Idealfall dann auf dem Detektor ebenfalls auf einer Linie.

Bei Positionierung eines Objekts in der Brennebene F13 im Objektstrahlengang, wobei die Detektion räumlicher Interferogramme in der Brennebene F13' oder einer optisch konjugierten Ebene erfolgt, ist die Ortsfrequenz für die Schwerpunktwellenlänge, beziehungsweise die Schwerpunktwellenzahl, der räumlichen Interferogramme nicht durch die Neigung der Objektoberfläche zu beeinflussen, wenn diese spektral nicht selektiv ist, also beispielsweise grau ist. Dabei ist es für einen hohen Kontrast der Interferenz jedoch von Vorteil, wenn das Objekt durch fokussiertes Licht punktförmig oder linienhaft beleuchtet wird. Diese Invarianz der Ortsfrequenz für die Schwerpunktwellenlänge, die nur unter der Voraussetzung eines konstanten Lichtspektrums besteht, ist für die Auswertung räumlicher Interferogramme von sehr großem Vorteil, da hier beispielsweise aufgrund der Vorab-Kenntnis dieser Ortsfrequenz im Signal robuste und vergleichsweise schnelle Lock-in Ansätze zur Anwendung kommen können, die zumindest näherungsweise auf diese Ortsfrequenz für die Schwerpunktwellenlänge eingestellt sind. Algorithmen auf der Basis eines Lock-in Ansatzes gestatten in der Tendenz, auch aus stark verrauschten und durch Aberrationen beeinflussten Signalen, hier räumliche Interferogramme, Tiefeninformationen mit einer vergleichsweise verringerten Messunsicherheit bereitzustellen.

8. Vorzugsweise ist bei der Anordnung zur robusten Interferometrie die Lateral-Shear vom Betrag delta_q kleiner als der Betrag oder gleich 30% des Betrags der Brennweite f13' des Objektivs, welches das Objektbündel am Ausgang des Interferometers kollimiert. Der Betrag delta_q der Lateral-Shear sollte das Feld, in dem das Objektiv gut korrigiert ist, nicht überschreiten. In der Regel ist die Lateral-Shear deutlich kleiner als 10% des Betrags der Brennweite f13' bzw. der Brennweite f17' zu wählen.

9. Vorzugsweise ist bei der Anordnung zur robusten Interferometrie der gerasterte Detektor jeweils zumindest näherungsweise in der Brennebene (F13') eines Objektivs, welches das Objektbündel am Ausgang des Interferometers kollimiert, angeordnet oder der gerasterte Detektor ist in Lichtrichtung in einer - dieser Brennebene (F13') nachgeordneten und - zu dieser Brennebene (F13') optisch konjugierten Ebene EK angeordnet, wobei die optische Konjugation von Brennebene (F13') und der Ebene EK durch mindestens ein Strahlenbüschel gegeben ist. Das bedeutet, es werden Punkte dieser Brennebene (F13') in die Ebene EK durch mindestens ein Strahlenbüschel abgebildet.

10. Vorzugsweise ist bei der Anordnung zur robusten Interferometrie die Achse y einer Zylinderoptik parallel zu einer Geraden g angeordnet ist, welche die Schnittgerade von der Bezugsebene BE und der virtuellen Spiegelebene VSE darstellt.

Dies führt für das von einem optisch angetasteten Objektpunkt zurückkommende Licht und dem überlagerten Referenzlicht zu einer eindimensionalen Fokussierung des interferierenden Lichts entlang einer Linie und führt somit zu einer vergleichsweise hohen Lichtkonzentration der interferierenden Wellenfronten, hier in Zylinderform. Zusätzlich gibt diese Strahlführung die Möglichkeit, gleichzeitig die räumlichen Interferogramme mehrerer Objektpunkte, beispielweise die entlang einer Linie LO auf dem Objekt aufzunehmen. Die Detektion dieser linienförmigen Interferogramme erfolgt jeweils in einem ebenfalls linienhaften Bereich, d. h. entlang einer oder weniger Zeilen des gerasterten Detektors. Die Längsachsen dieser linienhaften Bereiche stehen jeweils senkrecht zu dieser Linie LO.

Die Abtastung eines Objekts entlang einer Linie mit einer Vielzahl von räumlichen Interferogrammen und daraus folgend die Berechnung eines Profils wurde bereits von M. Hering u. a. in [3] dargestellt.

11. Vorzugsweise ist bei der Anordnung zur robusten Interferometrie im Referenzstrahlengang eine Vielzahl von miniaturisierten Drei-Planspiegel-Referenz-Endreflektoren in Form eines Arrays angeordnet. Damit kann ein Objektfeld wie bei einem Nadelkissen oder einem Nagelbrett mit einer steuerbaren Lichtquelle zeitsequenziell durch Fokuspunkte abgetastet werden, wodurch beispielsweise eine Formmessung an einem kleinen Objekt begrenzter Tiefenausdehnung, beispielsweise eine Mikrodelle oder eine flache Schmiertasche in einem Metallkörper, möglich ist.

12. Vorzugsweise erfolgt bei der Anordnung zur robusten Interferometrie die Anordnung von Drei-Planspiegel-Referenz-Endreflektoren in diesem Array in einer linien-, flächenhaften oder einer dreidimensionalen Struktur. Dabei können jeweils Messpunkte entlang einer Linie gleichzeitig in einem Schuss aufgenommen werden.

13. Vorzugsweise sind bei der Anordnung zur robusten Interferometrie miniaturisierte Drei-Planspiegel-Referenz-Endreflektoren in Form einer dreidimensionalen Treppen-Struktur angeordnet. Damit können schwach geneigte Objektoberflächen vermessen werden, ohne dass die Schwerpunkte der Einhüllenden der Interferogramme stark lateral verschoben sind.

14. Vorzugsweise ist bei der Anordnung zur robusten Interferometrie die Quelle kurzkohärenter elektromagnetischer Strahlung als ein Punktmatrixstrahler ausgebildet.

15. Vorzugsweise ist bei der Anordnung zur robusten Interferometrie die Punktmatrix auf der Quelle kurzkohärenter elektromagnetischer Strahlung verdreht um einen spitzen Winkel zur Schnittlinie der interferierenden Wellenfronten auf dem gerasterten Detektor angeordnet. Die Drehachse ist dabei also senkrecht zur VSE und parallel zur BE angeordnet. So kann gleichzeitig eine Vielzahl von Interferogrammen auf dem Detektor platziert werden.

16. Vorzugsweise ist bei der Anordnung zur robusten Interferometrie die Quelle kurzkohärenter elektromagnetischer Strahlung mit schaltbaren Punktlichtquellen ausgebildet. Damit ist das Abtastmuster frei wählbar, beispielsweise auch nach Relevanz von Objektmerkmalen aus Vorab-Informationen.

17. Vorzugsweise ist bei der Anordnung zur robusten Interferometrie die gerasterte Lichtquelle mit schaltbaren Linienlichtquellen ausgebildet. Damit kann ein Objektfeld zur Formmessung besonders schnell vermessen werden.

18. Vorzugsweise ist bei der Anordnung zur robusten Interferometrie die Quelle kurzkohärenter elektromagnetischer Strahlung zur lateral feinstrukturierten Beleuchtung eines Objekts mittels eines schaltbaren räumlichen Lichtmodulator-Arrays ausgebildet, so dass diese Quelle kurzkohärenter elektromagnetischer Strahlung lateral schaltbar ausgebildet ist. Damit ist eine hohe Flexibilität gegeben. Damit sind unterschiedliche Beleuchtungsmuster auf dem Objekt in einer zeitlichen Folge realisierbar, so dass beispielsweise bei einer Ausbildung des Referenzreflektors mit linienhaften, miniaturisierten Drei-Spiegel-Referenz-Endreflektoren nacheinander jeweils eine Beleuchtung von dem Objekt mit einer einzelnen Linie und von definierten Orten auf dem Gesamt-Referenzreflektor erfolgt bis das Objektfeld vollständig beispielsweise durch eine sich schrittweise lateral fortbewegende Linie abgescannt ist. Die laterale Dichte des Abtastmusters ist wählbar, wodurch relevante Bereiche bei Bedarf mit einer höheren Abtastdichte vermessen werden können.

19. Vorzugsweise ist bei der Anordnung zur robusten Interferometrie im Referenzstrahlengang eine räumliche Korrespondenz zwischen der lateralen Struktur des Beleuchtungsmusters und der lateralen Anordnung von miniaturisierten Drei-Planspiegel-Referenz-Endreflektoren gegeben, so dass jedem miniaturisierten Drei-Planspiegel-Referenz-Endreflektor mindestens ein Lichtfleck oder eine Lichtlinie der Lichtquelle, zumindest in der Zeitdauer der Zeitdauer einer Bildaufnahme, zugeordnet ist.

20. Vorzugsweise ist bei der Anordnung zur robusten Interferometrie mindestens eine Doppelblende auf der Basis von Spalten oder Pinholes in einer gemeinsam benutzten Abbildungsstufe für Referenz- und Objektstrahlung angeordnet. Dabei ist eine erste Öffnung der Doppelblende der Referenzstrahlung und eine zweite Öffnung der Objektstrahlung vorbehalten. So kann eine konfokale Diskriminierung der Objektstrahlung durchgeführt werden. Der erste Bereich dient zum Durchtritt des Referenzlichtes in Richtung Detektor und kann aber auch unerwünschtes Störlicht aus dem Referenzstrahlengang ausblenden. Die Spalte bzw. Pinholes, also die Blendenelemente, können aber auch so fein ausgebildet sein, dass Zylinder-, bzw. Kugelwellen hoher räumlicher Kohärenz gebildet werden.

21. Vorzugsweise ist bei der Anordnung zur robusten Interferometrie die Doppelblende in einer zur Messebene ME optisch konjugierten Ebene angeordnet, wobei die optisch konjugierte Ebene durch mindestens ein Strahlenbüschel dargestellt ist. So kann eine konfokale Diskriminierung von Objektstrahlung durchgeführt werden.

22. Vorzugsweise sind bei der Anordnung zur robusten Interferometrie Mittel zur vorbestimmt gesteuerten Änderung des Abstands und/oder der Lage der Spalte oder der Pinholes der Doppelblende angeordnet, damit die konfokale Filterung optimal erfolgen kann.

23. Vorzugsweise sind bei der Anordnung zur robusten Interferometrie im Objektstrahlengang Mittel zur chromatischen Tiefenaufspaltung von Foki angeordnet. So kann ein deutlich größerer Tiefenmessbereich bei dennoch beugungsbegrenzter lateraler Auflösung als die wellenoptische Schärfentiefe realisiert werden. Dieser Ansatz, insbesondere mit einer Multipunkt-Antastung des Objekts, kann mit einem Linnik-Typ-Interferometer mit einer vergleichsweise geringen Numerischen Apertur gut umgesetzt werden. Hierbei können die Mittel zur chromatischen Tiefenaufspaltung in der Fourier-Ebene des objektabbildenden Objektivs angeordnet sein. Es kann hierzu ein diffraktiv-optisches Element eingesetzt werden. Die Anordnung eines diffraktiv-optischen Elements in der Fourier-Ebene wurde bereits in DE 103 21 895 A1 dargestellt. Dies führt zu einem konstanten Abbildungsmaßstab für Strahlung aller Wellenlängen.

24. Vorzugsweise ist bei der Anordnung zur robusten Interferometrie im Objektstrahlengang mindestens eine konfokal diskriminierende Blende angeordnet. Diese ermöglicht bei der chromatischen Tiefenaufspaltung nur den Durchtritt von Licht, welches auf der Objektoberfläche oder in einem teiltransparenten Objekt an einem Lichtstreuer scharf fokussiert war.

Fokussierte Strahlung zur Objektbeleuchtung wird also am Objekt reflektiert und/oder gestreut, passiert noch einmal die Mittel zur chromatischen Tiefenaufspaltung von Foki, wodurch eine wellenlängenabhängige Brechkraft wirksam wird, die zur zumindest teilweisen Kollimierung der Anteile der elektromagnetischen Strahlung führt, welche Foki auf oder im Objekt gebildet haben. Anschließend passiert die kollimierte elektromagnetische Strahlung ein Objektiv zur Fokussierung und anschließend zumindest teilweise die konfokal diskriminierende Blende. Nur die Anteile der elektromagnetischen Strahlung, welche Foki auf oder im Objekt gebildet haben, können diese konfokal diskriminierende Blende im Wesentlichen passieren.

Dabei kann diese konfokal diskriminierende Blende auch zur Erzeugung von Foki zur strukturierten Objektbeleuchtung benutzt werden. Dann wird diese Blende insgesamt zweimal von Strahlung durchsetzt, also von hin- als auch zurückpropagierender Strahlung. In diesem Fall befindet sich diese Blende am Eingang des Interferometers. Nach der Rückkehr von Objekt- und Referenzstrahlung zum Interferometereingang, der dann auch den Interferometerausgang darstellt, kommt es zur konfokalen Diskriminierung von Objektlicht und zur Interferenz auf dem Detektor.

Von Vorteil ist hierbei, wenn die Mittel zur chromatischen Tiefenaufspaltung von Foki für die mittlere Wellenlänge des Spektrums der verwendeten elektromagnetischen Strahlung die Brechkraft null aufweisen, also brechkraftkompensiert sind, beispielsweise als diffraktiv-refraktives System mit entgegen gesetzter Brechkraft der Komponenten. Dann kann bei entsprechender Kompensation der optischen Weglängen im Referenzstrahlengang das Interferometer zumindest näherungsweise am optischen Gangunterschied null oder in einem vergleichsweise engen Bereich um den optischen Gangunterschied null betrieben werden und die Dispersion ist weitgehend zu vernachlässigen. Von Vorteil kann dieser Ansatz in einem Linnik-Typ-Interferometer zur Anwendung kommen, in welchem nach Unendlich korrigierte Mikroskopobjektives eingesetzt sind. In diesem Linnik-Typ-Interferometer ist mindestens ein Drei-Spiegel-Referenz-Endreflektor im Referenzstrahlengang angeordnet.

25. Vorzugsweise ist bei der Anordnung zur robusten Interferometrie das Interferometer im Grundtyp als Michelson-, Linnik-, Mirau- oder Schulz-Minor-Interferometer ausgebildet und mindestens ein Drei-Spiegel-Referenz-Endreflektor im Referenzstrahlengang angeordnet. Die numerische Apertur ist dabei nicht extrem hoch zu wählen, da sonst die Reflexion mittels eines Drei-Planspiegel-Referenz-Endreflektors nicht mehr möglich ist. Der Schwerpunkt des Einsatzes der erfindungsgemäßen Anordnung liegt deshalb recht eindeutig im Bereich einer mittleren oder geringeren numerischen Apertur für Objektbeleuchtung und Detektion.

Beispielsweise kann ein Objektiv mit einer numerischen Apertur von 0,2 noch recht gut in Verbindung mit einem Drei-Planspiegel-Referenz-Endreflektor im Referenzstrahlengang eingesetzt werden.

Bei einer Michelson-Interferometer-Anordnung kann hier weit von der Rechtwinkligkeit zwischen Referenz- und Objektstrahlengang abgewichen werden. So stellt ein Winkel zwischen den Hauptstrahlenbündeln von Referenz- und Objektstrahlung von 160 Altgrad vorzugsweise eine gute Option dar, um einen schlanken Sensor mit guter Zugänglichkeit zum Messobjekt zu realisieren.

Bei einem Mirau- oder Schulz-Minor-Interferometer kann die Mittenabschattung, welche durch den Referenzreflektor auftritt, durch den Einsatz einer Doppelspalt- oder Doppel-Pinhole-Blende mit geeignetem Spalt- oder Pinhole-Abstand, die jeweils sehr fein ausgebildet sind, also eine Point-Diffraction-Anordnung darstellen, unschädlich gemacht werden. Dadurch können jedoch erhebliche Lichtverluste auftreten. Dies ist in der Regel technisch jedoch mit Lichtquellen hoher räumlicher Kohärenz und Lichtleistung machbar.

26. Vorzugsweise sind bei der Anordnung zur robusten Interferometrie Mittel zur vorbestimmten Variation der numerischen Apertur der Beleuchtung angeordnet. Damit kann der wellenoptische Schärfentiefebereich optimal an eine Messaufgabe angepasst werden.

Für die gelegentlich auftretende Messaufgabe, dass eine Objektoberfläche geneigt zur optischen Achse des Objektstrahlenganges angemessen werden soll, beispielsweise eine 45°-Fasenfläche an einem feingefrästen Werkstück, kann im Objektstrahlengang des Interferometers ein zusätzlicher Planspiegel der Objektoberfläche zugeordnet sein, wobei dieser Planspiegel mit der Objektoberfläche dann zumindest näherungsweise einen rechten Winkel einschließen sollte, also zumindest näherungsweise eine 90°-Dachkante bildet. Im Referenzstrahlengang ist hierbei ein 90°-Dachkantreflektor angeordnet, wobei dessen Spiegelflächen stets nur eine einmalige Reflexion erfahren sollen. Diese Anordnung in Verbindung mit einem Michelson-Interferometer liefert Lateral-Shear, vermeidet die Wellenfront-Inversion, weist aber in der Regel eindeutige Nachteile wegen des Bauvolumens im Objektstrahlengang, also bezüglich der Zugänglichkeit zum Objekt, beispielsweise in Innenräumen, auf und wird deshalb hier nicht weiter verfolgt. Diese Michelson-Interferometer-Anordnung, mit der Möglichkeit Lateral-Shear mittels zwei Doppeldachkant-Reflektoren zu erzeugen, ist klassisch und wird in der Regel zur Wellenfrontanalyse eingesetzt, s. a. [4] und [5].

Den in [6] veröffentlichten Ansatz mit zwei Tripelreflektoren in einem Michelson-Interferometer, hier als Anordnung für einen interferometrischen Sensor zur Abstandsmessung u. a. zu nutzen, bei dem ein Planspiegel des Tripelreflektors in Form einer Würfelecke, auch als Corner Cube bekannt, durch die Objektoberfläche ersetzt ist, führt dazu, dem Objekt im Objektstrahlengang noch einen Dachkantreflektor beiordnen zu müssen, wenn die unerwünschte Wellenfrontinversion zwischen Objekt- und Referenzstrahlung vermieden werden soll. Das ist eine mögliche Sensorlösung, vergrößert aber das ganz Sensorvolumen erheblich, was für viele Applikationen sehr nachteilig ist oder schließt den Einsatz einer derartigen Lösung völlig aus. Auch ist hierbei keine Invarianz der Lateral-Shear - und damit der Neigung der interferierenden Wellenfronten beispielsweise gegenüber lateralem Wegdriften des Tripelreferenz-Reflektors oder auch des Objekts selbst gegeben. Damit kann sich die Ortsfrequenz im räumlichen Interferogramm ändern, was nachteilig sein kann. Vorzugsweise können zur Schrägbeleuchtung einer Objektoberfläche auch zwei weitere Planspiegel, je einer rechts und je einer links, flankierend beigeordnet sein und im Referenzstrahlengang befindet sich der bereits beschriebene Drei-Spiegel-Referenz-Endreflektor mit stumpf- oder spitzwinkligem Dreieck ABC der Spurgeraden. In diesem Fall ist die Differenz der Anzahl der Planspiegelflächen von Referenz- und Objektstrahlengang, die einmalig vom Licht passiert werden, null, so dass keine Wellenfront-Inversion auftritt. Der Betrag delta_q der Lateral-Shear kann hierbei durch laterales Schieben des End-Reflektors mit drei Planspiegeln frei eingestellt werden. Diese Anordnung gestattet, nahezu ebene Objektoberflächen sehr schräg zu beleuchten, beispielsweise mit einem Einfallswinkel von 85°. So kann Schräglicht-Interferometrie zur Geradheits-, Form- und Welligkeitserfassung an vergleichsweise rauen technischen Oberflächen, wie feinbearbeitete ebene Metalloberflächen, betrieben werden. Durch den Schrägeinfall ergibt sich bekannterweise eine Verringerung der Tiefen-Messempfindlichkeit des Interferometers um den Faktor des Kosinus dieses Einfallswinkels auf die Objektoberfläche, auch als Lambda-Dehnung bekannt.

Wird im Objektstrahlengarig der erfinderischen Anordnung ein 90°-Umlenkspiegel beispielsweise zur Messung an der Innenwand einer kleinen Bohrung benutzt, der sowohl im Hin- als auch im Rücklauf vom Licht passiert wird, ist dieser 90°-Umlenkspiegel wegen der zweifachen Reflexion an demselben ohne jeden Einfluss auf die Orientierung der Objektwellenfronten bei der Detektion und kann somit hinsichtlich der Problematik der Wellenfrontinversion unbeachtet bleiben.

**Merkmale zu einem Aspekt des Verfahrens**

27. Beim Verfahren zur robusten Interferometrie zur Erfassung von Abstand, Tiefe, Profil, Form, Welligkeit und/oder Rauheit oder der optischen Weglänge in oder an technischen oder biologischen Objekten, auch in Schichtenform, oder auch zur optischen Kohärenz-Tomografie (OCT), mit den Mitteln der Anordnung im Oberbegriff werden die Verfahrensschritte:

- Erzeugen mindestens eines Objektstrahlenbündels elektromagnetischer Strahlung zur Beleuchtung des Objekts, dessen optisch auszumessende Oberflächen- oder Volumenelemente sich in einer Messebene oder einem Messvolumen im Objektstrahlengang befinden,

- Erzeugen mindestens eines Referenzstrahlenbündels mittels Strahlteilung in einem Interferometer,

- Erzeugen von räumlichen Kurzkohärenz-Interferenzen von Objekt- und Referenzstrahlen,

- Detektion von räumlichen Kurzkohärenz-Interferenzen auf einem gerasterten Detektor elektromagnetischer Strahlung durchgeführt.

Erfindungsgemäß werden

- im Referenzstrahlengang drei direkt aufeinanderfolgende Reflexionen an je drei Planspiegeln durchgeführt,

- dabei liegen die Flächen dieser drei Planspiegel jeweils zumindest näherungsweise senkrecht zu einer gemeinsamen Bezugsebene BE und bilden somit einen Drei-Planspiegel-Referenz-Endreflektor

- und durch die drei Reflexionen wird eine Lateral-Shear mit dem Betrag delta_q zwischen Objektstrahlenbündel und Referenzstrahlenbündel im Interferometer eingeführt, wodurch auf dem gerasterten Detektor mindestens ein räumliches Kurzkohärenz-Interferogramm erzeugt wird,

- und mindestens ein räumliches Interferogramm wird zur Gewinnung von Informationen über Abstand, Tiefe, Profil, Form, Welligkeit und/oder Rauheit oder der optischen Weglänge eines Objekts, auch in der optischen Kohärenz-Tomografie, ausgewertet.

Die Invarianz der Lateral-Shear mit dem Betrag delta_q zwischen dem Objektstrahlenbündel und Referenzstrahlenbündel gegenüber lateralen Verschiebungen des Drei-Planspiegel-Referenz-Endreflektors stellt einen großen Vorteil dar, da so die Ortsfrequenz für die Schwerpunktwellenlänge des räumlichen Interferogramms bei einem unveränderlichen Spektrum der Lichtquelle, z. B. auch bei thermisch verursachtem lateralem Wegdriften des Reflektors als monolithische Baugruppe konstant ist. Dagegen führt ein Verschieben des Reflektors in der Tiefe wegen der sich ändernden optischen Weglänge zum lateralen Verschieben des räumlichen Interferogramms auf dem Detektor.

**Weitere bevorzugte Merkmale des Verfahrens**

28. Beim Verfahren zur robusten Interferometrie erfolgt vorzugsweise eine punktförmige oder eine lateral strukturierte Beleuchtung des Objekts, um beispielsweise das Streulicht zu minimieren.

29. Beim Verfahren zur robusten Interferometrie werden vorzugsweise die Reflexionen des Hauptstrahls des Referenzstrahlenbündels so durchgeführt, dass die Auftreffpunkte des Hauptstrahls des Referenzbündels auf die drei Planspiegel zumindest näherungsweise in einer gemeinsamen Ebene liegen, die parallel zu der gemeinsamen Bezugsebene BE ausgerichtet ist.

30. Beim Verfahren zur robusten Interferometrie wird vorzugsweise nach dem Objektiv (13), welches das Objektbündel kollimiert, in dessen nachgeordneter Brennebene F13'

-    aus der vorbestimmten Lateral-Shear delta_q von Referenz- und Objektbündel in der dem Objektiv (13) vorgeordneten Brennebene F13, welche die Messebene ME der Anordnung darstellt, -

eine Verkippung um den Winkel delta_beta der Hauptstrahlen von Referenz- und Objektbündel erzeugt. Außerdem wird die Detektion eines räumlich ausgedehnten Zweistrahl-Interferogramms

-    entweder in dieser Brennebene (F13')

-    oder in einer zu dieser Brennebene (F13') in Lichtrichtung nachgeordneten, optisch konjugierten Ebene durchgeführt, wobei diese nachgeordnete, optisch konjugierte Ebene mindestens durch ein Strahlenbüschel in einer Ebene dargestellt ist.

Der Vorteil ist hierbei, dass die Verkippung der Hauptstrahlen von Referenz- und Objektbündel zueinander um den Winkel delta_beta gegenüber einer Änderung der Lage, wie Translationen in allen drei Raumachsen, eines in sich starren, also monolithischen Drei-Planspiegel-Referenz-Endreflektors im Referenzstrahlengang invariant ist. Dies gilt auch für das Objekt sowie den Strahlteiler, beispielsweise in einem Michelson-Typ-Interferometer. Kleinere Rotationen des in sich starren Drei-Planspiegel-Referenz-Endreflektors, des Objekts oder des Strahlteilers in der Interferometeranordnung, der sowohl für Strahlteilung als auch Vereinigung benutzt wird, führen ebenfalls zu keinem oder nur zu einem Einfluss zweiter Ordnung auf den Betrag des Winkels delta_beta, wodurch bei einem zeitlich konstanten Lichtquellenspektrum und einer grauen, schwarzen oder weißen Objektoberfläche die Ortsfrequenz für die Schwerpunktwellenlänge im räumlichen Interferogramm als nahezu unveränderlich anzusehen ist. Auch eine farbige Objektoberfläche hat in der Regel nur einen relativ kleinen Einfluss auf die Ortsfrequenz für die Schwerpunktwellenlänge. Ausnahmen können hier jedoch Schichtsysteme, wie spektrale Bandpässe, darstellen.

31. Beim Verfahren zur robusten Interferometrie wird vorzugsweise eine Strahlformung von Referenzstrahlenbündel und Objektstrahlenbündel mittels abbildender Zylinder-Optik mit Fokussierung von mindestens einem Strahlenbüschel in die Brennebene (F13') des objektabbildenden Objektivs durchgeführt.

32. Beim Verfahren zur robusten Interferometrie wird vorzugsweise eine Strahlformung von Referenzstrahlenbündel und Objektstrahlenbündel mittels abbildender Zylinder-Optik mit Fokussierung von mindestens einem Strahlenbüschel in eine zur Brennebene (F13') des objektabbildenden Objektivs in Lichtrichtung nachgeordneten, optisch konjugierten Ebene durchgeführt und diese konjugierte Ebene ist mindestens durch ein Strahlenbüschel gegeben.

33. Beim Verfahren zur robusten Interferometrie wird vorzugsweise ein Ausschnitt der Brennebene (F13') durch eine in Lichtrichtung nachfolgende, anamorphotische Abbildungsstufe zumindest näherungsweise durch ein erstes Strahlenbüschel, dessen Fläche senkrecht zur Schnittlinie von Referenz- und Objektwellenfront in der Brennebene (F13') angeordnet ist, auf den Detektor abgebildet. Außerdem wird jeder optisch erfasste Objektpunkt vorzugsweise durch ein zweites Strahlenbüschel, das senkrecht zum ersten ausgerichtet ist, auf den Detektor fokussiert abgebildet, so dass für jeden optisch erfassten Objektpunkt auf dem Detektor mindestens ein räumlich ausgedehntes, linienförmiges Zweistrahl-Interferogramm zumindest näherungsweise in Linienform erzeugt wird und die linienförmigen Zweistrahl-Interferogramme der optisch erfassten Objektpunkte vorzugsweise auf dem Detektor in Stapelform angeordnet werden, wobei jedem linienförmigen Zweistrahl-Interferogramm ein eigener Bereich auf dem Detektor reserviert ist.

Jedes Zweistrahl-Interferogramm weist dabei eine aus der Geometrie der Interferometeranordnung und dem Lichtquellenspektrum, einschließlich spektraler Reflexionseigenschaften, resultierende mittlere Modulationsfrequenz auf, die also vorbestimmt ist.

34. Beim Verfahren zur robusten Interferometrie wird vorzugsweise eine lateral feinstrukturierte Beleuchtung vom Objekt und dem Drei-Planspiegel-Referenz-Endreflektor in Form eines zeitseriell schaltbaren Beleuchtungsmusters durchgeführt und nach jedem Schaltvorgang wird mindestens ein räumliches Interferogramm mit dem gerasterten Detektor aufgenommen.

35. Beim Verfahren zur robusten Interferometrie werden vorzugsweise die Messebene ME und die zu den Messpunkten der Messebene ME optisch korrespondierenden miniaturisierten Drei-Spiegel-Referenz-Endreflektoren im Referenzstrahlengang zeitlich lateral abgescannt, indem die Quelle kurzkohärenter elektromagnetischer Strahlung zur lateral feinstrukturierten Beleuchtung, welche also schaltbar ausgebildet ist, unterschiedliche laterale Bereiche des Objekts nach und nach beleuchtet und bei jedem Beleuchtungsmuster räumliche Interferogrammen mittels gerastertem Detektor aufgenommen werden.

36. Beim Verfahren zur robusten Interferometrie erfolgt der laterale Scan des Beleuchtungsmusters in der Messebene ME vorzugsweise schrittweise und entsprechend der lateralen Abstände der einzelnen Drei-Spiegel-Referenz-Endreflektoren im Referenzstrahlengang.

37. Beim Verfahren zur robusten Interferometrie wird der Drei-Planspiegel-Referenz-Endreflektor vorzugsweise synchronisiert mit dem Beleuchtungsmuster lateral verschoben. So kann die Messebene ME nach und nach, also über der Zeit, optisch lateral abgetastet werden.

38. Beim Verfahren zur robusten Interferometrie sind die Reflexionsgrade benachbarter Mikro-Referenzreflektoren vorzugsweise stark unterschiedlich ausgeführt. Durch Beleuchten eines anderen Drei-Spiegel-Referenz-Endreflektors, der einen stark anderen Reflexionsgrad aufweist, und lateralem Nachpositionieren des Sensors zum Objekt kann eine bessere Anpassung der Intensität des Referenzbündels an die Intensität des Objektbündels erreicht werden, insbesondere wenn ein Objektbereich einen sehr geringen Reflexionsgrad aufweist.

39. Beim Verfahren zur robusten Interferometrie ist vorzugsweise mindestens ein Drei-Planspiegel-Referenz-Endreflektor in einem Metall- oder Kunststoffkörper durch eine Single-Point-Diamantbearbeitungstechnik hergestellt. Dies kann hochgenau und vergleichsweise kostengünstig erfolgen.

40. Beim Verfahren zur robusten Interferometrie ist vorzugsweise mindestens ein Drei-Planspiegel-Referenz-Endreflektor durch Abformtechnik hergestellt.

41. Beim Verfahren zur robusten Interferometrie ist vorzugsweise mindestens ein Drei-Planspiegel-Referenz-Endreflektor durch Ätztechnik hergestellt.

42. Beim Verfahren zur robusten Interferometrie ist vorzugsweise mindestens ein Drei-Planspiegel-Referenz-Endreflektor durch Abform-, Heiß- oder Kaltpräge- oder auch Drucktechnik hergestellt.

43. Beim Verfahren zur robusten Interferometrie wird vorzugsweise die Phase mindestens eines räumlichen Interferogramms zur Gewinnung von Informationen über Abstand, Tiefe, Profil, Form, Welligkeit und/oder Rauheit oder optische Weglänge eines Objekts ausgewertet.

44. Beim Verfahren zur robusten Interferometrie wird vorzugsweise der Schwerpunkt der Einhüllenden mindestens eines räumlichen Interferogramms zur Gewinnung von Informationen über Abstand, Tiefe, Profil, Form, Welligkeit und/oder Rauheit oder optische Weglänge eines Objekts ausgewertet.

45. Beim Verfahren zur robusten Interferometrie wird vorzugsweise das Maximum der Einhüllenden mindestens eines räumlichen Interferogramms zur Gewinnung von Informationen über Abstand, Tiefe, Profil, Form, Welligkeit und/oder Rauheit oder optische Weglänge eines Objekts ausgewertet.

46. Beim Verfahren zur robusten Interferometrie wird vorzugsweise der Gleichanteil mindestens eines räumlichen Interferogramms zur Gewinnung von Informationen über Abstand, Tiefe, Profil, Form, Welligkeit und/oder Rauheit oder optische Weglänge eines Objekts ausgewertet. Aus räumlichen Verteilung des Gleichanteils des räumlichen Interferogramms können Informationen über das Objekt gewonnen werden.

47. Beim Verfahren zur robusten Interferometrie wird vorzugsweise im Objektstrahlengang eine chromatische Tiefenaufspaltung von Foki mit spektral brechkraftvariablen Mitteln im Objektstrahlengang vorbestimmt durchgeführt. Damit kann der Tiefenmessbereich vergrößert werden.

48. Beim Verfahren zur robusten Interferometrie wird vorzugsweise Strahlung vom Objekt nach dem zweiten Passieren der spektral brechkraftvariablen Mittel konfokal diskriminiert. Anschließend wird diese Strahlung vom Objekt mit Strahlung aus dem Referenzstrahlengang zur Bildung von mindestens einem räumlichen Interferogramm überlagert und die Intensitätsverteilung des räumlichen Interferogramms wird einer Fourier-Transformation nach dem Verfahren der Fourier-Transformations-Spektroskopie unterzogen, um das Spektrum auch von konfokal diskriminierter Strahlung vom Objekt nach chromatischer Tiefenaufspaltung zu gewinnen, um aus diesem Spektrum den Abstand, die Tiefe, das Profil, die Form, Welligkeit und/oder die Rauheit oder die optische Weglänge eines Objekts zu ermitteln. Hierzu kann eine Schwerpunktauswertung erfolgen. Hierbei führen im Wesentlichen nur die Wellenlängenanteile zu merklichen Anteilen im Spektrum, die auf dem Objekt scharf fokussiert waren, also dort Foki ausgebildet haben, und demzufolge eine konfokale Blende passieren konnten. Der spektral breitbandige Intensitätsanteil aus dem Referenzstrahlengang schlägt sich nicht in einer Modulation im Interferogramm nieder und somit auch nicht im durch Fourier-Transformation errechneten Spektrum, da die breitbandigen Intensitätsanteile aus dem Objektstrahlengang aufgrund der Tiefenaufspaltung von Foki mit nachfolgender konfokaler Diskriminierung bereits verloren gegangen sind und somit nicht zur Interferenzbildung beitragen können. Spektral vergleichsweise breitbandig ist hier nur der Anteil des Lichts aus dem Referenzstrahlengang, der aber wegen der fehlenden spektral breitbandigen Objektlichtanteile nicht zu einer Modulation im Interferogramm führen kann. Somit ergibt sich nach der Fourier-Transformation des räumlichen Interferogramms ein vergleichsweise schmalbandiges Spektrum von an der konfokalen Blende hindurchgelassener Strahlung aus dem Objektstrahlengang. Die Modulation ist in einem derartigen Interferogramm bei starker chromatischer Tiefenaufspaltung nicht sehr groß, aber aufgrund der vergrößerten Kohärenzlänge durch die konfokale Separierung spektral eingegrenzter Lichtanteile räumlich vergleichsweise stärker ausgedehnt. Durch die Fourier-Transformation des räumlichen Interferogramms kann die Schwerpunktwellenlänge der an der konfokalen Blende jeweils - in Abhängigkeit vom Objektabstand - hindurchgelassenen Strahlung vergleichsweise genau numerisch ermittelt werden. So kann durch eine Kalibrierung der Abstand, die Tiefe, das Profil, die Form, Welligkeit und/oder die Rauheit oder die optische Weglänge eines Objekts ermittelt werden. Dieser Ansatz erübrigt die Verwendung eines dispersiven Spektrometers zur Bestimmung des Spektrums beim chromatisch-konfokalen Verfahren. Dieser Ansatz mit Fourier-Transformation des räumlichen Interferogramms zur Gewinnung eines chromatisch-konfokalen Signals kann hier zusätzlich eingesetzt werden, um multivariat oder multiskalig messen zu können.

49. Vorzugsweise wird Objektstrahlung aus der nachgeordneten Brennebene F13', welche die Fourier-Ebene des objektabbildenden Strahlenganges darstellt und in der Regel auch die Pupillenebene darstellen kann, durch die in Lichtrichtung dieser Brennebene F13' nachfolgende Strahlteilung aus dem Hauptstrahlengang ausgekoppelt. Diese Objektstrahlung wird zeitlich synchron zur Aufnahme von räumlichen Interferogrammen auf demselben oder einem zeitlich mit dem gerasterten Detektor synchronisierten Detektor mittels Abbildung zur Detektion gebracht. Damit können sowohl die von einem optisch angetasteten Objektpunkt sich ergebende Pupillenausleuchtung als auch das räumliche Interferogramm genau dieses Objektpunktes zeitgleich auf ein und demselben Kamera-Chip oder zwei zueinander elektronisch synchronisierten Kamera-Chips zur Verfügung stehen.

Dabei wird die am Strahlteiler aus dem Hauptstrahlengang in diesen Nebenstrahlengang zur Pupillenbeobachtung hierbei gegebenenfalls mitausgekoppelte Referenzstrahlung beispielsweise in der Nähe eines Fokuspunktes derselben blockiert, also dort, wo Objekt- und Referenzstrahlung deutlich räumlich separiert sind. So ist es möglich, dass nur die Objektstrahlung zur Detektion kommen kann. Ein sowohl Objekt- als auch Referenzstrahlengang überdeckender Strahlteiler zur Auskopplung, der beispielsweise einen hochgenau gefertigten Würfel aus spannungsarmen Qualitätsglas darstellt, führt in gleicher oder nahezu gleicher Weise Dispersion und optische Weglängenänderung sowohl in den Objekt- und als auch den Referenzstrahlengang ein und ist damit für Weißlicht-Interferenzen praktisch nicht vorhanden, da im Idealfall sich der optische Gangunterschied als die Differenz der Weglängen von Objekt- und Referenzstrahlung durch das Einfügen dieses Auskoppel-Strahlteilerwürfel hier praktisch nicht ändert.

Damit ist in Echtzeit der Interferogramm-Aufnahme auch die Form der Ausleuchtung der Pupillenebene, also die Intensitätsverteilung in der Pupillenfläche detektierbar, die meist mit der Fourier-Ebene des objektabbildenden Objektivs zusammenfällt. Die Ausleuchtung dieser Pupillenebene wird weitgehend durch Objekteigenschaften wie beispielsweise Oberflächengradient und Mikrostruktur des angetasteten Objekts bestimmt und beinhaltet damit auch ganz wesentliche Informationen über die Charakteristik des angemessenen Objektpunkts. So können insbesondere wenig kooperative Messpunkte des Objekts oder gemessene Punkte mit besonderen Merkmalen wie Objektkanten eindeutig erkannt, entsprechend klassifiziert und der weiteren Bearbeitung oder der Aussonderung zugeführt werden.

Die Informationen aus der Ausleuchtung der Pupillenebene und räumlichen Interferogramm eines oder mehrerer Objektpunkte in einer konkreten Messsituation können zur umfassenderen Beschreibung des Objekts mittels eines Modells zusammengeführt werden.

Die Referenzstrahlung des Interferometers wird hierbei also eindeutig ausgeblendet, was durch diese Anordnung mit Lateral-Shear vergleichsweise einfach möglich ist. Diese relativ einfache Gewinnung der Pupillenausleuchtung stellt einen ganz besonderen Vorteil dieser erfindungsgemäßen Anordnung dar und kann bei bekannten scannenden Weißlicht-Interferometem eher nicht oder nur mit ganz erheblichem technischen Aufwand, beispielsweise zur Kompensation der optischen Wege und der Dispersion in einem Weißlicht-Interferometer, in Echtzeit realisiert werden.

Die unbedingt gleichzeitige Gewinnung der Pupillenausleuchtung und des räumlichen Interferogramms ist bei Messungen rauer oder dreidimensional feinstrukturierter Oberflächen in einem Umfeld auch mit vergleichsweise kleinen Vibrationsamplituden zwingend notwendig, wobei hier eine gepulste oder geblitzte Lichtquelle eingesetzt werden kann. Bei Vibrationen können sich die Pupillenausleuchtung und das räumliche Interferogramm sehr schnell und signifikant, also auch in einer Zeitdauer von weniger als zehn Millisekunden, erheblich verändern, insbesondere wenn auch Speckle in den optischen Signalen auftreten.

**Merkmale zu einem weiteren Aspekt der Anordnung**

50. Es handelt sich um eine besondere Ausgestaltung der ober beschriebenen Anordnung zur robusten Interferometrie zur Erfassung von Abstand, Tiefe, Profil, Form, Welligkeit und Ebenheitsabweichung an technischen, spiegelnden Objekten, insbesondere polierte oder ultrapräzisions-bearbeitete Glas- und Meralloberflächen. Im Folgenden wird die Anordnung beschrieben. Dabei werden die folgenden Mittel eingesetzt:

- eine monochromatische oder quasi-monochromatische Quelle elektromagnetischer Strahlung zur Beleuchtung des Objekts,

- ein Interferometer, insbesondere auch in Form eines Interferenzmikroskops, mit einem Objekt- und mit mindestens einem Referenzstrahlengang, in dem mindestens ein End-Reflektor angeordnet ist, und einer Messebene oder einem Messvolumen im Objektstrahlengang, in der bzw. dem sich zumindest näherungsweise die optisch anzumessenden Oberflächen- oder Volumenelemente des Objekts befinden.

- sowie mindestens einen gerasterten Detektor zur Detektion elektromagnetischer Strahlung in Form mindestens eines räumlichen Interferogramms.

Die Quelle elektromagnetischer Strahlung wird im Folgenden auch als Lichtquelle bezeichnet, wobei hier Licht im Sinne elektromagnetischer Strahlung von Terahertz- über IR-, VIS- bis UV-Strahlung verstanden wird.

Die Lichtquelle stellt also eine monochromatische oder quasi-monochromatische Lichtquelle dar, beispielsweise eine Laserlichtquelle.

Die Lichtquelle kann ein lateral feinstrukturiertes Beleuchtungsmuster auf dem Objekt erzeugen. Dabei kann die Lichtquelle einen Punktstrahler, einen lateralen Linienstrahler oder eine Gruppe von Punktstrahlern in Linien- oder Matrixform auch mit einzeln schaltbaren punktförmigen oder linienförmigen Leuchtelementen darstellen.

Erfindungsgemäß ist im Referenzstrahlengang des Interferometers mindestens ein End-Reflektor mit drei Planspiegeln als Referenzreflektor, also mindestens ein Drei-Planspiegel-Referenz-Endreflektor, angeordnet und die Flächen dieser drei Planspiegel liegen jeweils zumindest näherungsweise senkrecht zu einer gemeinsamen Bezugsebene BE.

Dabei bilden die drei Spurgeraden der Ebenen, welche durch die Flächen der drei Planspiegel dargestellt werden, in der Bezugsebene BE ein Dreieck ABC, damit bei diesem Interferometer zwischen Referenz- und Objektbündel eine Lateral-Shear besteht, die eine Strecke mit dem Betrag delta_q darstellt. Die Strecken AB, BC und CA dieses Dreiecks ABC müssen dazu eine gewisse Länge aufweisen. Beispielsweise kann die Länge dieser Strecken typischerweise jeweils in der Größenordnung von einigen Zehntel Millimetern bis zu einigen Millimetern mm liegen. Die Winkel dieses Dreiecks sind dabei weder extrem spitz, noch stellt dieses Dreieck ein rechtwinkliges Dreieck dar. Die sich ergebende Lateral-Shear kann einen Betrag delta_q in der Größenordnung typischerweise von 0,1 mm bis zu einigen Millimetern aufweisen. Bei einer Anordnung mit einem lateral hochauflösenden Mikroskop und einer Schwerpunktwellenlänge im UV-Bereich kann der Betrag delta_q jedoch auch in der Größenordnung von wenigen Hundertstel Millimetern sein. Dies basiert auf entsprechend kleinen Längen der Strecken AB, BC und CA und den entsprechenden drei Winkeln des Dreiecks ABC. Dieser Ansatz ist hinsichtlich des Betrages delta_q weit skalierbar.

Die Lateral-Shear vom Betrag delta_q zwischen Referenz- und Objektbündel besteht in der virtuellen Spiegelebene VSE des Drei-Planspiegel-Referenz-Endreflektors im Referenzstrahlengang. Die virtuelle Spiegelebene VSE ist mit der Messebene ME des Objektstrahlenganges durch Strahlteilung zumindest näherungsweise optisch konjugiert. Dabei ist der Drei-Planspiegel-Referenz-Endreflektor winkelmäßig so ausgerichtet, dass elektromagnetische Strahlung aus dem Referenzstrahlengang auf den gerasterten Detektor gelangt.

Eine laterale Verschiebung eines Drei-Planspiegel-Referenz-Endreflektors führt nicht zu einer Veränderung des Betrages der Lateral-Shear delta_q. Diese Invarianz wird als ein großer technischer Vorteil angesehen, da sich somit eine hohe Robustheit der Signalentstehung gegenüber derartigen Dejustierungen ergibt.

Der Drei-Planspiegel-Referenz-Endreflektor ist ein im erfindungsgemäßen Interferometer Lateral-Shear erzeugender Reflektor. Dabei weist der Drei-Spiegel-Referenz-Endreflektor, wie bereits dargestellt, eine virtuelle Spiegelebene VSE auf. Dieser virtuellen Spiegelebene VSE kann das Auftreten der Lateral-Shear räumlich zugeordnet werden. Beispielsweise führt die Interferenz von einer Objektkugelwelle und einer Referenzkugelwelle, die durch das Interferometer erzeugt werden und deren Kugelzentren durch eine Lateral-Shear vom Betrag delta_q separiert sind, zumindest in einem begrenzten Teilbereich der Detektorebene zu einem räumlichen Interferogramm mit einer zumindest näherungsweise konstanten Ortsfrequenz für die Schwerpunktwellenlänge, da die interferierenden Wellenflächen auf dem Detektor zueinander geneigt sind. In einem begrenzten Ausschnitt der Kugelwellenflächen sind diese in der Regel hinreichend gut durch Planwellen zu approximieren. Diese auf einem Detektor zu registrierende Interferenzerscheinung von zwei räumlich kohärenten Kugelwellenflächen ist dem Fachmann in der Optik als das klassische Youngsche Doppelspaltexperiment hinreichend bekannt, wobei der Spaltabstand d im Doppelspaltexperiment hier der Lateral-Shear mit dem Betrag delta_q entspricht.

Die Lateral-Shear mit dem Betrag delta_q dient hier also als Grundlage für die Erzeugung von einem oder mehreren räumlichen Interferogrammen, welche in ihrem Streifenabstand nicht oder nur ganz unwesentlich durch die Neigung der Objektoberfläche zu beeinflussen sind, wenn das punktförmige Zentrum der Objekt-Kugelwelle auf einem Oberflächenelement liegt, also das Objekt auch durch fokussiertes Licht zumindest näherungsweise punktförmig beleuchtet wird. Diese Invarianz des Streifenabstandes ist für die Auswertung räumlicher Interferogrammen von sehr großem Vorteil, da hier beispielsweise aufgrund der Vorabkenntnis des Streifenabstandes im Signal robuste und vergleichsweise schnelle Lock-in Ansätze zur Bestimmung der Phasenlage des räumlichen Interferogramms zur Anwendung kommen können, die zumindest näherungsweise auf die Ortsfrequenz des räumlichen Interferogramms eingestellt sind, welche vorab zumindest näherungsweise bekannt ist. Zur Bestimmung der Phasenlage des räumlichen Interferogramms können aber auch vergleichsweise einfache Phasenauswerte-Ansätze kommen wie der 5-Phasen-Auswerte-Algorithmus nach J. Schwider. Es können aber auch Phasen-Auswerte-Algorithmen zur Anwendung kommen, die in der Größenordnung 100 Intensitätswerte zu einem Phasenwert modulo 2 PI verrechnen.

Auf dem gerasterten Detektor wird vorzugsweise für jeden Objektpunkt in einem lateral ausgedehnten Bereich ein räumliches Interferogramm detektiert, so dass durch Aufnahme eines einzigen Bildes mit vorzugsweise vielen nebeneinander liegenden räumlichen Interferogrammen, die durch Strahlformung gebildet werden, und deren Auswertung ein vollständiges Linienprofil gewonnen werden kann.

Diese Anordnung kann mit besonderem Vorteil eingesetzt werden, wenn polierte ebene oder schwach gekrümmte Objekte in einem schwingenden Umfeld in sehr kurzer Zeit gemessen werden sollen, wo der interferometrische Ansatz mit zeitlichem Phasenschieben nicht eingesetzt werden kann und nur wenige Messpunkte, beispielsweise entlang einer Linie, zur Prüfung genügen. Besonders einfach stellt sich hier die Messung dar, wenn über das Messobjekt a priori-Kenntnisse bestehen, eine stetige Oberfläche desselben vorausgesetzt werden kann und die typischen, zu erwarteten Abweichungen von der Sollgeometrie in der Größenordnung der verwendeten Lichtwellenlänge oder erheblich darunter liegen oder die Abweichungen von der Sollgeometrie sich lateral über dem Messobjekt nur sehr wenig ändern.

**Merkmale zu einem weiteren Aspekt der Anordnung**

51. Es handelt sich um eine besondere Ausgestaltung der oben beschriebenen Anordnung zur robusten Interferometrie zur Erfassung von Abstand, Tiefe, Profil, Form, Welligkeit und Ebenheitsabweichung an technischen, spiegelnden Objekten, insbesondere polierte oder ultrapräzisions-bearbeitete Glas- und Metalloberflächen. Im Folgenden wird die Anordnung beschrieben. Dabei werden die folgenden Mittel eingesetzt:

- eine monochromatische oder quasi-monochromatische Quelle elektromagnetischer Strahlung und auch eine Quelle kurzkohärenter elektromagnetischer Strahlung zur Beleuchtung des Objekts,

- ein Interferometer, insbesondere auch in Form eines Interferenzmikroskops, mit einem Objekt- und mit mindestens einem Referenzstrahlengang, in dem mindestens ein End-Reflektor angeordnet ist, und einer Messebene im Objektstrahlengang, in der sich zumindest näherungsweise die optisch anzumessenden Oberflächen- oder Volumenelemente des Objekts befinden.

- sowie mindestens einen gerasterten Detektor zur Detektion elektromagnetischer Strahlung in Form mindestens eines räumlichen Interferogramms.

Die Quelle elektromagnetischer Strahlung wird im Folgenden auch als Lichtquelle bezeichnet, wobei hier Licht im Sinne elektromagnetischer Strahlung von Terahertz- über IR-, VIS- bis UV-Strahlung verstanden wird.

Die Lichtquelle stellt eine monochromatische oder auch quasi-monochromatische Lichtquelle dar, beispielsweise eine Laserlichtquelle. Zusätzlich ist auch eine Quelle kurzkohärenter elektromagnetischer Strahlung zur Beleuchtung des Objekts angeordnet. Diese Wellenlänge ist im Gesamtspektrum dominant. Bei dieser Wellenlänge weisen die Aberrationen der optischen Anordnung, insbesondere in der Pupille des optischen Systems zur Objektabbildung, ein Minimum auf.

Die Lichtquelle kann ein lateral feinstrukturiertes Beleuchtungsmuster auf dem Objekt erzeugen. Dabei kann die Lichtquelle einen Punktstrahler, einen lateralen Linienstrahler oder eine Gruppe von Punktstrahlern in Linien- oder Matrixform auch mit einzeln schaltbaren punktförmigen oder linienförmigen Leuchtelementen darstellen.

Erfindungsgemäß ist im Referenzstrahlengang des Interferometers mindestens ein End-Reflektor mit drei Planspiegeln als Referenzreflektor, also mindestens ein Drei-Planspiegel-Referenz-Endreflektor, angeordnet und die Flächen dieser drei Planspiegel liegen jeweils zumindest näherungsweise senkrecht zu einer gemeinsamen Bezugsebene BE.

Außerdem sind in der Anordnung Mittel zur spektralen Aufspaltung im Detektionsstrahlengang vorgesehen, so dass räumliche Interferogramme nach der Wellenlänge separiert sind. Hier kommt der bekannte Ansatz zur Spektral-Interferometrie zur Anwendung. So kann auch das räumliche Interferogramm der Lichtquelle mit monochromatischer oder quasi-monochromatischer Strahlung auf dem gerasterten Detektor zur hochgenauen Phasenauswertung separiert werden. Gleichzeitig liegen räumliche Interferogramme mit unterschiedlichen Wellenlängen separiert vor, so dass ein Multi-Wellenlängen-Ansatz zur Auswertung kommen kann. Durch Addition mehrerer räumlicher Interferogramme mit unterschiedlichen Wellenlängen kann ein numerisch generiertes Kurzkohärenz-Interferogramm errechnet werden und in bekannter Art und Weise zur Auswertung gebracht werden. So kann mittels Kurzkohärenz-Interferogramm- oder Multiwellenlängen-Technik die absolute Streifenordnung oder ein Referenzstreifen im räumlichen Interferogramm-Muster bestimmt werden. Aus dem räumlichen Interferogramm der Lichtquelle mit monochromatischer oder quasi-monochromatischer Strahlung wird die Phasenlage zur Bestimmung einer höchstgenauen Tiefen oder Abstandsinformation in einem Messpunkt numerisch ermittelt. Hier geht es um die höchstgenaue Messung an polierten oder ultrapräzisionsbearbeiteten Oberflächen, also um Auflösung und Messunsicherheit im Sub-Lambda-Bereich, beispielsweise für die Formmessung an Optiken im EUV-Bereich.

Erfindungsgemäß bilden die drei Spurgeraden der Ebenen, welche durch die Flächen der drei Planspiegel dargestellt werden, in der Bezugsebene BE ein Dreieck ABC, damit bei diesem Interferometer zwischen Referenz- und Objektbündel eine Lateral-Shear besteht, die eine Strecke mit dem Betrag delta_q darstellt. Die Strecken $\underline{AB}$, $\underline{BC}$ und $\underline{CA}$ dieses Dreiecks ABC müssen dazu eine gewisse Länge aufweisen. Beispielsweise kann die Länge dieser Strecken typischerweise jeweils in der Größenordnung von einigen Zehntel Millimetern bis zu einigen Millimetern liegen. Die Winkel dieses Dreiecks sind dabei weder extrem spitz, noch stellt dieses Dreieck ein rechtwinkliges Dreieck dar. Die sich ergebende Lateral-Shear kann einen Betrag delta_q in der Größenordnung typischerweise von 0,1 mm bis zu einigen Millimetern aufweisen. Bei einer Anordnung mit einem lateral hochauflösenden Mikroskop und einer Schwerpunktwellenlänge im UV-Bereich kann der Betrag delta_q jedoch auch in der Größenordnung von wenigen Hundertstel Millimetern sein. Dies basiert auf entsprechend kleinen Längen der Strecken $\underline{AB, BC}$ und $\underline{CA}$ und den entsprechenden drei Winkeln des Dreiecks ABC. Dieser Ansatz ist hinsichtlich des Betrages delta_q weit skalierbar.

Die Lateral-Shear vom Betrag delta_q zwischen Referenz- und Objektbündel besteht in der virtuellen Spiegelebene VSE des Drei-Planspiegel-Referenz-Endreflektors im Referenzstrahlengang. Die virtuelle Spiegelebene VSE ist mit der Messebene ME des Objektstrahlenganges durch Strahlteilung zumindest näherungsweise optisch konjugiert. Dabei ist der Drei-Planspiegel-Referenz-Endreflektor winkelmäßig so ausgerichtet, dass elektromagnetische Strahlung aus dem Referenzstrahlengang auf den gerasterten Detektor gelangt.

Eine laterale Verschiebung eines Drei-Planspiegel-Referenz-Endreflektors führt nicht zu einer Veränderung des Betrages der Lateral-Shear delta_q. Diese Invarianz wird als ein großer technischer Vorteil angesehen, da sich somit eine hohe Robustheit der Signalentstehung gegenüber derartigen Dejustierungen ergibt.

Der Drei-Planspiegel-Referenz-Endreflektor ist ein im erfindungsgemäßen Interferometer Lateral-Shear erzeugender Reflektor. Dabei weist der Drei-Spiegel-Referenz-Endreflektor, wie bereits dargestellt, eine virtuelle Spiegelebene VSE auf. Dieser virtuellen Spiegelebene VSE kann das Auftreten der Lateral-Shear räumlich zugeordnet werden. Beispielsweise führt die Interferenz von einer Objektkugelwelle und einer Referenzkugelwelle, die durch das Interferometer erzeugt werden und deren Kugelzentren durch eine Lateral-Shear vom Betrag delta_q separiert sind, zumindest in einem begrenzten Teilbereich der Detektorebene zu einem räumlichen Interferogramm mit einer zumindest näherungsweise konstanten Ortsfrequenz für die Schwerpunktwellenlänge, da die interferierenden Wellenflächen auf dem Detektor zueinander geneigt sind. In einem begrenzten Ausschnitt der Kugelwellenflächen sind diese in der Regel hinreichend gut durch Planwellen zu approximieren. Diese auf einem Detektor zu registrierende Interferenzerscheinung von zwei räumlich kohärenten Kugelwellenflächen ist dem Fachmann in der Optik als das klassische Youngsche Doppelspaltexperiment hinreichend bekannt, wobei der Spaltabstand d im Doppelspaltexperiment hier der Lateral-Shear mit dem Betrag delta_q entspricht.

Die Lateral-Shear mit dem Betrag delta_q dient hier also als Grundlage für die Erzeugung von einem oder mehreren räumlichen Interferogrammen, welche in ihrem Streifenabstand nicht oder nur ganz unwesentlich durch die Neigung der Objektoberfläche zu beeinflussen sind, wenn das punktförmige Zentrum der Objekt-Kugelwelle auf einem Oberflächenelement liegt, also das Objekt auch durch fokussiertes Licht zumindest näherungsweise punktförmig beleuchtet wird. Diese Invarianz des Streifenabstandes ist für die Auswertung räumlicher Interferogramme von sehr großem Vorteil, da hier beispielsweise aufgrund der Vorabkenntnis des Streifenabstandes im Signal robuste und vergleichsweise schnelle Lock-in Ansätze zur Bestimmung der Phasenlage des räumlichen Interferogramms zur Anwendung kommen können, die zumindest näherungsweise auf die Ortsfrequenz des räumlichen Interferogramms eingestellt sind, welche vorab zumindest näherungsweise bekannt ist. Zur Bestimmung der Phasenlage des räumlichen Interferogramms können aber auch vergleichsweise einfache Phasenauswerte-Ansätze zum Einsatz kommen wie der 5-Phasen-Auswerte-Algorithmus nach J. Schwider. Es können aber auch Phasen-Auswerte-Algorithmen zur Anwendung kommen, die in der Größenordnung 100 Intensitätswerte zu einem Phasenwert modulo 2 PI verrechnen.

Auf dem gerasterten Detektor wird vorzugsweise für jeden Objektpunkt in einem lateral ausgedehnten Bereich ein räumliches Interferogramm der Lichtquelle mit mono- oder quasi-monochromatischer Strahlung detektiert als auch räumliche Kurzkohärenz-Interferogramme, die durch die spektralen Mittel im Detektionsstrahlengang räumlich separiert sind. So dass durch Aufnahme eines einzigen Bildes mit vorzugsweise vielen nebeneinander liegenden räumlichen Interferogrammen, die durch Strahlformung gebildet werden, eine eindeutige und höchstgenaue Tiefen- oder Abstandsinformation gewonnen werden.

Diese Anordnung kann mit besonderem Vorteil eingesetzt werden, wenn polierte ebene oder schwach gekrümmte Objekte in einem schwingenden Umfeld in sehr kurzer Zeit gemessen werden sollen, wo der interferometrische Ansatz mit zeitlichem Phasenschieben nicht eingesetzt werden kann und nur wenige Messpunkte, beispielsweise entlang einer Linie, zur Prüfung genügen. Besonders einfach stellt sich hier die Messung dar, wenn über das Messobjekt a priori-Kenntnisse bestehen, eine stetige Oberfläche desselben vorausgesetzt werden kann und die typischen, zu erwartenden Abweichungen von der Sollgeometrie in der Größenordnung der verwendeten Lichtwellenlänge oder erheblich darunter liegen oder die Abweichungen von der Sollgeometrie sich lateral über dem Messobjekt nur sehr wenig ändern.

**Merkmale zu einem weiteren Aspekt des Verfahrens**

52. Bei einer besonderen Ausgestaltung des bereits oben beschriebenen Verfahrens zur robusten Interferometrie zur Erfassung von Abstand, Tiefe, Profil, Form, Welligkeit und/oder Rauheit oder der optischen Weglänge in oder an technischen oder biologischen Objekten, auch in Schichtform, oder auch zur optischen Kohärenz-Tomografie (OCT), mit den Mitteln der Anordnung im Oberbegriff werden die Verfahrensschritte:

- Erzeugen mindestens eines Objektstrahlenbündels elektromagnetischer Strahlung zur Beleuchtung des Objekts, dessen optisch auszumessende Oberflächen- oder Volumenelemente sich in einer Messebene oder einem Messvolumen im Objektstrahlengang befinden,

- Erzeugen mindestens eines Referenzstrahlenbündels mittels Strahlteilung in einem Interferometer,

- Erzeugen von räumlichen Kurzkohärenz-Interferenzen von Objekt- und Referenzstrahlen,

- Detektion von räumlichen Kurzkohärenz-Interferenzen auf einem gerasterten Detektor elektromagnetischer Strahlung

durchgeführt.
Erfindungsgemäß werden

- im Referenzstrahlengang drei direkt aufeinanderfolgende Reflexionen an je drei Planspiegeln durchgeführt.

- Dabei liegen die Flächen dieser drei Planspiegel jeweils zumindest näherungsweise senkrecht zu einer gemeinsamen Bezugsebene BE und bilden somit einen Drei-Planspiegel-Referenz-Endreflektor.

- Durch die drei Reflexionen wird eine Lateral-Shear mit dem Betrag delta_q zwischen Objektstrahlenbündel und Referenzstrahlenbündel im Interferometer eingeführt, wodurch auf dem gerasterten Detektor mindestens ein räumliches Kurzkohärenz-Interferogramm erzeugt wird.

- Es wird eine spektrale Aufspaltung von Objekt- und Referenzstrahlung im Detektionsstrahlengang durchgeführt.

- Mindestens ein räumliches Interferogramm-Muster mit spektraler Aufspaltung wird zur Gewinnung von Informationen über Abstand, Tiefe, Profil, Form, Welligkeit und/oder Rauheit oder der optischen Weglänge eines Objekts, auch in der optischen Kohärenz-Tomografie, detektiert und ausgewertet.

Damit ist es möglich, räumliche Interferogramme gezielt spektral auszuwählen. Beispielsweise, wenn der Quelle kurzkohärenter Strahlung eine Laserdiode beigeordnet ist. Dadurch kann in einem Spektralbereich, in welches die Aberrationen des optischen Systems ein Minimum darstellen, die Phasenlage des Interferogramms hochgenau bestimmt werden. Die Interferogramme anderer Spektralbereiche dienen zum Bestimmen des Streifens der nullten Ordnung.

**Merkmale zu einem weiteren Aspekt des Verfahrens**

53. Es handelt sich um ein Verfahren zur robusten, insbesondere weitskaligen Interferometrie, nach einem der voran und/oder nachfolgend beschriebenen Verfahren, insbesondere gemäß einer der beschriebenen bevorzugten Ausführungsformen, zur Erfassung von Abstand, Tiefe, Profil, Form, Welligkeit und/oder Rauheit oder der optischen Weglänge in oder an technischen oder biologischen Objekten, auch in Schichtenform, auch zur Erfassung eines oder mehrerer Luftabstände in Optiken, oder auch zur optischen Kohärenz-Tomografie (OCT).

Dieses Verfahren zur robusten Interferometrie nutzt die folgenden Mittel:

- mindestens eine Quelle kurzkohärenter elektromagnetischer Strahlung zur Beleuchtung des Objekts, insbesondere auch in Form einer dem Interferometer vorgeordneten Frequenzkamm-Laser-Kavität mit der einfachen optischen Länge L oder/und mindestens einer der Quelle (insbesondere einer spektral breitbandigen Lichtquelle) im Lichtweg nachgeordneten Vielstrahl-Interferenz-Kavität mit der einfachen optischen Länge L,

- ein Interferometer, insbesondere auch in Form eines Interferenzmikroskops, mit einem Objekt- und mit mindestens einem Referenzstrahlengang, in dem mindestens ein End-Reflektor, insbesondere der voran und/oder nachfolgend beschriebenen Art angeordnet ist, und mit einer Messebene oder einem Messvolumen im Objektstrahlengang, in der sich zumindest näherungsweise die optisch anzumessenden Oberflächen- oder Volumenelemente des Objekts befinden,

- sowie mindestens einen gerasterten Detektor zur Detektion elektromagnetischer Strahlung.

Dabei werden die folgenden Verfahrensschritte durchgeführt:

- Erzeugen mindestens eines Objektstrahlenbündels elektromagnetischer Strahlung mittels Strahlteilung in einem Interferometer zur Beleuchtung des Objekts,

- Erzeugen mindestens eines Referenzstrahlenbündels mittels Strahlteilung in einem Interferometer,

- Erzeugen eines Lateralversatzes delta_q für das Referenzstrahlenbündel,

- Erzeugen von räumlichen Überlagerungen von Objekt- und Referenzstrahlen durch Strahlvereinigung,

- Detektion von räumlichen Überlagerungen von Objekt- und Referenzstrahlen auf einem gerasterten Detektor elektromagnetischer Strahlung. Im Fall der Interferenz bilden zwei zueinander geneigte Wellenfronten auf dem Detektor ein räumliches Kurzkohärenz-Interferogramm.

Erfindungsgemäß werden zum Zeitpunkt t_i eine erste Überlagerung von Objekt- und Referenzstrahlung und eine erste Detektion von überlagerter Objekt- und Referenzstrahlung mittels gerastertem Detektor durchgeführt.

Anschließend wird

- entweder eine Relativbewegung in Richtung der Lichtausbreitung zwischen dem Interferometer und dem Objekt

- oder eine Bewegung des Endreflektors im Referenzstrahlengang in Richtung der Lichtausbreitung

- oder eine optische Längenänderung delta_L mindestens einer dem Interferometer vorgeordneten Frequenzkamm-Laser-Kavität oder/und mindestens einer der Quelle im Lichtweg nachgeordneten Vielstrahl-Interferenz-Kavität

in der Zeitdauer delta_tz durchgeführt.
Dabei beträgt

- der Stellweg s der Relativbewegung zwischen dem Interferometer und dem Objekt

- oder der Stellweg s der Bewegung des Endreflektors im Referenzstrahlengang

- oder die optische Längenänderung delta_L mindestens einer dem Interferometer vorgeordneten Frequenzkamm-Laser-Kavität oder/und mindestens einer der Quelle im Lichtweg nachgeordneten Vielstrahl-Interferenz-Kavität

in der Zeitdauer delta_tz mindestens den halben Betrag der Schwerpunktwellenlänge Lambda_schwer.
Die räumliche Änderung delta_xr_max des optischen Gangunterschieds xr weist im Überlagerungsgebiet von Objekt- und Referenzstrahlung auf dem gerasterten Detektor mindestens den ganzen Betrag der Schwerpunktwellenlänge Lambda_schwer der interferierenden Strahlung auf. Die Wellenfronten, welche die Objekt- und Referenzstrahlung darstellen, sind auf dem gerasterten Detektor zueinander geneigt. Vorzugsweise beträgt der Neigungswinkel zwischen den Wellenfronten wenige Zehntel Altgrad.
Nach der Zeitdauer delta_tz werden zum Zeitpunkt t_i+1 mindestens eine zweite Überlagerung von Objekt- und Referenzstrahlung und mindestens eine zweite Detektion von überlagerter Objekt- und Referenzstrahlung mittels gerastertem Detektor durchgeführt.
Dadurch beträgt im Fall des Auftretens eines räumlichen Kurzkohärenz-Interferogramms die Verschiebung des räumlichen Interferogramms nach der Zeitdauer delta_tz auf dem gerasterten Detektor mindestens eine Periodenlänge dieses Interferogramms. In einer typischen Messung beträgt die schrittweise Verschiebung des räumlichen Interferogramms - jeweils nach der Zeitdauer delta_tz - vorzugsweise in der Größenordnung 10 bis 100 Perioden des räumlichen Interferogramms, um so auch einen größeren Tiefenbereich im Objektraum vergleichsweise schnell abtasten zu können. Wichtig für Messungen mit geringer Kohärenzlänge der interferierenden Strahlung ist, dass der gut modulierte Teil des räumlichen Interferogramms mit dem Maximum der Modulation wenigstens einmal bei mehreren Detektionen durch einen Frame des gerasterten Detektors erfasst werden kann.
Die Bewegungs- oder die Stellvorgänge zur Längenänderung werden also stets so lange fortgesetzt bis mindestens ein auswertbares räumliches Interferogramm von relevanten Objektpunkten detektiert werden kann oder aus räumlichen oder zeitlichen technischen  Gründen die Bewegungs- oder Stellvorgänge nicht mehr weiter ausgeführt werden können. Ob sich ein räumliches Interferogramm auf dem gerasterten Detektor ausbildet, bestimmen jeweils auch der jeweils aktuelle optische Gangunterschied, der sich auf dem gerasterten Detektor ausbildet, und die Kohärenzlänge der dort überlagerten Strahlung.
Es sind hierbei zwei Fälle, Fall 1 und Fall 2, zu betrachten. Der Fall 1 gilt, wenn die Kohärenzlänge der interferierenden Strahlung kleiner als die räumliche Änderung des optischen Gangunterschieds im räumlichen Interferogramm auf dem gerasterten Detektor oder die Kohärenzlänge gleich der räumlichen Änderung des optischen Gangunterschieds ist. Dann kann zumindest der gut modulierte Teil eines Kurzkohärenz-Interferogramms vollständig in einem Detektor-Frame aufgenommen werden.
Der Fall 2 beschreibt den Sachverhalt, dass die Kohärenzlänge größer als die räumliche Änderung des optischen Gangunterschieds des Kurzkohärenz-Interferogramms ist, das sich auf dem gerasterten Detektor ausbildet. Dann kann der stark modulierte Teil dieses Interferogramms nicht vollständig mittels einem einzigen Detektor-Frame erfasst werden. Durch mehrere, nacheinander erfolgende Aufnahmen eines räumlichen Interferogramms mittels gerastertem Detektor - jeweils nach einem Bewegungs- oder einem Stellvorgang zur Längenänderung, der in der Zeitdauer delta_tz erfolgt - kann in diesem Fall die Lage des Maximums der Einhüllenden zumindest näherungsweise aus mehreren Detektor-Frames bestimmt werden. Dies ist von Vorteil, wenn weiter entfernte Objekte in der makroskopischen Skale gemessen werden sollen und dabei eine geringere Messauflösung, beispielsweise in der Größenordnung von 10 μm, für den Objektabstand akzeptabel ist.

Im Fall 1 ist es von Vorteil, wenn der Stellweg s oder die Änderung der optischen Länge delta_L in der Regel ein Viertel der Änderung des optischen Gangunterschieds des auf dem gerasterten Detektor aufgenommenen räumlichen Interferogramms nicht überschreitet, damit im Messvorgang jeder kooperative Objektpunkt mindestens ein vergleichsweise gut auswertbares räumliches Interferogramm liefern kann. Ausnahmen kann es geben, wenn vergleichsweise sichere a priori-Informationen über die Objektform vorliegen, beispielsweise bei der Messung von mit geringen Formtoleranzen gefertigten Objekten. Dann werden beispielsweise nur die somit hinreichend genau bekannten Solllagen der Objektoberflächen optisch angefahren, von dessen Objektpunkten dann gegebenenfalls sofort gut modulierte räumliche Interferogramme gewonnen werden können. So kann mit einer gewissen Sicherheit das Maximum der Einhüllenden vergleichsweise schnell detektiert werden und die Formmessung eines komplex geformten Objekts schnell durchgeführt werden.

Für den Fall 2 ist es von Vorteil, wenn der Stellweg s oder die Änderung der optischen Länge delta_L in der Regel ein Viertel der Kohärenzlänge der detektierten Strahlung nicht überschreitet, damit im Messvorgang jeder kooperative Objektpunkt mindestens ein vergleichsweise gut auswertbares räumliches Interferogramm liefern kann. So kann die Lage des Maximums der Einhüllenden oder deren Schwerpunkt hinreichend genau ermittelt werden. Dabei wird davon ausgegangen, dass die Kohärenzlänge als eine in der Regel eher wenig veränderliche Größe zumindest näherungsweise bekannt ist oder aus einem vorab aufgenommenen räumlichen Interferogramm hinreichend genau bestimmt werden kann.

Wenn die Kohärenzlänge der detektierten Strahlung gleich oder zumindest näherungsweise gleich dem Betrag der Änderung des optischen Gangunterschieds der überlagerten Strahlung auf den Detektor ist, sollte der Stellweg s oder die Änderung der optischen Längenänderung delta_L in der Regel ein Viertel dieser Änderung des optischen Gangunterschieds der überlagerten Strahlung auf den Detektor nicht überschreiten. Dann ist die Verschiebung des Maximums der Einhüllenden eines räumlichen Interferogramms, also wenn ein räumliches Interferogramm - bedingt durch die Größe des absoluten optischen Gangunterschieds der überlagerten Strahlung - auftritt, pro Stell- oder Bewegungsvorgang nicht größer als die halbe Länge des gerasterten Detektors. Dies gestaltet das Auffinden des Maximums der Einhüllenden eines räumlichen Interferogramms und damit die Auswertung desselben vergleichsweise einfach.

Bei Einsatz einer Frequenzkamm-Laser-Kavität oder einer Vielstrahl-Interferenz-Kavität soll bekannterweise die Verzögerungslänge der Frequenzkamm-Laser-Kavität oder die doppelte optische Länge der Vielstrahl-Interferenz-Kavität zumindest näherungsweise einem ganzzahligen Bruchteil oder dem gesamten optischen Gangunterschied im Interferometer-bezogen auf Objektpunkte in der Messebene oder im Messvolumen - gleichgemacht werden, um ein Kurzkohärenz-Interferogramm gewinnen zu können. Diese Komponenten mit Frequenzkamm-Charakteristik ermöglichen bekannterweise, auch von weiter entfernten Objektpunkten noch ein Kurzkohärenz-Interferogramm zu erzeugen und aufzunehmen. So können auch weiter entfernte makroskopische Objekte mittels Durchstimmen einer Frequenzkamm-Laser-Kavität oder einer Vielstrahl-Interferenz-Kavität optisch angetastet werden. Dabei sollte sich ein Objektpunkt jeweils im wellenoptischen Schärfentiefebereich, Depth of View = DOV, eines Fokus im Objektstrahlengang befinden. Befinden sich Objektpunkte, die gemessen werden sollen, außerhalb des gegebenen wellenoptischen Schärfentiefebereiches, ist dabei ein Nachfokussieren erforderlich.

Es handelt sich somit insbesondere um ein Verfahren zur robusten, insbesondere weitskaligen Interferometrie mit mindestens einer Quelle kurzkohärenter elektromagnetischer Strahlung zur Beleuchtung des Objekts, insbesondere auch in Form einer Frequenzkamm-Laser-Kavität oder/und mindestens einer der Quelle im Lichtweg nachgeordneten Vielstrahl-Interferenz-Kavität. Dabei werden insbesondere eine erste Überlagerung von zueinander geneigter Objekt- und Referenzstrahlung und eine erste Detektion dieser überlagerten Objekt- und Referenzstrahlung mittels gerastertem Detektor durchgeführt. Anschließend wird insbesondere entweder eine Relativbewegung zwischen dem Interferometer und dem Objekt oder eine Bewegung des Endreflektors im Referenzstrahlengang jeweils in Richtung der Lichtausbreitung oder eine optische Längenänderung einer dem Interferometer vorgeordneten Frequenzkamm-Laser-Kavität oder/und einer der Quelle im Lichtweg nachgeordneten Vielstrahl-Interferenz-Kavität in einer Zeitdauer delta_tz durchgeführt. Dabei beträgt der Stellweg bei der Relativbewegung, bei der Bewegung des Endreflektors oder die optische Längenänderung in der Zeitdauer delta_tz insbesondere mindestens den halben Betrag der Schwerpunktwellenlänge der auf dem gerasterten Detektor überlagerten Strahlung. Nach der Zeitdauer delta_tz werden insbesondere mindestens eine zweite Überlagerung von Objekt- und Referenzstrahlung und mindestens eine zweite Detektion der überlagerten Objekt- und Referenzstrahlung mittels gerastertem Detektor durchgeführt, um insbesondere mindestens ein räumliches Interferogramm mit seinem Modulationsmaximum zu detektieren.

## Weitere bevorzugte Merkmale des Verfahrens

54. Vorzugsweise weist bei dem Verfahren zur robusten, insbesondere weitskaligen Interferometrie der Stellweg s oder die optische Längenänderung delta_L in der Zeitdauer delta_tz zumindest näherungsweise jeweils den Betrag von einem Viertel der maximalen räumlichen Änderung delta_xr_max des optischen Gangunterschieds xr des auf dem gerasterten Detektor aufgezeichneten räumlichen Interferogramms auf.

55. Vorzugsweise wird bei dem Verfahren zur robusten, insbesondere weitskaligen Interferometrie die Relativbewegung zwischen dem Interferometer und dem Objekt in der Zeitdauer delta_tz kontinuierlich, quasi-kontinuierlich oder schrittweise durchgeführt.

56. Vorzugsweise wird bei dem Verfahren zur robusten, insbesondere weitskaligen Interferometrie die Bewegung des Endreflektors in der Zeitdauer delta_tz kontinuierlich, quasi-kontinuierlich oder schrittweise durchgeführt.

57. Vorzugsweise wird bei dem Verfahren zur robusten, insbesondere weitskaligen Interferometrie die optische Längenänderung delta_L in der Zeitdauer delta_tz kontinuierlich, quasi-kontinuierlich oder schrittweise durchgeführt.

## Merkmale zu einem weiteren Aspekt der Anordnung

58. Gemäß einem weiteren Aspekt handelt es sich um eine Anordnung, also eine Vorrichtung, in der einzelnen Komponenten in der beschriebenen Weise angeordnet sind, zur robusten, insbesondere weitskaligen Interferometrie, nach einem der voran beschriebenen Anordnungen, insbesondere gemäß einer der beschriebenen bevorzugten Ausführungsformen, zur Erfassung von Abstand, Tiefe, Profil, Form, Welligkeit und/oder Rauheit oder der optischen Weglänge in oder an technischen oder biologischen Objekten, auch in Schichtenform, auch zur Erfassung eines oder mehrerer Luftabstände in Optiken, oder auch zur optischen Kohärenz-Tomografie (OCT). Besonders bevorzugt ist die Anordnung ausgelegt ein erfindungsgemäßes Verfahren, insbesondere in einer der beschriebenen bevorzugten Ausgestaltungen auszuführen. Dazu weist die Anordnung vorzugsweise entsprechende Mittel auf, die ausgelegt sind, die jeweiligen Verfahrensschritte auszuführen bzw. die dazu erforderliche Funktionalität aufweisen.

In diesem Aspekt umfasst die Anordnung zur robusten Interferometrie die folgenden Mittel:

- mindestens eine Quelle kurzkohärenter elektromagnetischer Strahlung zur Beleuchtung des Objekts, insbesondere auch in Form einer dem Interferometer vorgeordneten Frequenzkamm-Laser-Kavität mit der einfachen optischen Länge L oder/und mindestens einer der Quelle im Lichtweg nachgeordneten Vielstrahl-Interferänz-Kavität mit der einfachen optischen Länge L,

- ein Interferometer, insbesondere auch in Form eines Interferenzmikroskops, mit einem Objekt- und mit mindestens einem Referenzstrahlengang, in dem mindestens ein End-Reflektor, insbesondere der voran und/oder nachfolgend beschriebenen Art angeordnet ist, und mit einer Messebene oder einem Messvolumen im Objektstrahlengang, in der sich zumindest näherungsweise die optisch anzumessenden Oberflächen- oder Volumenelemente des Objekts befinden,

- sowie mindestens einen gerasterten Detektor zur Detektion elektromagnetischer Strahlung und

- Mittel zum Durchstimmen der Frequenzkamm-Laser-Kavität oder/und der Vielstrahl-Interferenz-Kavität im Spektralraum.

Insbesondere können die Mittel zum Durchstimmen der Frequenzkamm-Laser-Kavität oder/und der Vielstrahl-Interferenz-Kavität als Mittel zum Durchführen einer optischen Längenänderung delta_L mindestens einer dem Interferometer vorgeordneten Frequenzkamm-Laser-Kavität oder/und mindestens einer der Quelle (insbesondere einer spektral breitbandigen Lichtquelle) im Lichtweg nachgeordneten Vielstrahl-Interferenz-Kavität vorgesehen sein.

Vorzugsweise sind Mittel zum zeitlichen Synchronisieren zum Durchführen einer optischen Längenänderung delta_L mindestens einer dem Interferometer vorgeordneten Frequenzkamm-Laser-Kavität oder/und mindestens einer der Quelle im Lichtweg nachgeordneten Vielstrahl-Interferenz-Kavität mit der Bildaufnahme mittels gerastertem Detektor vorgesehen bzw. angeordnet.

**Beschreibung der Figuren**

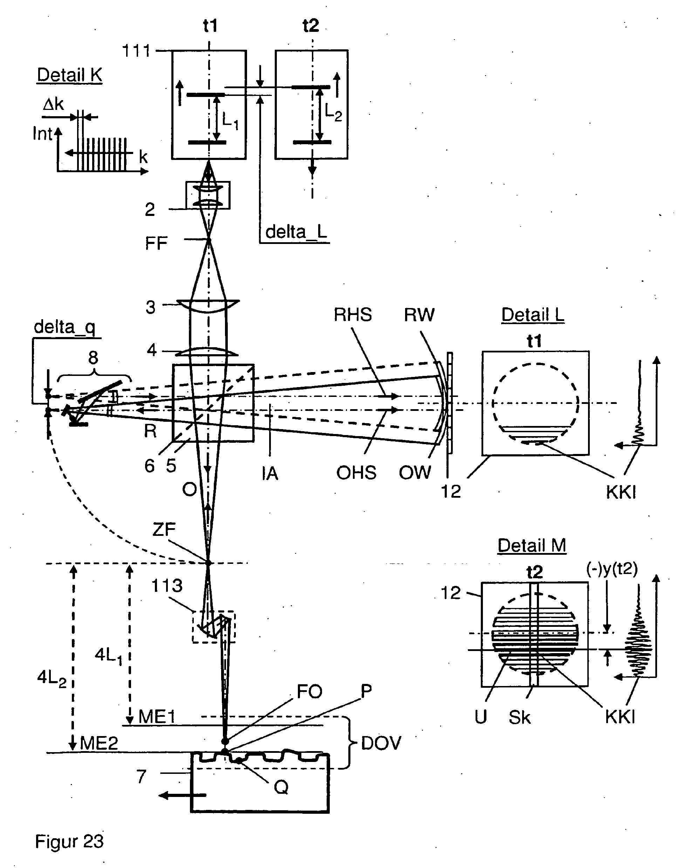

Die Erfindung wird beispielhaft anhand der Figuren 1 bis 23 beschrieben.

Hier wird der Begriff Licht stets als Synonym für elektromagnetische Strahlung vom Terahertz-, über das Infrarot- bis zum tiefen UV-Spektrum verwendet.

Die Figur 1 zeigt einen Sensor auf der Basis eines Michelson-Interferometers. Das Licht von einer spektral vergleichsweise breitbandigen Lichtquelle 1 im nah-infraroten Bereich wird mittels einer Strahlformungsoptik 2 in einen kleinen Fokusfleck FF gebracht, wobei hier auch die Anordnung eines Pinholes möglich ist, wird durch ein Objektiv 3 kollimiert und durch ein vergleichsweise gering-aperturiges Fokussierobjektiv 4 mit einer numerischen Apertur von 0,05 wieder fokussiert und gelangt anschließend in ein Michelson-Typ-Interferometer mit einem Strahlteiler 5 und einer Strahlteilerfläche 6, wo das Licht in ein Referenzbündel R und ein Objektbündel O aufgespalten wird. Das den Strahlteiler 5 geradlinig passierende Objektlichtbündel O trifft fokussiert im Messpunkt MP auf die spiegelnde Objektoberfläche des Objekts 7, die sich hier nahezu in der Messebene ME befindet. Die Objektoberfläche soll sich innerhalb des wellenoptischen Schärfentiefebereiches des fokussierten Lichts befinden. Das vom Objekt 7 zurückkehrende Licht wird an der Strahlteilerfläche 6 durch Reflexion über den Interferometer-Ausgang IA in Richtung des gerasterten Detektors 12 gelenkt. Dargestellt ist der Objekthauptstrahl OHS. Das Licht, welches nach dem Eintritt in das Interferometer am Strahlteiler 5 in den Referenzstrahlengang R reflektiert wird, gelangt auf einen Drei-Planspiegel-Referenz-Endreflektor 8, der aus den drei Planspiegeln 9, 10 und 11 besteht, die jeweils senkrecht auf der Bezugsebene BE stehen, die hier in der Zeichenebene liegen soll. Die drei Planspiegel 9, 10 und 11 stellen eine in sich starre, kompakte Baugruppe dar. Die Lage der drei Planspiegel 9, 10 und 11 wird im Folgenden stets als zueinander unveränderlich betrachtet.

Die drei Spurgeraden der drei Ebenen, welche durch die drei Flächen der Planspiegel 9, 10 und 11 aufgespannt werden und die sich durch den Schnitt dieser Ebenen mit der Bezugsebene BE ergeben, bilden hier ein stumpfwinkliges Dreieck ABC in der Bezugsebene BE. Mit AB ist hier ein Teil der Spurgeraden, die hier von der Ebene der Planspiegelfläche 11 dargestellt wird, dargestellt.

Am Drei-Planspiegel-Referenz-Endreflektor 8 erfährt das einfallende Referenzstrahlenbündel eine Lateral-Shear vom Betrag delta_q. Der Ort der Entstehung der Lateral-Shear wird der virtuellen Spiegelebene VSE zugeordnet. Die virtuelle Spiegelebene VSE stellt die virtuelle Reflexionsebene dieses Drei-Planspiegel-Referenz-Endreflektors 8 dar und ergibt sich aus der Lage des Drei-Planspiegel-Referenz-Endreflektors 8 im Raum und ist baugruppenfest, wenn der Drei-Planspiegel-Referenz-Endreflektor 8 als Monolith angesehen wird. Die Gerade g stellt die Spurgerade zwischen der Ebene BE und der virtuellen Spiegelebene VSE dar, wobei die virtuelle Spiegelebene VSE senkrecht zur Bezugsebene BE steht. Die virtuelle Spiegelebene VSE soll hierbei, bezogen auf den Interferometer-Ausgang IA, eine zur Messebene ME des Objektstrahlenganges optisch konjugierte Ebene darstellen, was durch eine Justierung des Interferometers erreicht wird. Das am Drei-Planspiegel-Referenz-Endreflektor 8 reflektierte Referenzstrahlenbündel, dargestellt durch den Referenzhauptstrahl RHS verlässt das Interferometer nach dem geradlinigen Passieren des Strahlteilers 5 mit der Strahlteilerfläche 6 über den Interferometer-Ausgang IA, gelangt ebenfalls auf den gerasterten Detektor 12 und es kommt dort zur Interferenz mit dem Licht aus dem Objektstrahlengang. Dadurch entsteht ein räumliches Interferogramm auf dem gerasterten Detektor 12 mit zumindest näherungsweise konstanter Ortsfrequenz für die Schwerpunktwellenlänge, da die dort interferierenden Kugelwellen vergleichsweise weit von ihren Zentren entfernt sind und der gerasterte Detektor 12 nur eine vergleichsweise kleine Fläche aufweist. Die Verhältnisse bei der Interferenz entsprechen bei hinreichend kleinen Fokuspunkten hierbei denen im Youngschen Doppelspaltversuch mit zwei Pinholes. Der Winkel zwischen den Tangentialebenen TR und TO von Referenz- und Objektkugelwellen schließen im Durchstoßpunkt der Symmetrielinie SL in der Zeichenebene einen Winkel delta_beta ein, aus dem sich der Streifenabstand dS für die Schwerpunktwellelänge Lambda_schwer zumindest näherungsweise zu

$$dS = (\text{Lambda\_schwer} * r) \,/\, \text{delta\_q} \qquad\qquad (1)$$

ergibt, wenn r den Abstand der Mittelpunkte der beiden Kugelwellen aus Referenz- und Objektstrahlengang von der Detektionsebene auf dem Detektor 12 darstellt, wobei das Zentrum der Kugelwelle im Referenzstrahlengang mit dem virtuellen Bündelfokus BFV' zusammenfällt.

Der optische Gangunterschied kann im Interferometer für alle Wellenlängen nahezu zu null gemacht werden, wenn hier ein nahezu perfekter Strahlteilerwürfel mit gleichen optischen Weglängen eingesetzt wird. Kleinere Abweichungen der beiden optischen Weglängen im Würfel im Bereich einiger weniger Mikrometer sind jedoch in der Regel noch gut zu tolerieren und führen im räumlichen Interferogramm auf dem gerasterten Detektor 12 neben einer konstanten lateralen Verschiebung des Interferogramm-Wavelets außerdem zu einer Asymmetrie der Einhüllenden. Das kann jedoch durch die Algorithmen der Auswertung berücksichtigt werden. Durch Verschieben des Drei-Planspiegel-Referenz-Endreflektors 8 kann der Schwerpunkt des Interferogramm-Wavelets mittig auf dem gerasterten Detektor 12 positioniert werden.

Der optische Gangunterschied ist im hier dargestellten Interferometer durch eine geringe Ablage der spiegelnden Oberfläche des Objekts 7 von der Messebene ME zu einem Zeitpunkt t1 nicht exakt null. Dies führt zur Entstehung eines räumlichen Kurzkohärenz-Interferogramms KKI mit einem etwas zur Symmetrielinie SL der beiden Hauptstrahlen lateral verschobenen Maximum vom Betrag y(t1). Befindet sich die Objektoberfläche des Objekts 7 zum Zeitpunkt t2 in einer anderen Tiefenposition, entsteht ein lateral um den Betrag (-)y(t2) verschobenes Maximum des räumlichen Kurzkohärenz-Interferogramms in Form eines Wavelets.

Diese Anordnung eines Drei-Planspiegel-Referenz-Endreflektors 8 in der Form, dass das Dreieck ABC der Spurgeraden stumpfwinklig ist, führt zum Vorteil, dass die Einfallswinkel auf die drei Planspiegel für den Hauptstrahl des Referenzbündels jeweils so gewählt werden können, dass zu große Einfallswinkel, also streifender Einfall, auch für Randstrahlen eines fokussierten Bündels vermieden werden.

Hier nicht dargestellt sind Mittel zur flächigen Beleuchtung des Objekts 7 und Mittel zur flächigen Abbildung des Objekts 7 auf eine weitere Kamera, um relevante Messpositionen mittels Sensor-Aktorik anfahren zu können. Das ist Stand der Technik und wird in allen nachfolgenden Anordnungen vorausgesetzt.

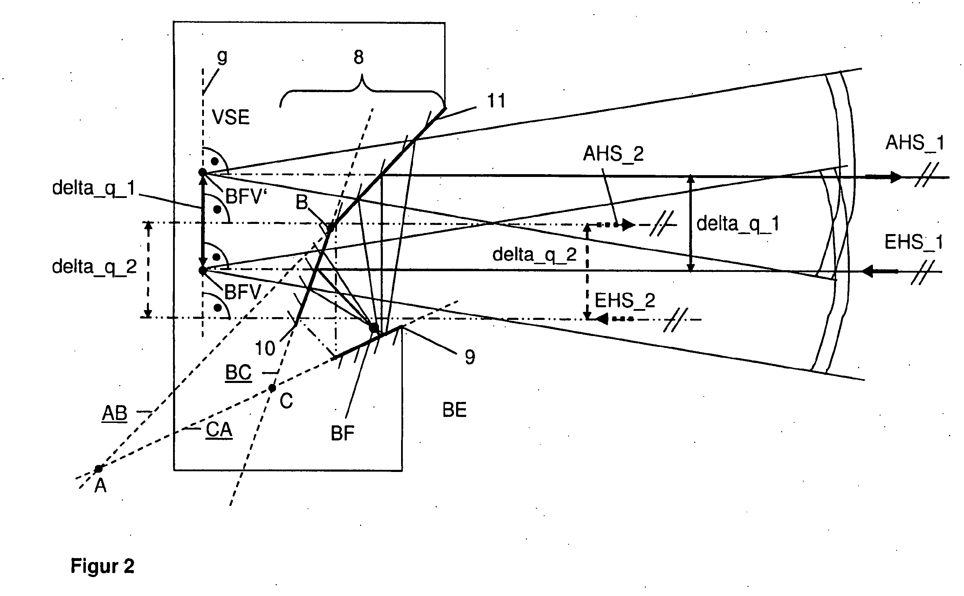

Die Figur 2 stellt den Drei-Planspiegel-Referenz-Endreflektor 8 mit den drei Planspiegeln 9, 10 und 11 dar, deren Spurgeraden das Dreieck ABC bilden. Diese Spurgeraden ergeben sich durch den Schnitt der Ebenen, die durch die Flächen der Planspiegel 9, 10 und 11 aufgespannt werden, mit der Bezugsebenen BE, die hier mit der Zeichenebene zusammenfällt.

Die drei Planspiegel 9, 10 und 11 sind hierbei durch eine Single-Point-Diamantbearbeitung hergestellt.

Der Drei-Planspiegel-Referenz-Endreflektor 8 entspricht einem virtuellen Planspiegel in der virtuellen Spiegelebene VSE. Dieser virtuelle Planspiegel erzeugt eine Lateral-Shear delta_q in der virtuellen Spiegelebene VSE. In der Tiefe, also dem Abstand vom Strahlteilerwürfel 5 ist der Drei-Planspiegel-Referenz-Endreflektor 8 hierbei durch Justierung so angeordnet, dass der Bündelfokus BF eines einfallenden homozentrischen Bündels 1 mit dem einfallenden Hauptstrahl EHS_1 auf der virtuellen Spiegelebene VSE als virtueller Fokuspunkt BFV liegt. Außerdem soll der Hauptstrahl EHS_1 senkrecht auf die virtuelle Spiegelebene VSE einfallen. Durch die Lateral-Shear erfährt dieser virtuelle Fokuspunkt BFV eine Verschiebung um den Betrag delta_q_1 und entsteht nun virtuell als BFV'. Scheinbar ausgehend vom virtuellen Fokuspunkt BFV' beginnt der Rücklauf des Lichts in Richtung Strahlteilerwürfel 5 und Interferometer-Ausgang IA. Auch dabei steht der Hauptstrahl des ausfallenden Bündels AHS_1 senkrecht auf der virtuellen Spiegelebene VSE.

Hierbei ist von Vorteil, dass der reale Fokuspunkt BF des homozentrischen Bündels 1, beziehungsweise der Mittelpunkt einer Kugelwelle, nicht auf einer der Planspiegelflächen 9 oder 10 liegt, sondern in Luft entsteht. Somit kann die hier durch die Diamant-Mikrozerspanung in der Regel auf den Planspiegelflächen bestehende feine Mikrostruktur auch nicht auf den Detektor 12 scharf abgebildet werden, insbesondere wenn diese Planspiegelfläche deutlich außerhalb der wellenoptischen Schärfentiefe liegt. Die Lichtstreuung, die durch diese feine Mikrostruktur entsteht, wird im weiteren Strahlengang durch eine konfokale Diskriminierung eliminiert.

Für ein parallel versetztes Bündel mit den Hauptstrahlen EHS_2 und AHS_2 beträgt der Betrag der Lateral-Shear delta_q_2. Bei perfekten Planspiegeln und jeweils senkrechter Position zur Bezugsebene BE gilt hier: Der Betrag der Lateral-Shear delta_q ist gleich dem Betrag delta_q_1 und auch gleich dem Betrag delta_q_2 und somit gilt

$$\text{delta\_q\_1} = \text{delta\_q\_2} = \text{delta\_q} \qquad\qquad (2)$$

und es besteht eine Invarianz des Betrages der Lateral-Shear delta_q gegenüber einer variablen Strahleinfallshöhe.

Die Figur 3 zeigt auf, dass bei einem Drei-Planspiegel-Referenz-Endreflektor 8 die Lateral-Shear delta_q stets in einer ausgezeichneten Ebene, der virtuellen Spiegelebene VSE stattfindet. Diese Strecke, welche die Lateral-Shear mit dem Betrag delta_q repräsentiert, ist im Betrag unveränderlich und wird durch den Abstand der Strahl-Durchstoßpunkte DP und DP' in der virtuellen Spiegelebene VSE bestimmt. Diese virtuelle Spiegelebene VSE ist in einem in sich starren Drei-Planspiegel-Referenz-Endreflektor 8 ortsfest. Der rechts dargestellte Drei-Planspiegel-Referenz-Endreflektor 8 ist um die Strecke v gegenüber dem links dargestellten verschoben und es ist dennoch keine Auswanderung des Ausgangsstrahls im Rahmen der Zeichengenauigkeit zu beobachten, denn PA1 und PA2 liegen auf gleicher Höhe. Dies zeigt die Invarianz eines Drei-Planspiegel-Referenz-Endreflektors 8 bezüglich des Strahlaustritts gegenüber lateralen Verschiebungen desselben.

Jedoch ist der Einfluss einer Kippung der Baugruppe "Drei-Planspiegel-Referenz-Endreflektor 8", hier dargestellt mit Drehung um eine Hochachse, auf ein einfallendes Bündel oder eine Wellenfront vergleichbar mit der Kippung eines Planspiegels. Also muss der Drei-Planspiegel-Referenz-Endreflektor 8 als in sich starre Baugruppe auch winkelmäßig justiert werden, um den Hauptstrahl des Bündels zumindest näherungsweise senkrecht auf die virtuelle Spiegelebene VSE einfallen zu lassen, um hier den lateralen Versatz der interferierenden Wellenfronten in der Detektionsebene der Interferenz klein zu halten. Eine Kippung der Baugruppe "Drei-Planspiegel-Referenz-Endreflektor 8" um eine Hochachse kann auch zu einer Verringerung des Kontrastes der Interferenz in der Detektionsebene führen. Bei einem sehr kleinen Fokusdurchmesser entschärft sich dieser Einfluss auf den Kontrast der Interferenz jedoch ganz erheblich.

Die Figur 4 stellt einen Drei-Planspiegel-Referenz-Endreflektor 8 mit den Planspiegeln 9, 10, und 11 in M Form dar. Diese Anordnung in M-Form entspricht ebenfalls einem virtuellem Planspiegel mit einer zusätzlichen Lateral-Shear delta_q. Ein homozentrisches Bündel mit dem einfallenden Hauptstrahl EHS und dem realen Fokuspunkt BF auf dem Planspiegel 11 wird in der der virtuellen Spiegelebene VSE von BFV um die Lateral-Shear mit dem Betrag delta_q versetzt und es entsteht der virtuelle Fokuspunkt BFV'. Auch dieser Drei-Planspiegel-Referenz-Endreflektor 8 in M-Form muss winkelmäßig wie ein Planspiegel in einem klassischen Michelson-Interferometer ausgerichtet werden, um das Licht zur Interferenz bringen zu können.

Die Figur 5 stellt einen Drei-Planspiegel-Referenz-Endreflektor 8 mit den Planspiegeln 9, 10, und 11 auf der Grundlage eines spitzwinkligen Dreiecks ABC der drei Spurgeraden dar. Hierbei wird mit linear polarisiertem Licht mit s- Polarisation gearbeitet, um einen hohen Reflexionsgrad auch bei streifendem Lichteinfall zu sichern. Der Bündelfokus BF entsteht auf der Spiegelfläche 10, wodurch sich höhere Anforderungen an die "Sauberkeit" derselben stellen und eine geringe Restrauheit der Spiegelfläche 10 gegeben sein muss.

Die Figur 6 zeigt einen von einer hier nicht im Detail dargestellten Lichtquelle 1 beleuchteten Lichtmodulator 115, der nacheinander durchgeschaltet, so dass zu jedem Zeitpunkt t1, t2, t3 ein fokussiertes Bündel in einer anderen lateralen Position besteht. Im Referenzstrahlengang ist ein Referenzreflektor 18 angeordnet, der aus einer Vielzahl von parallel zueinander angeordneten Drei-Planspiegel-Referenz-Endreflektoren 8.1, 8.2, 8.i ....aufgebaut ist, denen jeweils nacheinander in einem telezentrischen Strahlengang ein homozentrischen Bündel mit einem Bündelfokus BFV in der virtuellen Spiegelebene zugeordnet wird. Der optische Strahlengang mit dem Lichtmodulator 1.15 und dem Objektiv 4 mit einer geringen numerischen Apertur von 0,05 ist hierbei so aufgebaut, dass die Bündelfoki jeweils zum Zeitpunkt ti in einen Drei-Planspiegel-Referenz-Endreflektoren 8.i gelangen und dort eine Lateral-Shear mit dem Betrag delta_qi erfahren, wobei sich dieser Betrag delta_q von Position zu Position aufgrund einer Präzisionsfertigung des Referenzreflektors 18 möglichst wenig ändern soll. So können zeitlich nacheinander auf dem Objekt 7 unterschiedliche Objektpositionen punktweise angefahren werden und die entstehenden räumlichen Interferogramme mittels eines großflächigen gerasterten Detektors 12 aufgenommen werden. Die Lichtquelle mit dem Lichtmodulator 115 wird hierbei sequenziell lateral durchgeschaltet. Der wellenoptische Schärfentiefebereich beträgt Tz.

Die Figur 7 zeigt einen Referenzreflektor 118 von Drei-Planspiegel-Referenz-Endreflektoren 8.i in linienhafter Struktur auf der Basis einer Anordnung von Planspiegeln in M-Form. Auch hier erfolgt die Beleuchtung zeitsequentiell.

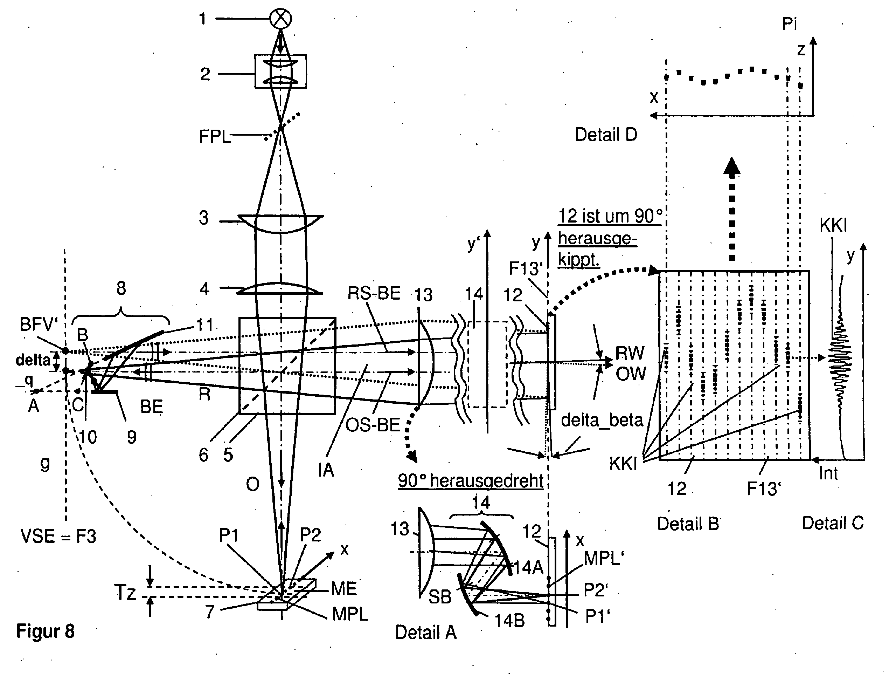

Die Figur 8 zeigt einen Sensor auf der Basis eines Michelson-Interferometers für ein relativ großes Objektfeld, also am oberen Ende der mikroskopischen Skala. Das Licht von einer spektral vergleichsweise breitbandigen Lichtquelle 1 im nah-infraroten Bereich wird mittels einer Strahlformungsoptik 2 in eine Fokuspunkt-Linie FPL gebracht, wobei hier auch die Anordnung eines Spaltes möglich ist. Das Licht der Fokuspunkt-Linie FPL wird durch ein Objektiv 3 kollimiert und durch ein Fokussierobjektiv 4 mit einer numerischen Apertur von 0,05 wieder fokussiert und gelangt anschließend in ein Michelson-Typ-Interferometer mit einem Strahlteiler 5 und einer Strahlteilerfläche 6, wo das Licht in ein Referenzbündel R und ein Objektbündel O aufgespalten wird. Das den Strahlteiler 5 geradlinig passierende Objektlichtbündel O trifft fokussiert auf die Objektoberfläche des Objekts 7, die sich hier nahezu in der Messebene ME befindet und bildet eine Messpunkt-Linie MPL. Die Objektoberfläche soll sich innerhalb des wellenoptischen Schärfentiefebereiches des fokussierten Lichts Tz befinden. Das vom Objekt 7 zurückkehrende Licht wird an der Strahlteilerfläche 6 durch Reflexion über den Interferometer-Ausgang IA in Richtung des gerasterten Detektors 12 gelenkt. Dargestellt ist der Objekthauptstrahl OS-BE in der Ebene BE.

Das Licht, welches nach dem Eintritt in das Interferometer am Strahlteiler 5 in den Referenzstrahlengang R reflektiert wird, gelangt auf einen Drei-Planspiegel-Referenz-Endreflektor 8, der aus den drei Planspiegeln 9, 10 und 11 besteht.

Am Drei-Planspiegel-Referenz-Endreflektor 8 erfährt jeder Fokuspunkt des einfallenden Referenzlichtes eine Lateral-Shear vom Betrag delta_q. Der Ort der Entstehung der Lateral-Shear ist die virtuelle Spiegelebene VSE.

Die virtuelle Spiegelebene VSE stellt hierbei, bezogen auf den Interferometer-Ausgang IA, eine zur Messebene ME des Objektstrahlenganges optisch konjugierte Ebene dar, was durch die Justierung des Interferometers gegeben ist. Das am Drei-Planspiegel-Referenz-Endreflektor 8 reflektierte Referenzlicht, dargestellt durch den Referenzhauptstrahl RS-BE verlässt das Interferometer nach dem geradlinigen Passieren des Strahlteilers 5 mit der Strahlteilerfläche 6 über den Interferometer-Ausgang IA.

Dem vergleichsweise langbrennweitigen Objektiv 13, mit einer Brennweite von 120 mm ist ein Zylinder-Objektiv 14 mit der Zylinderachse y' nachgeordnet. Der gerasterte Detektor 12 steht in der Brennebene F13' des Objektivs 13, welche auch die Fourier-Ebene dieses Objektivs 13 darstellt. Zur Bestimmung der Lage der Fourier-Ebene wird hier allein die Brechkraft des Objektivs 13 betrachtet. Dabei steht die Messebene ME zumindest näherungsweise in der Fokalebene F13 des Objektivs 13. Nach dem Objektiv 13 schließen eine Referenzwelle RW und eine Objektwelle OW jeweils den Winkel delta_beta ein, der sich als Quotient aus dem Betrag delta_q der Lateral-Shear und der Brennweite f13' im Bogenmaß ergibt. Der Winkel delta_beta ist hier wegen der Invarianz des Betrages delta_q der Lateral-Shear als konstant anzusehen und damit auch die Interferenzstreifenbreite dS, die sich für die Schwerpunktwellenlänge Lambda_schwer zumindest näherungsweise aus

$$dS = (Lambda\_schwer * f') / delta\_q \hspace{4cm} (3)$$

ergibt.

Im Detail A ist die Zylinderspiegel-Baugruppe 14 dargestellt, die aus den Zylinderspiegeln 14a und 14b besteht, und welche die Messpunkte P1 und P2 in der Messebene ME durch Strahlenbüschel in die Messpunktbilder P1' und P2' auf dem gerasterten Detektor 12 im Zusammenwirken mit dem Objektiv 13 abbildet. Durch die resultierende Brechkraft des Objektivs 13 und der Zylinderoptik 14 sind die Messebene ME und die Ebene des gerasterten Detektors 12 durch Strahlenbüschel, welche durch die Zylinderspiegel-Baugruppe 14 fokussiert werden, optisch konjugiert.

Das Detail B stellt die Ebene des gerasterten Detektors 12 mit den räumlichen Kurzkohärenz-Interferogrammen KKI der einzelnen Messpunkte der Messpunkt-Linie MPL dar.

Das Detail C zeigt das räumliche interferogramm eines Messpunktes Pi und das Detail D stellt ein aus den räumlichen Kurzkohärenz-Interferogrammen punktweise errechnetes Profil z(x) des Objekts 7 entlang der Messpunktlinie MPL dar.

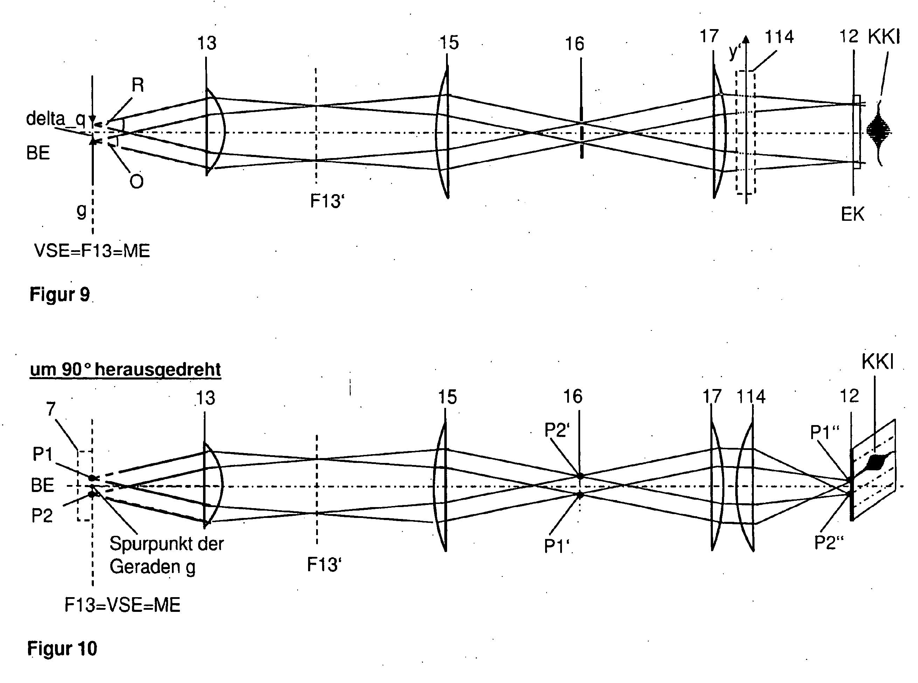

Die Figur 9 zeigt einen hinsichtlich des Interferometers entfalteten Strahlengang mit der Lateral-Shear vom Betrag delta_q und einer nachgeordneten Zylinder-Optik 114. Diese dient der Bildung eines Stapels von räumlichen Kurzkohärenz-Interferogrammen auf dem gerasterten Detektors 12. Die Ebene des gerasterten Detektors 12 ist dabei optisch konjugiert zur Brennebene F13' des Objektivs 13 durch die rotationssymmetrischen Objektive 15 und 17. Gleichzeitig besteht eine optische Konjugation zur Ebene des Doppelspalts 16 und zur Messebene ME durch die Abbildung von Strahlenbüscheln durch die Zylinder-Optik 114. Dabei ist die Zylinder-Optik 114 chromatisch und hinsichtlich der Verzeichnung gut korrigiert. Die Achse y' der Zylinderoptik 114 liegt parallel zur Ebene BE und auch parallel zur Geraden g im Schnitt von der Bezugsebene BE und der virtuellen Spiegelebene VSE.

Die Figur 10 stellt eine um 90° gedrehte Ansicht dar. Es ist die optische Konjugation der Objektpunkte P1, P2 vom Objekt 7 sowie P1', P2' und P1", P2" in der Detektorebene erkennbar.

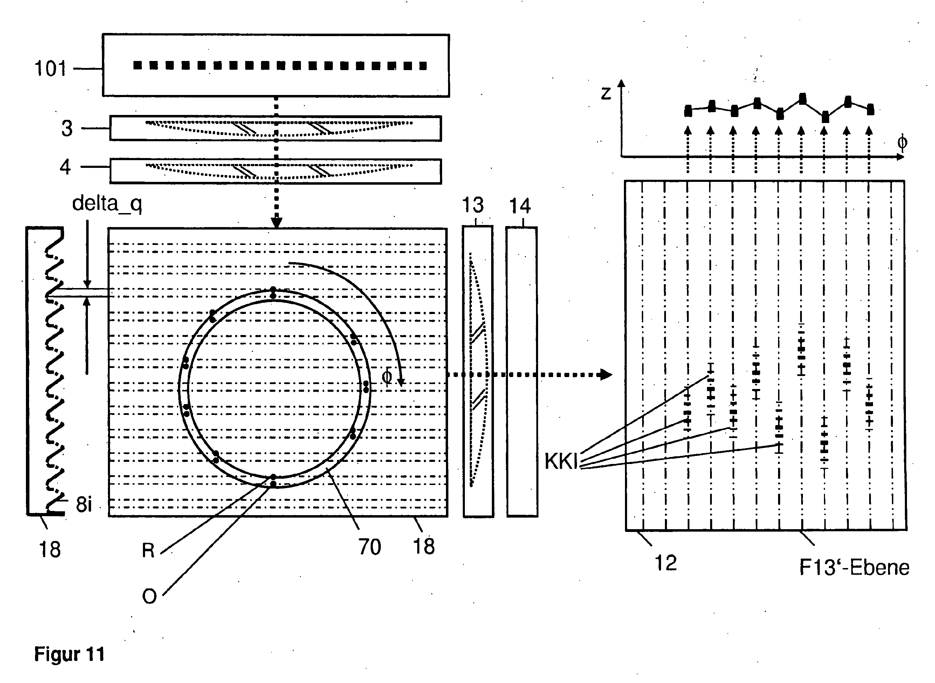

Die Figur 11 zeigt eine Anordnung, bei der in einem Objektfeld verschiedene Messpunkte räumlich adressiert werden können. Das Licht von einer Quelle kurzkohärenter Strahlung 101 mit Strahlformungsoptik und räumlichem Lichtmodulator passiert die Objektive 3 und 4 und tritt in das Michelson-Interferometer ein. Dargestellt ist hier ein Array 18 von linienhaften Drei-Planspiegel-Referenz-Endreflektoren 8.i, welches im Referenzstrahlengang angeordnet ist. Das Objekt 70, hier eine Dichtscheibe zur Ebenheitsprüfung, wird gleichzeitig mit einer Anzahl von Lichtpunkten zur Ebenheitsmessung beleuchtet, wobei hier zu jedem Messpunkt jeweils ein Referenzlichtpunkt R und ein Objektlichtpunkt O gehören, die ein Paar kohärenter Lichtpunkte bilden, aus welchen jeweils ein räumliches Interferogramm erzeugt wird. Nach Abbildung gemäß des Strahlenganges nach Figur 8 entsteht in der Ebene des Detektors 12, der Fourier-Ebene F13', ein Stapel von räumlichen Kurzkohärenz-Interferogrammen KKI, aus denen die Ebenheitsabweichung über dem Winkel φ errechnet werden kann. Voraussetzung ist eine Kalibrierung des Messsystems, beispielsweise mit einem Planspiegel in der Objektposition.

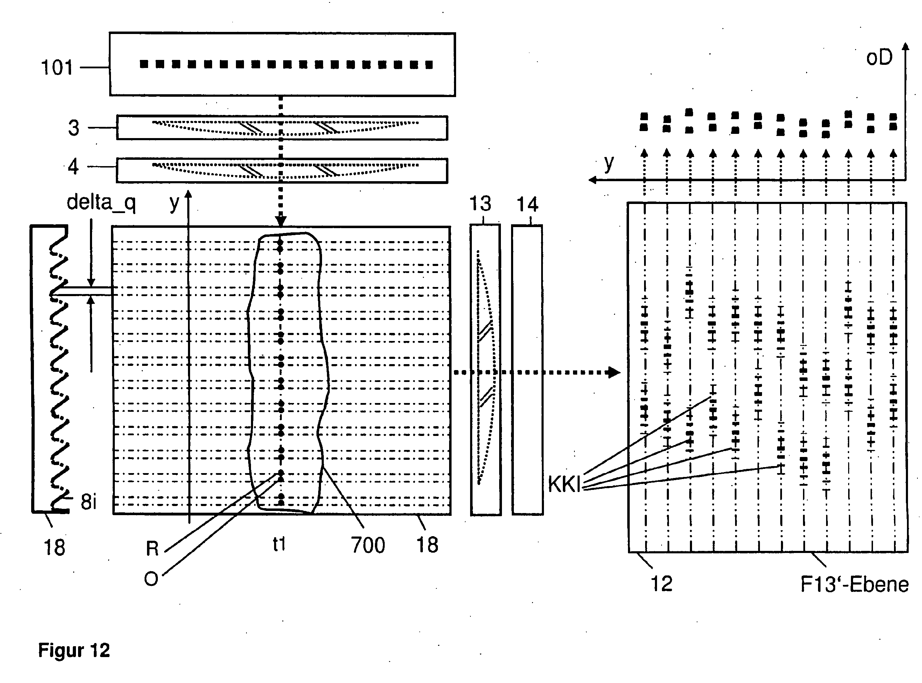

Die Figur 12 zeigt ein biologisches Schichtenobjekt 700. Das Schichtenobjekt 700 wird gleichzeitig mit einer Anzahl von Lichtpunkten zum Zeitpunkt t1 beleuchtet. Es entstehen an jeder Schicht Reflexionen, die zu kurzkohärenten räumlichen Interferogrammen führen. Nach Abbildung gemäß des Strahlenganges nach den Figuren 9 und 10 entsteht in der Ebene des Detektors 12, der Fourier-Ebene F13', ein Stapel von Paaren von räumlichen Kurzkohärenz-Interferogrammen KKI, aus denen die optische Dicke oD des biologischen Schichtenobjekts 700 über einer Lateralkoordinate bestimmt werden kann.

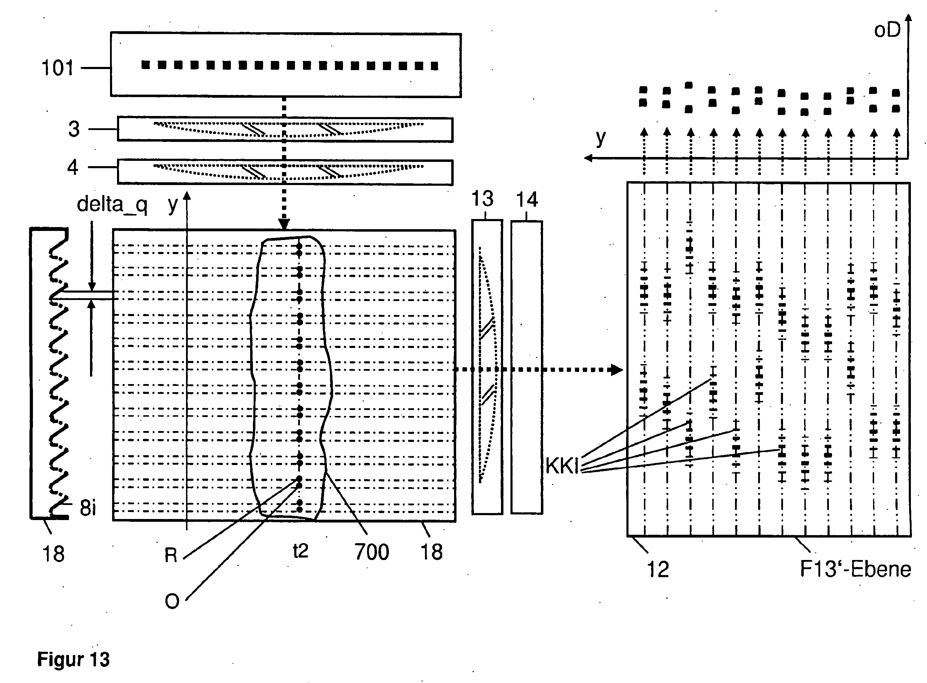

In der Figur 13 ist durch die Quelle kurzkohärenter Strahlung 101 mittels Steuerung des räumlichem Lichtmodulators zum Zeitpunkt t2 ein anderer Bereich des biologischen Schichtenobjekts 700, also ein lateral etwas verschobener Bereich entlang einer Linie, adressiert. So kann der Verlauf der optischen Dicke oD des biologischen Schichtenobjekts 700 ortsaufgelöst, hier entlang der Koordinate y, bestimmt werden. Voraussetzung ist auch hier eine Kalibrierung des Messsystems.

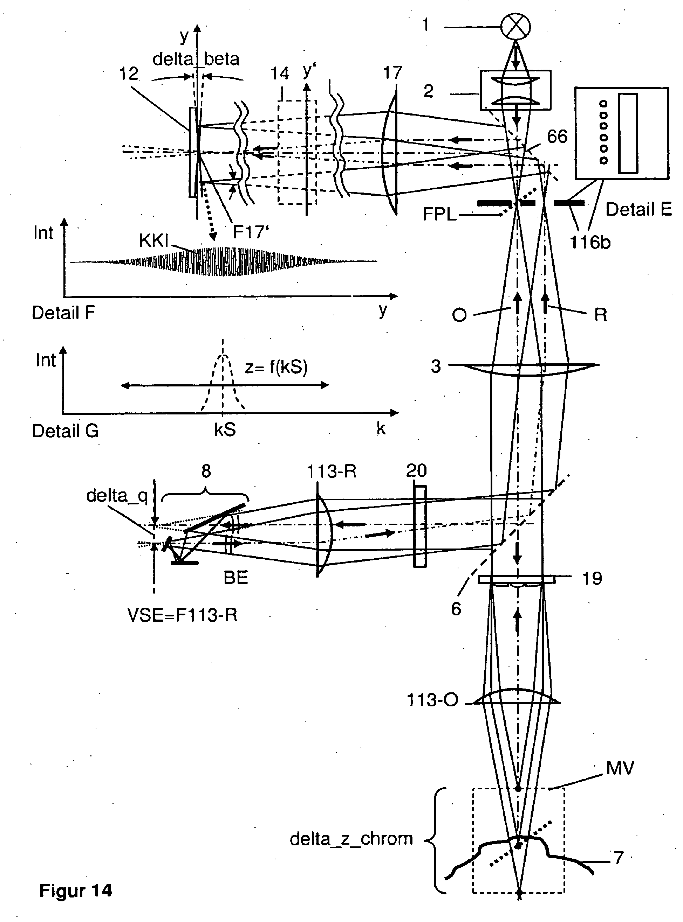

In der Figur 14 ist ein Linnik-Typ-Interferometer für die Anwendung als Mehrpunkt-Sensor dargestellt. Das Licht von einer spektral vergleichsweise breitbandigen Lichtquelle 1 im nah-infraroten Bereich wird nach dem Passieren eines Strahlteilers 6 - zur späteren Auskopplung des Lichts - mittels einer Strahlformungsoptik 2 in eine Fokuspunkt-Linie FPL gebracht. In der Ebene der Fokuspunkt-Linie FPL befindet sich eine asymmetrische konfokale Multi-Doppel-Blende 116b, die im Detail E dargestellt ist. Das Licht der Foki der Fokuspunkt-Linie FPL tritt durch die Pinholes im linken Bereich der Blende 116b hindurch. Das Objektiv 3 kollimiert die Bündel von den einzelnen Pinholes, die anschließend in das Linnik-Typ-Interferometer mit einer numerischen Apertur von 0,25 der Objektive 113-R und 113-O eintreten. Die verlustarme Strahlteilerschicht 6 dieses Interferometers ist dabei hochtransmissiv, hier beträgt der Transmissionsgrad 85%, damit auch schwach reflektierende Objekte gut vermessen werden können.

Im Objektstrahlengang dieses Linnik-Typ-Interferometers ist hier ein brechkraftkompensiertes Objektivsystem 19 mit einem diffraktiv-optischen Element zur chromatischen Tiefenaufspaltung von Foki zur Vergrößerung des Tiefenmessbereiches eingesetzt. Das Objektivsystem 19 besitzt die Brechkraft null für die Schwerpunktwellenlänge im genutzten Spektrum, also verhält sich das Objektivsystem 19 für die Schwerpunktwellenlänge hinsichtlich der Brechkraft wie eine Planparallelplatte. Für Wellenlängen ober- und unterhalb der Schwerpunktwellenlänge ergeben sich somit divergente beziehungsweise konvergente Strahlenbündel, wenn für die Schwerpunktwellenlänge ein Bündel mit dem Fokuspunkt im Unendlichen besteht. Durch die chromatische Tiefenaufspaltung soll der Tiefenmessbereich des Systems hier etwa um Faktor 5 gegenüber der wellenoptischen Schärfetiefe vergrößert werden, die sich aus der numerischen Apertur und dem genutzten Spektrum ergibt. Im Referenzstrahlengang ist ein Kompensationselement 20 zur Angleichung des optischen Gangunterschiedes angeordnet.

Die Auswertung der räumlichen Interferogramme erfolgt hier durch eine Schwerpunktauswertung des durch die chromatisch-konfokale Diskriminierung erheblich verbreiterten räumlichen Interferogramms KKI, welches aber immer noch ein Kurzkohärenz-Interferogramm darstellt. Das vom Objekt 7 zurückkehrende Licht wird an der asymmetrischen konfokalen Multi-Doppel-Blende 116b im linken Bereich durch die Pinholes konfokal diskriminiert. Das nach Reflexion am Drei-Planspiegel-Referenz-Endreflektor 8 aus dem Interferometer zurückkehrende Licht passiert den vergleichsweise zu den Pinholes großen rechten Bereich der konfokalen Multi-Doppel-Blende 116b. Objekt- und Referenzlicht werden nach Passieren der konfokalen Multi-Doppel-Blende 116b mittels Strahlteiler 66 in den Detektionsstrahlengang ausgekoppelt. Mittels der Abbildungsstufe, bestehend aus dem rotationssymmetrischen Objektiv 17 und der Zylinderoptik 14, erfolgt die Erzeugung eines Stapels von räumlichen Interferogrammen, von denen der Schwerpunkt der Einhüllenden ausgewertet wird. Das Detail F zeigt ein einzelnes räumliches Interferogramm KKI, von dem der Schwerpunkt der Einhüllenden ausgewertet wird. Hierbei ist jedoch die Ortsfrequenz im räumlichen Kurzkohärenz-Interferogramm KKI auch von der Tiefenlage des Objekts 7 abhängig, da durch die konfokale Ausblendung von Spektralanteilen sich die Schwerpunktlänge verändert. Dies muss bei der Auswertung beachtet werden.

Deshalb bietet sich hier, also im Fall einer chromatischen Tiefenaufspaltung von Foki im Objektstrahlengang, alternativ zur Schwerpunktauswertung der Einhüllende des räumlichen Kurzkohärenz-Interferogramms KKI an, eine Fourier-Transformation der Intensitätsverteilung des räumlichen Interferogramms durchzuführen, um aus dem räumlichen Kurzkohärenz-Interferogramm KKI, s. a. Detail F, das Spektrum des konfokal diskriminierten, also des hindurch gelassenen Lichtes zu bestimmen. Dies ist im Detail G dargestellt. Die Schwerpunktwellenzahl kS, mit kS=2Pi/Schwerpunktwellenlänge, dieses Spektrum hängt in jedem Messpunkt - aufgrund der chromatischen Tiefenaufspaltung im Objektstrahlengang - direkt von der Tiefe z eines angemessenen Objektpunktes ab. Dies entspricht dem chromatisch-konfokalen Ansatz, der hier über die Bestimmung der Schwerpunktwellenzahl kS mittels einer schnellen Fourier-Transformation der Intensitätsverteilung von räumlichen Interferogrammen zur Anwendung kommt. Der numerische Zusammenhang zwischen der Schwerpunktwellenzahl kS und der Tiefe z eines angemessenen Objektpunktes kann im Ergebnis einer Sensor-Kalibrierung in einer Tabelle abgespeichert werden und mittels Rechner im Messvorgang zur Verfügung gestellt werden.

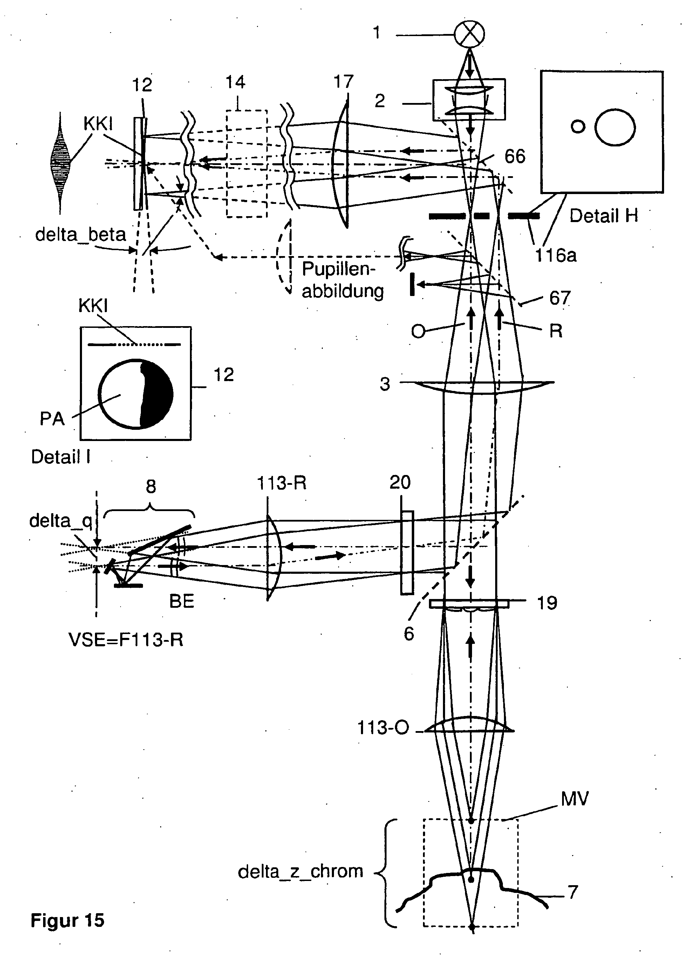

Die Figur 15 stellt ein Linnik-Typ-Interferometer für die Anwendung als Punktsensor dar. Das Detail H zeigt die hier verwendete konfokale Doppel-Blende 116a mit nur zwei Öffnungen. Der Strahlverlauf entspricht dem in Figur 14 und im Detail E beschriebenen. Jedoch wird hier auch die Pupillenausleuchtung PA detektiert. Das wird durch einen Strahlteiler 67 möglich gemacht.

Das Detail I in Figur 15 stellt das räumliche Interferogramm und die Pupillenausleuchtung auf dem gerasterten Detektor 12 für einen Messpunkt gleichzeitig dar. Bei einem Punktsensor kann hier eine Pupillenbeobachtung mit geblocktem Referenzstrahlengang auf den gleichen gerasterten Detektor 12 erfolgen. Das ist in Echtzeit möglich. Im oberen Bereich des Detektors 12 ist ein räumliches Kurzkohärenz-Interferogramm (KKI) und im unteren Bereich die Pupillenausleuchtung PA erfasst. Diese beinhaltet wesentliche Informationen über die Charakteristik des angemessenen Objektpunkts. Die Pupillenabbildung erfolgt jedoch hier ohne eine Abbildung über die Zylinderoptik 14 mit geeigneten optischen Mitteln auf den Detektor 12.

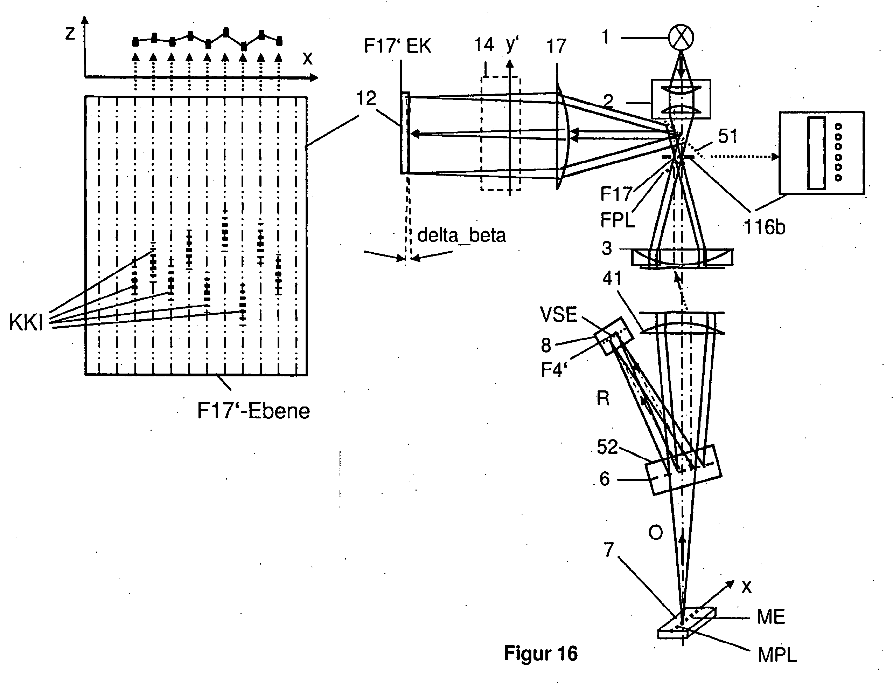

Die Figur 16 zeigt eine Anordnung auf der Basis eines Michelson-Typ-Interferometers für die Multi-Punkt-Abtastung entlang einer Linie. Außerdem weist das System einen großen Winkel zwischen Objekt- und Referenzarm auf, um eine vergleichsweise schlanke Sensorbauweise zu ermöglichen.

Das Licht von einer spektral vergleichsweise breitbandigen Lichtquelle 1 im nah-infraroten Bereich wird mittels einer Strahlformungsoptik 2 in eine Fokuspunkt-Linie FPL gebracht und passiert die Blendenanordnung 116b durch die Pinholes. Zuvor erfolgte noch ein Durchgang durch einen Strahlteiler 51, welcher der späteren Auskopplung dient. Das Licht der Fokuspunkt-Linie FPL wird nach der Blendenanordnung 116b durch ein Objektiv 3 kollimiert und durch ein Fokussierobjektiv 4 mit einer numerischen Apertur von 0,05 wieder fokussiert und gelangt anschließend in das Michelson-Typ-Interferometer mit einem vergleichsweise schwach gekippten Doppelplatten-Strahlteiler 51 und einer Strahlteilerfläche 6, wo das einfallende Licht in ein Referenzbündel R und ein Objektbündel O aufgespalten wird. Das vom Objekt 7 und vom Drei-Planspiegel-Referenz-Endreflektor 8 zurückkommende Licht gelangt über den Doppelplatten-Strahlteiler 52 wieder in Richtung Blendenanordnung 116b. Hier wird das Objektlicht durch die Pinholes im rechten Teil der Blendenanordnung 116b konfokal diskriminiert. Das Referenzlicht passiert die vergleichsweise große Öffnung im linken Teil der Blendenanordnung 116b ohne konfokale Diskriminierung. Am Strahlteiler 51 erfolgt die Auskopplung in Richtung Detektion über das Objektiv 17 und die Zylinder-Optik 14, welche zur Ausbildung von linienhaften Kurzkohärenz-Interferogrammen KKI in der Fourier-Ebene des Objektivs 17 führt, die mittels gerastertem Detektor 12 aufgenommen werden, aus denen das Profil über die Koordinate x errechnet werden kann.

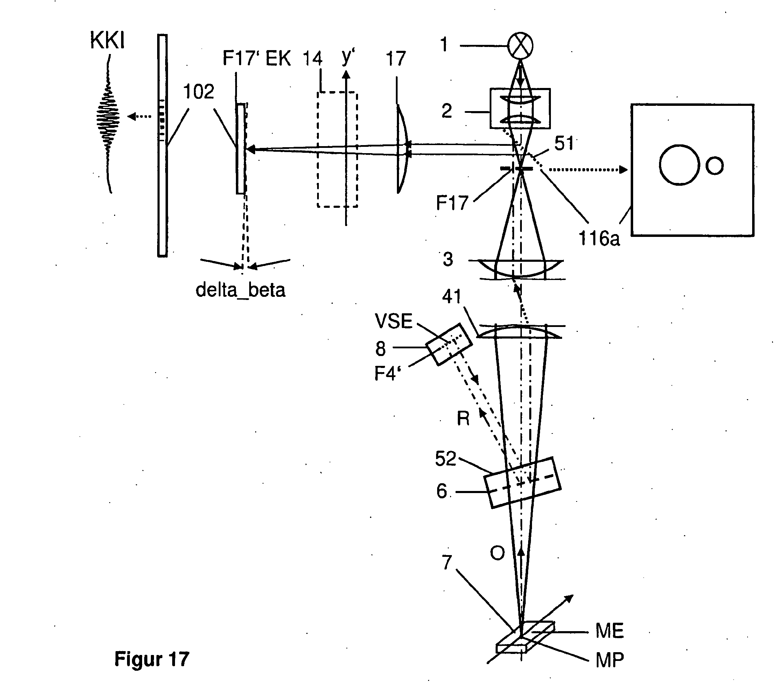

Die Figur 17 stellt eine Anordnung auf der Basis eines Michelson-Typ-Interferometers für die Ein-Punkt-Abtastung dar. Das Licht von einer spektral vergleichsweise breitbandigen Lichtquelle 1 im nah-infraroten Bereich wird mittels einer Strahlformungsoptik 2 in einen Fokuspunkt gebracht und passiert die Blendenanordnung 116a durch das Pinhole. Zuvor erfolgte noch ein Durchgang durch einen Strahlteiler 51, welcher der späteren Auskopplung dient. Das Licht des Fokuspunktes wird nach der Blendenanordnung 116a, die ein Pinhole und eine vergleichsweise große Öffnung aufweist, durch ein Objektiv 3 kollimiert und durch ein Fokussierobjektiv 4 mit einer numerischen Apertur von 0,08 wieder fokussiert und gelangt anschließend in das Michelson-Typ-Interferometer mit einem vergleichsweise schwach gekippten Doppelplatten-Strahlteiler 51 und einer Strahlteilerfläche 6, wo das einfallende Licht in ein Referenzbündel R und ein Objektbündel O aufgespalten wird. Das vom Objekt 7 und vom Drei-Planspiegel-Referenz-Endreflektor 8 zurückkommende Licht gelangt über den Doppelplatten-Strahlteiler 52 wieder in Richtung Blendenanordnung 116a. Hier wird das Objektlicht durch das Pinhole im rechten Teil der Blendenanordnung 116b konfokal diskriminiert. Das Referenzlicht passiert die vergleichsweise große Öffnung im linken Teil der Blendenanordnung 116a ohne konfokale Diskriminierung. Am Strahlteiler 51 erfolgt die Auskopplung in Richtung Detektion über das Objektiv 17 und die Zylinder-Optik 14, welche zur Ausbildung eines einzelnen, linienhaften Kurzkohärenz-Interferogramms KKI in der Fourier-Ebene F17' des Objektivs 17 führt, das mittels gerastertem Zeilen-Detektor 102 aufgenommen wird, aus dem ein Messpunkt MP auf dem Objekt 7, der eine Abstandsinformation enthält, berechnet werden kann.

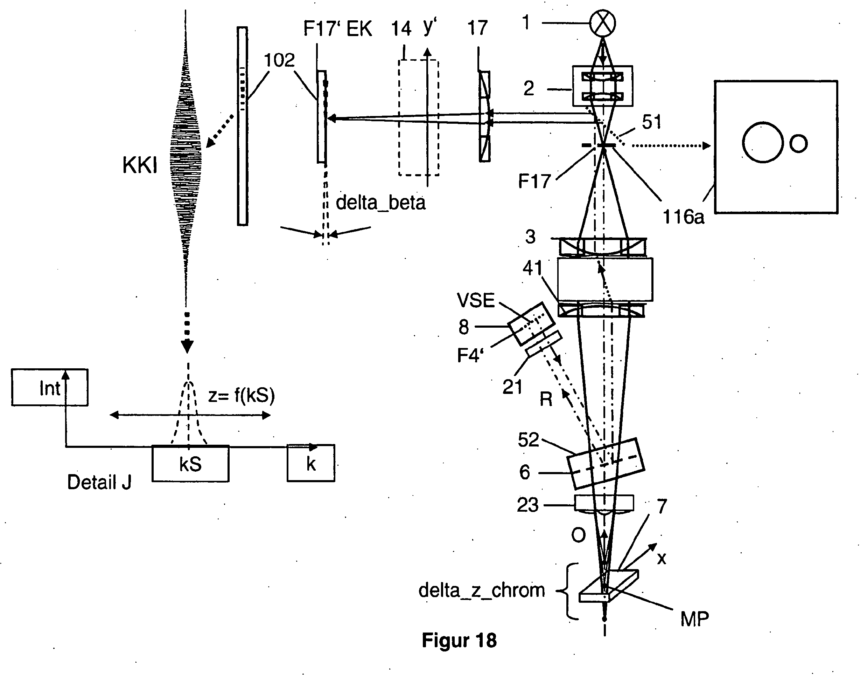

Die Figur 18 stellt eine Anordnung auf der Basis eines Michelson-Typ-Interferometers für die Ein-Punkt-Abtastung dar. Das Licht von einer spektral vergleichsweise breitbandigen Lichtquelle 1 im nah-infraroten Bereich wird mittels einer Strahlformungsoptik 2 in einen Fokuspunkt gebracht und passiert die Blendenanordnung 116a durch das Pinhole. Zuvor erfolgte noch ein Durchgang durch einen Strahlteiler 51, welcher der späteren Auskopplung dient. Das Licht des Fokuspunktes wird nach der Blendenanordnung 116a, die ein Pinhole und eine vergleichsweise große Öffnung aufweist, durch ein Objektiv 3 kollimiert und durch ein vergleichsweise langbrennweitiges Fokussierobjektiv 4 mit einer numerischen Apertur von 0,1 wieder fokussiert und gelangt anschließend in das Michelson-Typ-Interferometer mit einem vergleichsweise schwach gekippten Doppelplatten-Strahlteiler 52 und einer Strahlteilerfläche 6, wo das einfallende Licht in ein Referenzbündel R und ein Objektbündel O aufgespalten wird. Im Objektstrahlengang ist ein diffraktiv-optisches Phasenelement 23 in Form einer Fresnel-Linse mit positiver Brechkraft angeordnet. Es erfolgt im Objektraum eine Tiefenaufspaltung von Foki im Tiefenbereich delta_z_chrom, wodurch der Tiefenmessbereich etwa auf 400 $\mu$m vergrößert wird. Das vom Objekt 7 und vom Drei-Planspiegel-Referenz-Endreflektor 8 zurückkommende Licht gelangt über den Doppelplatten-Strahlteiler 52 wieder in Richtung Blendenanordnung 116a. Hier wird das Objektlicht durch das Pinhole im rechten Teil der Blendenanordnung 116b konfokal diskriminiert, wobei nur die Spektralanteile des Lichts das Pinhole passieren können, die zuvor scharf auf dem Objekt 7 abgebildet waren. Das Referenzlicht passiert die vergleichsweise große Öffnung im linken Teil der Blendenanordnung 116a ohne konfokale Diskriminierung. Am Strahlteiler 51 erfolgt die Auskopplung in Richtung Detektion über das Objektiv 17 und die Zylinder-Optik 14, welche zur Ausbildung eines einzelnen, linienhaften Kurzkohärenz-Interferogramms KKI in der Fourier-Ebene F17' des Objektivs 17 führt, das mittels gerastertem Zeilen-Detektor 102 aufgenommen wird, aus dem ein Messpunkt MP auf dem Objekt 7, der eine Abstandsinformation enthält, berechnet werden kann. Dazu wird das vergleichsweise breite linienhafte Kurzkohärenz-Interferogramm KKI einer schnellen Fourier-Transformation unterzogen, um die Schwerpunktwellenzahl kS, siehe Detail J, zu bestimmen, aus der die Tiefeninformation über den Messpunkt MP gewonnen wird. Alternativ kann auch eine Bestimmung des Schwerpunktes des linienhaften Kurzkohärenz-Interferogrammes KKI zur Bestimmung der Tiefeninformation über den Messpunkt MP durchgeführt werden.

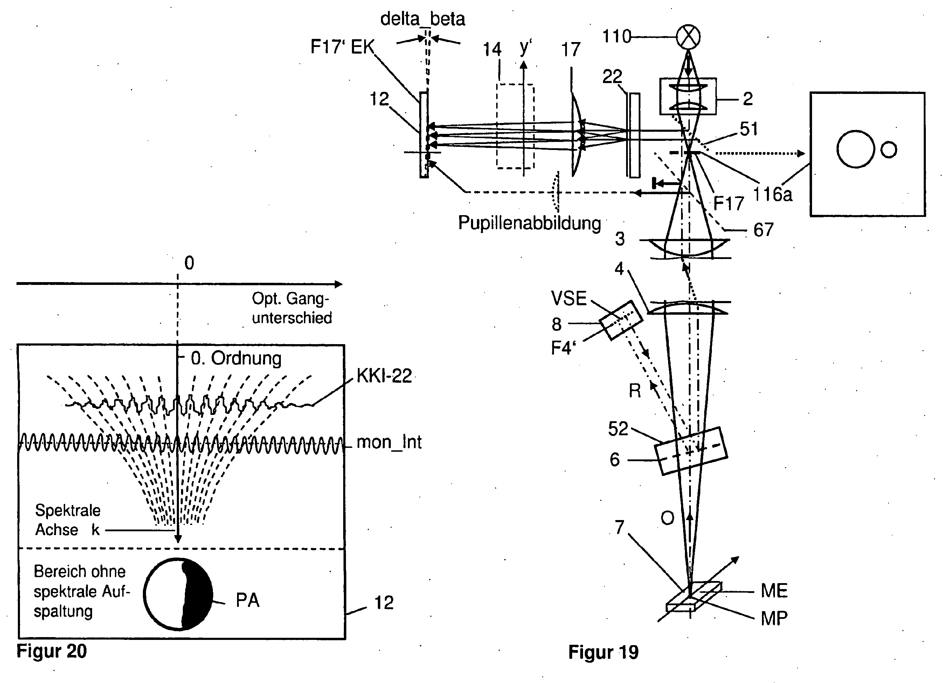

Die Figur 19 stellt eine Anordnung auf der Basis eines Michelson-Typ-Interferometers für die Ein-Punkt-Abtastung dar, die auf der Darstellung in Figur 17 aufbaut. Zusätzlich ist in der Lichtquellenbaugruppe 110 eine hier nicht im Detail dargestellte wellenlängenstabilisierte Laserdiode integriert. Zusätzlich befinden sich im Detektionsstrahlengang Mittel zur spektroskopischen Aufspaltung, hier in Form einen Phasengitters 22, wobei die Achse der spektralen Aufspaltung hier in der Zeichenebene und parallel zur y-Achse liegt. So kommt es auf dem Detektor zur lateralen Aufspaltung. Figur 20 zeigt die entstehenden Interferenzmuster, auch als Müllersche Streifen oder als Tolansky-Streifen bekannt. Das räumliche Interferogramm KKI-22 stellt eines von vielen linienhaften Kurzkohärenz-Interferogrammen auf dem gerasterten Detektor 12 dar. Das räumliche Interferogramm mon_Int stammt von der Laserdiode und dient zur höchstgenauen Phasenauswertung, während die aufgespreizten Kurzkohärenz-Interferogramme in der Berechnung auf der Basis eines Multiwellenlängen-Ansatzes die nullte Streifenordnung liefern und damit die absolute Tiefen- oder Abstandsinformation für den Messpunkt MP auf dem Objekt 7. Zusätzlich wird auch noch die Pupillenausleuchtung detektiert, um das Winkelspektrum des angemessenen Objektpunktes zu gewinnen. Dies gibt Aufschluss über weitere Merkmale der Oberfläche im Messpunkt MP.

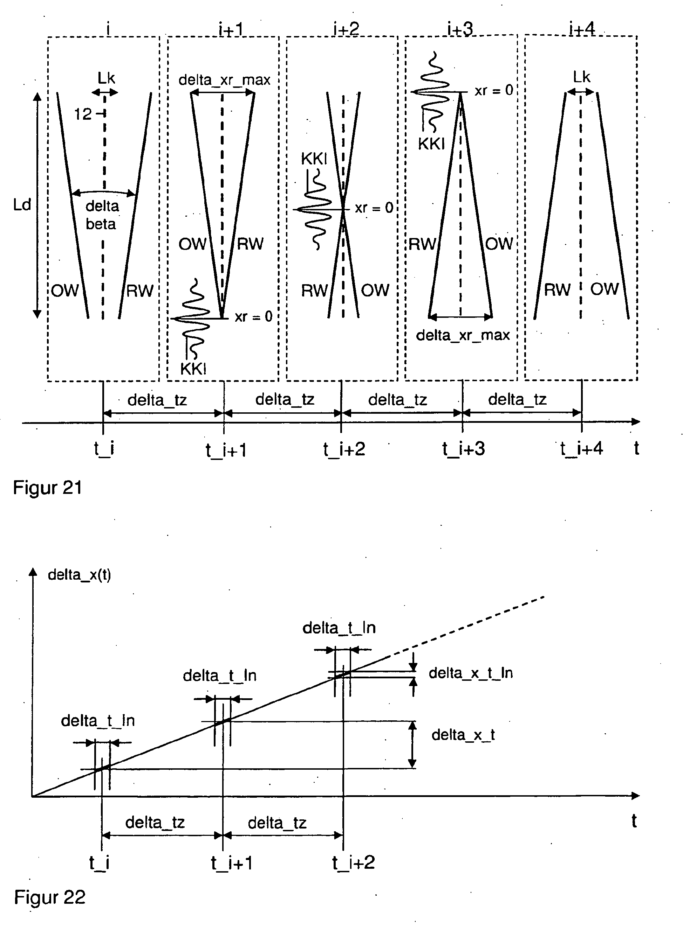

Die Figur 21 zeigt jeweils eine Objektwellenfront OW und eine Referenzwellenfront RW zu fünf unterschiedlichen Zeitpunkten t_i bis t_i+4, die jeweils einer Kurzkohärenz-Lichtquelle nach dem Passieren des Ausgangs eines Zweistrahl-Interferometers zur Objekterfassung entstammen. Die Kohärenzlänge Lk der Strahlung ist hierbei deutlich kleiner als die räumliche Änderung des optischen Gangunterschieds auf dem gerasterten Detektor im räumlichen Interferogramm. In der Figur 21 ist im Interferometer sukzessive der optische Laufweg der Objektwelle in vier Schritten immer weiter verkleinert dargestellt, was sich aus fünf unterschiedlichen Positionen eines optisch angetasteten Objekts in einem hier nicht dargestellten Interferometer zu den fünf unterschiedlichen Zeitpunkten t_i bis t_i+4 ergibt. Die Lagen der Wellenfronten sind hierbei über der Länge Ld des gerasterten Detektors jeweils zu den verschiedenen Zeitpunkten t_i bis t_ i+4 in den Kästchen i bis i+4 als Kurzzeitaufnahme abgebildet und wurden hier jeweils zentriert dargestellt. Im Kästchen i zum Zeitpunkt t_i sind die Wellenfronten gleicher Laufzeit - also die Objekt- und die Referenzwelle - um mehr als die Kohärenzlänge Lk voneinander separiert, so dass keine Interferenz zu detektieren ist, wobei der optische Laufweg der Objektwelle größer als der der Referenzwelle ist. Der Gleichanteil des Interferogramms ist hier nicht dargestellt. Zum Zeitpunkt t_i+1, dargestellt im Kästchen i+1, beträgt am unteren Ende des gerasterten Detektors der optische Gangunterschied xr = 0, so dass ein Kurzkohärenz-Interferogramm KKI dort mit seinem Modulationsmaximum entsteht und sicher detektiert werden kann. Am oberen Ende des gerasterten Detektors tritt die maximale Änderung des optischen Gangunterschiedes delta_xr_max auf dem Detektor auf, die hier etwa 20 Schwerpunkt-Wellenlängen der detektierten Strahlung beträgt.

Die Änderung des optischen Gangunterschiedes delta_xr_max über der Länge Ld des Detektors soll mindestens eine Schwerpunktwellenlänge betragen, so dass eine Phasenauswertung im Intervall +/- 180° für einen Messpunkt gut möglich ist, was bei optisch glatten Objekten in vielen Fällen ausreichend ist. In diesem Fall werden nur wenige Pixel des gerasterten Detektors zur Gewinnung der Phaseninformation eines Messpunktes genutzt. Umso größer kann hierbei die Anzahl der in einen Kamerabild erfassten Messpunkte sein.

Im Kästchen i+2 zum Zeitpunkt t_i+2 beträgt in der Mittenposition des gerasterten Detektors der optische Gangunterschied xr = 0, so dass ein Kurzkohärenz-Interferogramm KKI hier mit seinem Modulationsmaximum und auch mit den relevanten Nebenmaxima zu detektieren ist.

Der optische Laufweg der Objektwelle im Interferometer ist im Kästchen i+3 kleiner als der der Referenzwelle, nur am oberen Ende des gerasterten Detektors beträgt der optische Gangunterschied xr = 0, so dass ein Kurzkohärenz-Interferogramm KKI dort mit seinem Modulationsmaximum detektiert werden kann. Aufgrund des noch kleineren Laufweges der Objektwelle im Interferometer sind zum Zeitpunkt t_i+4 die Objektwellenfront OW und die Referenzwellenfront gleicher Laufzeit im Kästchen i+4 um mehr als die optische Kohärenzlänge Lk voneinander entfernt, so dass auch hier - wie zum Zeitpunkt t_i - keine Interferenz zu detektieren ist.

Die Figur 22 stellt den Zusammenhang zwischen delta_x(t), der zeitlichen Änderung des optischen Gangunterschieds im räumlichen Interferogramm in einem Punkt, sowie die Verhältnisse zwischen Stellzeit delta_tz und Integrationszeit des gerasterten Detektors delta_t_In dar. Die Integrationszeit delta_t_In ist deutlich kürzer als die Stellzeit delta_tz zwischen zwei Bildaufnahmen mittels gerastertem Detektor gewählt.

Die Figur 23 zeigt einen Sensor zur weitskaligen Abstandsmessung eines Objekts 7 auf der Basis eines Michelson-Interferometers mit einem makroskopischen Abbildungssystem.

Der Frequenzkamm-Laser 111 mit der einfachen optischen Länge L1 erzeugt zum Zeitpunkt t1 ein Vielstrahl-Interferenz-Spektrum im nah-infraroten Bereich mit Frequenzkamm-Charakteristik. Wie im Detail K dargestellt, bilden die transmittierten, schmalbandigen Spektralanteile dabei im Wellenzahlraum, dem k-Raum, einen Kamm mit äquidistanten Abständen Δk. Das Licht mit Spektralkamm-Charakteristik, welches die Lichtquelle 111 verlässt, wird mittels einer Strahlformungsoptik 2 in einen kleinen Fokusfleck FF gebracht, nachfolgend durch ein Objektiv 3 kollimiert und durch ein vergleichsweise gering-aperturiges Fokussierobjektiv 4 mit einer numerischen Apertur von 0,05 wieder fokussiert. Dieses Licht gelangt anschließend in ein Michelson-Typ-Interferometer mit einem Strahlteiler 5 und einer Strahlteilerfläche 6, wo es in ein Referenzbündel R und ein Objektbündel O aufgespalten wird.

Das Licht, welches nach dem Eintritt in das Interferometer an der Strahlteilerfläche 6 in den Referenzstrahlengang R reflektiert wird, gelangt auf einen Drei-Planspiegel-Referenz-Endreflektor 8.

Am Drei-Planspiegel-Referenz-Endreflektor 8 erfährt das einfallende Referenzstrahlenbündel eine Lateral-Shear vom Betrag delta_q, wird dort reflektiert und passiert den Strahlteiler 5 mit der Strahlteilerfläche 6. Das zurücck-ommende Referenzstrahlenbündel, dargestellt durch den Referenzhauptstrahl RHS, verlässt das Interferometer über den Interferometer-Ausgang IA, gelangt auf den gerasterten Detektor 12.

Das die Strahlteilerfläche 6 geradlinig passierende Objektlichtbündel O wird in den Zwischenfokus ZF fokussiert. Dieser Zwischenfokus ZF wird vom Spiegel-Objektiv 113 in den Messraum als Fokus FO mit dem wellenoptischen Schärfentiefebereiche DOV abgebildet. Der angetastete Punkt P der Objektoberfläche des Objekts 7 befindet sich zum Zeitpunkt t1 nahe am Fokus FO und innerhalb des wellenoptischen Schärfentiefebereiches DOV des fokussierten Lichts, welcher aufgrund der numerischen Apertur von 0,05 in der Größenordnung von wenigen 100 μm liegt. Zum Zeitpunkt t1 beträgt die optische Weglänge zum Objektpunkt P näherungsweise 4L1, also etwa das Vierfache der optischen Weglänge L1 der Lichtquelle 111 mit Frequenzkamm-Charakteristik.

Das vom angetasteten Punkt P der Objektoberfläche des Objekts 7 zurückkehrende Licht wird an der Strahlteilerfläche 6 durch Reflexion über den Interferometer-Ausgang IA in Richtung des gerasterten Detektors 12 gelenkt. Dargestellt ist hier der Objekthauptstrahl OHS. Auf dem Detektor 12 kommt es zur Überlagerung mit dem Licht aus dem Referenzstrahlengang. Dadurch kann ein räumliches Interferogramm auf dem gerasterten Detektor 12 mit zumindest näherungsweise konstanter Ortsfrequenz für die Schwerpunktwellenlänge entstehen. Die Verhältnisse bei der Interferenz entsprechen bei hinreichend guter Fokussierung zumindest näherungsweise denen im Youngschen Doppelspaltversuch mit zwei Pinholes. Auf dem gerasterten Detektor 12 sind hier eine Objektwellenfront OW und eine Referenzwellenfront RW dargestellt.

Der angetastete Punkt P der Objektoberfläche des Objekts 7 befindet sich im wellenoptischen Schärfentiefe-Bereich DOV. Jedoch ist der optische Gangunterschied zum Zeitpunkt t1 zwischen den beiden sich überlagernden Wellen trotz Kompensation durch die Lichtquelle 111 mit Frequenzkamm-Charakteristik im Mittel vergleichsweise groß, so dass nur ein Teil eines räumlichen Kurzkohärenz-Interferogramms KKI - also nicht das Maximum der Einhüllenden des räumlichen Kurzkohärenz-Interferogramms KKI - auf dem Detektor 12 beobachtet werden kann, siehe Detail L.

Im Zeitintervall delta_tz wird nun die optische Weglänge der Lichtquelle 111 mit Frequenzkamm-Charakteristik um delta_L vergrößert, so dass zum Zeitpunkt t2 in der Lichtquelle 111 mit Frequenzkamm-Charakteristik die einfache optische Weglänge L2 besteht. Die Änderung delta_L der optischen Weglänge der Lichtquelle 111 mit Frequenzkamm-Charakteristik, hier eine Vergrößerung der optischen Weglänge L2, beträgt etwa den zehnfachen Betrag der Schwerpunktwellenlänge Lambda_schwer. Diese Änderung delta_L der optischen Weglänge wird beim Scannen hier mit einer Wegauflösung von 10 nm, also hochaufgelöst, gemessen. Zum Zeitpunkt t2 entspricht die vierfache optische Weglänge L2 der Lichtquelle 111 in der Messebene ME2 nahezu der Tiefenposition des Objektpunkts P, so dass ein räumliches Kurzkohärenz-Interferogramm KKI im Überlagerungsbereich U der Wellenfronten, dargestellt im Detail M, entstehen kann. Die Positionsabweichung der Messebene ME2 von der Tiefenposition des Objektpunkts P liegt im einstelligen Mikrometerbereich. Das Detail M zeigt, dass das Maximum der Einhüllenden des räumlichen Kurzkohärenz-Interferogramms KKI hierbei um (-)y(t2) auf dem gerasterten Detektor 12 aus der Detektormitte verschoben ist. Aufgrund der Kenntnis der einfachen optischen Weglänge L2 der Lichtquelle 111 mit Frequenzkamm-Charakteristik und der a priori-Kenntnis, dass die Messebene ME2 sich in der vierfachen optischen Weglänge L2, also bei 4L2 befindet, sowie durch die Kenntnis des Neigungswinkels der interferierenden Wellenfronten RW und OW aus der Geometrie der Anordnung, der Schwerpunktwellenlänge und durch die rechnerische Bestimmung der Verschiebung (-)y(t2) kann durch den kundigen Fachmann mit beim Stand der Technik bekannter Algorithmik die Tiefenposition des Objektpunkts P rechnergestützt mit hoher Genauigkeit ermittelt werden. Dies erfolgt hier unter anderem durch eine Einhüllendenauswertung des Kurzkohärenz-Interferogramms KKI, das beispielsweise hier entlang der Spalte Sk des Detektors 12 erfasst wird. Durch die Möglichkeit der vergleichsweise groben Änderung delta_L der optischen Weglänge der Lichtquelle 111 mit Frequenzkamm-Charakteristik erfolgt hierbei eine wesentlich schnellere Tiefenabtastung eines Objektpunktes P im Vergleich zur klassischen Weißlichtinterferometrie, wo ein Scanschritt bei der Abtastung eines Kurzkohärenz-Interferogramms typischerweise nur ein Achtel der Schwerpunktwellenlänge beträgt.

Für den Fall, dass auch nach der ersten Änderung delta_L der optischen Weglänge das Maximum der Einhüllenden des Kurzkohärenz-Interferogramms KKI sich nicht auf dem gerasterten Detektor 12 befindet, wird eine weitere Änderung delta_L der optischen Weglänge in der Lichtquelle 111 mit Frequenzkamm-Charakteristik im Zeitintervall delta_tz durchgeführt. Dies kann so oft wiederholt werden bis sich das Maximum der Einhüllenden des Kurzkohärenz-Interferogramms KKI auf dem Detektor, insbesondere dem gerasterten Detektor 12 ergibt. Dabei muss sich jedoch die aktuelle Messebene ME stets im wellenoptischen Schärfentiefebereich befinden. Anderenfalls muss nachfokussiert werden.

Nach Beendigung des optischen Antastens des Punktes P erfolgt eine laterale Verschiebung des Objekts 7, welches hier ein Profil mit Vertiefungen aufweist, durch einen hier nicht dargestellten Schlitten und es wird nun der Punkt Q in der Vertiefung des Objekts 7 optisch angetastet. Auch dieser Punkt Q liefert in der Regel erst nach mehrmaligem Verändern der optischen Weglänge um delta_L in der Lichtquelle 111 mit Frequenzkamm-Charakteristik - jeweils in einem Zeitintervall delta_tz -auf dem gerasterten Detektor 12 ein räumliches Kurzkohärenz-Interferogramm KKI mit seinem Modulationsmaximum. Dazu sind jedoch - im Vergleich zur klassischen Weißlicht-Interferometrie mit einer Änderung der optischen Weglänge im Sub-Lamda-Bereich pro Detektion - hierbei nur wenige Veränderungen der optischen Weglänge um delta_L, also nur wenige Schritte und Aufnahmen mittels gerastertem Detektor 12, erforderlich.

**Patentansprüche**

1. Anordnung zur robusten Interferometrie zur Erfassung von Abstand, Tiefe, Profil, Form, Welligkeit und/oder Rauheit oder der optischen Weglänge und/oder Ebenheitsabweichung in oder an technischen oder biologischen Objekten, auch in Schichtform, oder auch zur optischen Kohärenz-Tomografie (OCT), welche folgende Mittel umfasst:

   • eine monochromatische oder quasi-monochromatische Quelle elektromagnetischer Strahlung und/oder eine Quelle kurzkohärenter elektromagnetischer Strahlung (1, 101, 110, 111) zur Beleuchtung des Objekts,
   • ein Interferometer, insbesondere auch in Form eines Interferenzmikroskops, mit einem Objekt- (O) und mit mindestens einem Referenzstrahlengang (R), in dem mindestens ein End-Reflektor angeordnet ist, und einer Messebene (ME) oder einem Messvolumen im Objektstrahlengang, in der beziehungsweise dem sich zumindest näherungsweise die optisch anzumessenden Oberflächen- oder Volumenelemente des Objekts (7, 70, 700) befinden.
   • sowie mindestens einen gerasterten Detektor (12, 102) zur Detektion elektromagnetischer Strahlung in Form mindestens eines räumlichen Interferogramms,

   **gekennzeichnet dadurch, dass**
   im Referenzstrahlengang des Interferometers

   • mindestens ein End-Reflektor (8, 8i) mit drei Planspiegeln (9, 10, 11) als Referenzreflektor im Referenzstrahlengang angeordnet ist und die Flächen dieser drei Planspiegel (9, 10, 11) jeweils zumindest näherungsweise senkrecht zu einer gemeinsamen Bezugsebene BE liegen
   • und die drei Spurgeraden der Ebenen, welche durch die Flächen der drei Planspiegel (9, 10, 11) dargestellt werden, in der Bezugsebene BE ein Dreieck ABC bilden, damit bei diesem Interferometer zwischen Referenz- (RS) und Objektbündel (OS) eine Lateral-Shear vom Betrag delta_q besteht.

2. Anordnung zur robusten Interferometrie nach Anspruch 1, **gekennzeichnet dadurch, dass** die drei Spurgeraden (AB, BC, CA) in der Bezugsebene BE ein stumpfwinkliges Dreieck ABC bilden.

3. Anordnung zur robusten Interferometrie nach mindestens einem der Ansprüche 1 und 2, **gekennzeichnet dadurch, dass** im Referenzstrahlengang eine Vielzahl von miniaturisierten Drei-Planspiegel-Referenz-Endreflektoren (8, 8i) in Form eines Arrays (18) angeordnet ist.

4. Anordnung zur robusten Interferometrie nach mindestens einem der Ansprüche 1 bis 3, **gekennzeichnet dadurch, dass** die Quelle kurzkohärenter elektromagnetischer Strahlung (1, 101, 110, 111) zur lateral feinstrukturierten Beleuchtung eines Objekts (7, 70, 700) mittels eines schaltbaren räumlichen Lichtmodulator-Arrays (115) ausgebildet ist.

5. Anordnung zur robusten Interferometrie nach mindestens einem der Ansprüche 1 bis 4, **gekennzeichnet dadurch, dass** mindestens eine Doppelblende (16, 116a, 116b) auf der Basis von Spalten oder Pinholes in einer gemeinsam benutzten Abbildungsstufe (15, 17) für Referenz- und Objektstrahlung angeordnet ist, wobei eine erste Öffnung der Doppelblende. (16, 116a, 116b) der Referenzstrahlung und eine zweite Öffnung der Objektstrahlung vorbehalten ist.

6. Anordnung zur robusten Interferometrie nach mindestens einem der Ansprüche 1 bis 5, **gekennzeichnet dadurch, dass** im Objektstrahlengang Mittel (19, 23) zur chromatischen Tiefenaufspaltung von Foki angeordnet sind.

7. Anordnung zur robusten Interferometrie nach mindestens einem der Ansprüche 1 bis 6, **gekennzeichnet dadurch, dass** im Objektstrahlengang mindestens eine konfokal diskriminierende Blende (16, 116a, 116b) angeordnet ist.

8. Anordnung zur robusten Interferometrie nach mindestens einem der Ansprüche 1 bis 7, **gekennzeichnet dadurch, dass** die Anordnung umfasst:

   • eine monochromatische oder quasi-monochromatische Quelle elektromagnetischer Strahlung und auch eine Quelle (1, 101) kurzkohärenter elektromagnetischer Strahlung zur Beleuchtung des Objekts (7, 70, 700), wobei Mittel (19, 23) zur spektralen Aufspaltung im Detektionsstrahlengang angeordnet sind.

9. Anordnung nach einem der Ansprüche 1 bis 8 zur robusten, insbesondere weitskaligen, Interferometrie, **gekennzeichnet durch**:

- mindestens eine Quelle kurzkohärenter elektromagnetischer Strahlung zur Beleuchtung des Objekts; welche eine dem Interferometer vorgeordnete Frequenzkamm-Laser-Kavität (111) mit der einfachen optischen Länge L oder/und mindestens eine einer spektral breitbandigen Quelle im Lichtweg nachgeordnete Vielstraht-Interferenz-Kavität mit der einfachen optischen Länge L umfasst, und
- Mittel zum Durchstimmen der Frequenzkamm-Laser-Kavität (111) oder/und der Vielstrahl-Interferenz-Kavität.

10. Anordnung zur robusten Interferometrie nach Anspruch 9, **dadurch gekennzeichnet, dass** Mittel zum zeitlichen Synchronisieren zum Durchführen einer optischen Längenänderung delta_L der mindestens einen dem Interferometer vorgeordneten Frequenzkamm-Laser-Kavität (111) oder/und der mindestens einen der Quelle im Lichtweg nachgeordneten Vielstrahl-Interferenz-Kavität mit der Bildaufnahme mittels gerastertem Detektor (12, 102) angeordnet sind.

11. Verfahren zur robusten Interferometrie zur Erfassung von Abstand, Tiefe, Profil, Form, Welligkeit und/oder Rauheit oder der optischen Weglänge in oder an technischen oder biologischen Objekten, auch in Schichtenform, oder auch zur optischen Kohärenz-Tomografie (OCT), insbesondere mit den Mitteln im Oberbegriff der Anordnung nach Anspruch 1, und mit den Verfahrensschritten:

• Erzeugen mindestens eines Objektstrahlenbündels elektromagnetischer Strahlung zur Beleuchtung des Objekts (7, 70, 700), dessen optisch auszumessende Oberflächen- oder Volumenelemente sich in einer Messebene (ME1, ME2) oder einem Messvolumen im Objektstrahlengang befinden,
• Erzeugen mindestens eines Referenzstrahlenbündels mittels Strahlteilung in einem Interferometer,
• Erzeugen von räumlichen Kurzkohärenz-Interferenzen von Objekt- und Referenzstrahlen,
• Detektion von räumlichen Kurzkohärenz-Interferenzen auf einem gerasterten
Detektor (12, 102) elektromagnetischer Strahlung,

**gekennzeichnet dadurch,**

• **dass** im Referenzstrahlengang drei, direkt aufeinanderfolgende Reflexionen an je einem von drei Planspiegeln (9, 10, 11) durchgeführt werden,
• dabei die Flächen dieser drei Planspiegel (9, 10, 11) jeweils zumindest näherungsweise senkrecht zu einer gemeinsamen Bezugsebene BE liegen und somit ein Drei-Planspiegel-Referenz-Endreflektor (8, 8i) gebildet ist,
• die drei Spurgeraden der Ebenen, welche durch die Flächen der drei Planspiegel (9, 10, 11) dargestellt werden, in der Bezugsebene BE ein Dreieck ABC bilden, damit durch die drei Reflexionen eine Lateral-Shear mit dem Betrag delta_q zwischen Objektstrahlenbündel und Referenzstrahlenbündel im Interferometer eingeführt wird, wodurch auf dem gerasterten Detektor (12, 102) mindestens ein räumliches Kurzkohärenz-Interferogramm erzeugt wird und
• mindestens ein räumliches Interferogramm zur Gewinnung von Informationen über Abstand, Tiefe, Profil, Form, Welligkeit und/oder Rauheit oder der optischen Weglänge eines Objekts (7, 70, 700), auch in der optischen Kohärenz-Tomografie, ausgewertet wird.

12. Verfahren zur robusten Interferometrie nach Anspruch 11, **gekennzeichnet dadurch, dass** eine punktförmige oder eine lateral strukturierte Beleuchtung des Objekts (7, 70, 700) erfolgt.

13. Verfahren zur robusten Interferometrie nach mindestens einem der Ansprüche 11 bis 12, **gekennzeichnet dadurch, dass** eine spektrale Aufspaltung von Objekt- und Referenzstrahlung im Detektionsstrahlengang durchgeführt wird, wobei das mindestens eine räumliche Interferogramm mit spektraler Auspaltung zur Gewinnung von Informationen über Abstand, Tiefe, Profil, Form, Welligkeit und/oder Rauheit oder der optischen Weglänge eines Objekts (7, 70, 700) detektiert und ausgewertet wird.

14. Verfahren, nach einem der Ansprüche 11 bis 13, zur robusten, insbesondere weitskaligen Interferometrie, gekennzeichet dadurch, dass

- zur Erzeugung der elektromagnetischen Strahlung mindestens eine Quelle kurzkohärenter elektromagnetischer Strahlung zur Beleuchtung des Objekts in Form einer dem Interferometer vorgeordneten Frequenzkamm-Laser-Kavität (111) mit der einfachen optischen Länge L oder/und mindestens einer einer spektral breitbandigen Quelle im Lichtweg nachgeordneten Vielstrahl-Interferenz-Kavität mit der einfachen optischen Länge L vorgesehen ist,
- zum Zeitpunkt t_i eine erste Überlagerung von Objekt- und Referenzstrahlung

und eine erste Detektion von überlagerter Objekt- und Referenzstrahlung mittels des gerasterten Detektors (12, 102) durchgeführt werden und anschließend

- entweder eine Relativbewegung in Richtung der Lichtausbreitung zwischen dem Interferometer und dem Objekt (7, 70, 700)
- oder eine Bewegung des Endreflektors (8, 18, 118) im Referenzstrahlengang in Richtung der Lichtausbreitung
- oder eine optische Längenänderung delta_L mindestens einer dem Interferometer vorgeordneten Frequenzkamm-Laser-Kavität (111) oder/und mindestens einer der Quelle im Lichtweg nachgeordneten Vielstrahl-Interferenz-Kavität

in der Zeitdauer delta_tz durchgeführt wird, wobei

- der Stellweg s der Relativbewegung zwischen dem Interferometer und dem Objekt (7, 70, 700)
- oder der Stellweg s der Bewegung des Endreflektors (8) im Referenz-strahlengang
- oder die optische Längenänderung delta_L der mindestens einen Frequenzkamm-Laser-Kavität (111) oder/und Vielstrahl-Interferenz-Kavität

in der Zeitdauer delta_tz mindestens den halben Betrag der Schwerpunktwellenlänge Lambda_schwer beträgt und die räumliche Änderung delta_xr_max des optischen Gangunterschieds xr im Überlagerungsgebiet von Objekt- und Referenzstrahlung auf dem gerasterten Detektor (12, 102) mindestens den ganzen Betrag der Schwerpunktwellenlänge Lambda_schwer der interferierenden Strahlung aufweist

und nach der Zeitdauer delta_tz zum Zeitpunkt t_i+1 mindestens eine zweite Überlagerung von Objekt- und Referenzstrahlung und mindestens eine zweite Detektion von überlagerter Objekt- und Referenzstrahlung mittels gerastertem Detektor (12, 102) durchgeführt werden.

**15.** Verfahren zur robusten, insbesondere weitskaligen Interferometrie nach Anspruch 14, **gekennzeichnet dadurch, dass** der Stellweg s oder die optische Längenänderung delta_L in der Zeitdauer delta_tz zumindest näherungsweise jeweils den Betrag von einem Viertel der maximalen räumlichen Änderung delta_xr_max des optischen Gangunterschieds xr des auf dem gerasterten Detektor (12, 102) aufgezeichneten räumlichen Interferogramms aufweist.

## Claims

**1.** An assembly for robust interferometry for measuring distance, depth, profile, shape, waviness and/or surface finish or the optical path length and/or flatness deviation in or on technical or biological objects, also in the form of layers, or also for optical coherence tomography (OCT), comprising the following means:

• a monochromatic or quasi-monochromatic source of electromagnetic radiation and/or a source of short-coherent electromagnetic radiation (1, 101, 110, 111) for illuminating the object,
• an interferometer, particularly also in the form of an interference microscope having an object optical path (O) and having at least one reference optical path (R), in which at least one end reflector is disposed, and a measurement plane (ME) or a measurement volume in the object optical path, in which is located, at least approximately, the surface or volume elements of the object (7, 70, 700) to be measured optically,
• and at least one raster scanning detector (12, 102) for detecting electromagnetic radiation in the form of at least one spatial interferogram,

**characterized in that**
in the reference optical path of the interferometer,

• at least one end reflector (8, 8i) having three flat mirrors (9, 10, 11) as a reference reflector is disposed in the reference optical path, and the surfaces of these three flat mirrors (9, 10, 11) each lie at least approximately perpendicular to a common reference plane BE,
• and the three traces of the planes, which are represented by the surfaces of the three flat mirrors (9, 10, 11), form a triangle ABC in the reference plane BE, such that with this interferometer a lateral shear of the value delta_q exists between reference bundle (RS) and object bundle (OS).

**2.** The assembly for robust interferometry according to claim 1, **characterized in that** the three traces (AB, BC, CA) form an obtuse triangle ABC in the reference plane BE.

**3.** The assembly for robust interferometry according to at least one of the claims 1 and 2, **characterized in that** in the reference optical path, a plurality of miniaturized three-flat-mirror reference end reflectors (8, 8i) is disposed in the form of an array (18).

4. The assembly for robust interferometry according to at least one of the claims 1 to 3, **characterized in that** the source of short-coherent electromagnetic radiation (1, 101, 110, 111) for the lateral fine-structured illumination of an object (7, 70, 700) is formed by means of a switchable spatial light modulator array (115).

5. The assembly for robust interferometry according to at least one of the claims 1 to 4, **characterized in that** at least one double diaphragm (16, 116a, 116b), based on slits or pinholes, is disposed in a commonly used imaging stage (15, 17) for the reference beam and the object beam, wherein a first opening of the double diaphragm (16, 116a, 116b) is reserved for the reference beam and the second opening is reserved for the object beam.

6. The assembly for robust interferometry according to at least one of the claims 1 to 5, **characterized in that** means (19, 23) are disposed in the object optical path for chromatic depth splitting of foci.

7. The assembly for robust interferometry according to at least one of the claims 1 to 6, **characterized in that** at least one confocal discriminating diaphragm (16, 116a, 116b) is disposed in the object optical path.

8. The assembly for robust interferometry according to at least one of the claims 1 to 7, **characterized in that** the assembly comprises:

   • a monochromatic or quasi-monochromatic source of electromagnetic radiation and also a source (1, 101) of short-coherent electromagnetic radiation for illuminating the object (7, 70, 700), wherein means (19, 23) for spectral splitting are disposed in the detection optical path.

9. The assembly according to one of the claims 1 to 8, for the robust, particularly large scale, interferometry, **characterized by**:

   - at least one source of short-coherent electromagnetic radiation for illuminating the object, comprising a frequency comb laser cavity (111), having a single optical length L, upstream of the interferometer, and/or at least one multiple beam interference cavity, having the single optical length L, downstream in the light path of a spectral broad band source, and
   - means for tuning the frequency comb laser cavity (111) and/or the multiple beam interference cavity.

10. The assembly for robust interferometry according to claim 9, **characterized in that** means for temporal synchronization for performing an optical length change delta_L of the at least one frequency comb laser cavity (111) upstream of the interferometer, and/or the at least one multiple beam interference cavity downstream in the light path of the source, are disposed with the image acquisition by means of the raster scanning detector (12, 102).

11. A method for robust interferometry for measuring distance, depth, profile, shape, waviness, and/or surface finish or the optical path length in or on technical or biological objects, also in the form of layers, or also for optical coherence tomography (OCT), particularly with the means in the preamble of the assembly according to claim 1, and having the method steps:

   • generating at least one object bundle of rays of electromagnetic radiation for illuminating the object (7, 70, 700), the surface or volume elements of which are to be measured optically, located in a measurement plane (ME1, ME2) or a measurement volume in the object optical path,
   • generating at least one reference bundle of rays by means of beam splitting in an interferometer,
   • generating spatial short-coherence interferences of object beams and reference beams,
   • detecting spatial short-coherence interferences on a raster scanning
   detector (12, 102) of electromagnetic radiation,

   **characterized in that**

   • in the reference optical path, three reflections, directly following each other, are performed on respectively one of three flat mirrors (9, 10, 11),
   • where the surfaces of these three flat mirrors (9, 10, 11) each lie at least approximately perpendicular to a common reference plane BE, and thus form a three-flat-mirror-reference end reflector (8, 8i),

• the three traces of the planes, which are represented by the surfaces of the three flat mirrors (9, 10, 11), form a triangle ABC in the reference plane BE, so that due to the three reflections, a lateral shear of the value delta_q is introduced between object beam bundle and reference beam bundle in the interferometer, whereby a spatial short-coherence interferogram is generated on the raster scanning detector (12, 102), and

• at least one spatial interferogram is evaluated for acquiring information about distance, depth, profile, shape, waviness and/or surface finish or the optical path length of an object (7, 70, 700), also in the optical coherence tomography.

12. The method for robust interferometry according to claim 11, **characterized in that** there is a point-source or lateral structured illumination of the object (7, 70, 700).

13. The method for robust interferometry according to at least one of the claims 11 to 12, **characterized in that** a spectral splitting of object radiation and reference radiation is performed in the detection optical path, wherein the at least one spatial interferogram, using spectral splitting, is detected and evaluated for acquiring information about distance, depth, profile, shape, waviness and/or surface finish or the optical path length of an object (7, 70, 700).

14. The method according to one of the claims 11 to 13, for robust, particularly large scale, interferometry, **characterized in that**

- for generating the electromagnetic radiation, at least one source of short-coherent electromagnetic radiation for illuminating the object is provided in the form of a frequency comb laser cavity (111), having a single optical length L, upstream of the interferometer, and/or at least one multiple beam interference cavity, having the single optical length L, downstream in the light path of a spectral broad band source,

- at time t_i a first superposition of object beam and reference beam, and a first detection of superposed object beam and reference beam are performed by means of the raster scanning detector (12, 102) and then

- either a relative movement in the direction of the light propagation between the interferometer and the object (7, 70, 700)

- or a movement of the end reflector (8, 18, 118) in the reference optical path in the direction of the light propagation

- or an optical length change delta_L of the at least one frequency comb laser cavity (111) upstream of the interferometer, and/or at least one multiple beam interference cavity downstream in the light path of the source

is performed in the period delta_tz, wherein

- the displacement s of the relative movement between the interferometer and the object (7, 70, 700)

- or the displacement s of the movement of the end reflector (8) in the reference optical path

- or the optical length change delta_L of the at least one frequency comb laser cavity (111) and/or multiple beam interference cavity

in the period delta_tz amounts at least to half the amount of the centroid wavelength Lambda_schwer and the spatial change delta_xr_max of the optical path difference xr in the superposition region of object beam and reference beam on the raster scanning detector (12, 102) has at least the entire value of the centroid wavelength Lambda_schwer of the interfering radiation and after the period delta_tz, at the time t_I+1, at least a second superposition of object beam and reference beam and at least a second detection of superposed object beam and reference beam are performed by means of the raster scanning detector (12, 102).

15. The method for robust, particularly large scale, interferometry according to claim 14, **characterized in that**, the displacement s or the optical length change delta_L in the period delta_tz has at least approximately in each case the value of a quarter of the maximum spatial change delta_xr_max of the optical path difference xr of the spatial interferogram displayed on the raster scanning detector (12, 102).

**Revendications**

1. Agencement pour l'interférométrie robuste en vue de la détection de distance, profondeur, profil, forme, ondulation et/ou rugosité ou du trajet optique et/ou de l'écart de planéité dans ou sur des objets techniques ou biologiques, également sous forme de couche, ou également en vue de la tomographie en cohérence optique (OCT), qui comprend les moyens suivants :

• une source monochromatique ou quasi monochromatique de rayonnement électromagnétique et/ou une source de rayonnement électromagnétique à cohérence courte (1, 101, 110, 111) en vue de l'éclairage de l'objet,
• un interféromètre, notamment également sous la forme d'un microscope interférentiel, avec un chemin optique d'objet (O) et avec au moins un chemin optique de référence (R), dans lequel au moins un réflecteur terminal est disposé, et un plan de mesure (ME) ou un volume de mesure dans le chemin optique d'objet, dans lequel les éléments de surface ou de volume à mesurer optiquement de l'objet (7, 70, 700) se trouvent au moins approximativement,
• ainsi qu'au moins un détecteur à balayage (12, 102) en vue de la détection de rayonnement électromagnétique sous la forme d'au moins un interférogramme spatial,

**caractérisé en ce que**,
dans le chemin optique de référence de l'interféromètre,

• au moins un réflecteur terminal (8, 8i) avec trois miroirs plans (9, 10, 11) est disposé en tant que réflecteur de référence dans le chemin optique de référence, et les faces de ces trois miroirs plans (9, 10, 11) se situent chacune au moins approximativement perpendiculairement à un plan de référence commun BE,
• et les trois traces des plans qui sont représentées par les faces des trois miroirs plans (9, 10, 11) forment un triangle ABC dans le plan de référence BE afin qu'il existe un cisaillement latéral du montant delta_q pour cet interféromètre entre le faisceau de référence (RS) et le faisceau d'objet (OS).

2. Agencement pour l'interférométrie robuste selon la revendication 1, **caractérisé en ce que** les trois traces (AB, BC, CA) dans le plan de référence BE forment un triangle à angle obtus ABC.

3. Agencement pour l'interférométrie robuste selon au moins une des revendications 1 et 2, **caractérisé en ce qu'**une pluralité de réflecteurs terminaux de référence à trois miroirs plans miniaturisés (8, 8i) est disposée sous la forme d'un réseau (18) dans le chemin optique de référence.

4. Agencement pour l'interférométrie robuste selon au moins une des revendications 1 à 3, **caractérisé en ce que** la source de rayonnement électromagnétique à cohérence courte (1, 101, 110, 111) est réalisée pour l'éclairage finement structuré latéralement d'un objet (7, 70, 700) au moyen d'un réseau de modulateurs lumineux spatial commutable (115).

5. Agencement pour l'interférométrie robuste selon au moins une des revendications 1 à 4, **caractérisé en ce qu'**au moins un double obturateur (16, 116a, 116b) à base de colonnes ou piqûres est disposé dans un étage de représentation utilisé en commun (15, 17) pour rayonnements de référence et d'objet, dans lequel une première ouverture du double obturateur (16, 116a, 116b) est réservée au rayonnement de référence et une seconde ouverture est réservée au rayonnement d'objet.

6. Agencement pour l'interférométrie robuste selon au moins une des revendications 1 à 5, **caractérisé en ce que** des moyens (19, 23) pour la division de profondeur chromatique de foyers sont disposés dans le chemin optique d'objet.

7. Agencement pour l'interférométrie robuste selon au moins une des revendications 1 à 6, **caractérisé en ce qu'**au moins un obturateur à discrimination confocale (16, 116a, 116b) est disposé dans le chemin optique d'objet.

8. Agencement pour l'interférométrie robuste selon au moins une des revendications 1 à 7, **caractérisé en ce que** l'agencement comprend :

• une source monochromatique ou quasi monochromatique de rayonnement électromagnétique ainsi qu'une source (1, 101) de rayonnement électromagnétique à cohérence courte en vue de l'éclairage de l'objet (7, 70, 700),
dans lequel des moyens (19, 23) pour la division spectrale sont disposés dans le chemin optique de détection.

9. Agencement selon l'une quelconque des revendications 1 à 8 pour l'interférométrie robuste, notamment à large gamme, **caractérisé par** :

- au moins une source de rayonnement électromagnétique à cohérence courte en vue de l'éclairage de l'objet qui comprend une cavité laser à peigne de fréquence (111) disposée en amont de l'interféromètre avec la longueur optique simple L ou/et au moins une cavité d'interférence multifaisceaux disposée en aval d'une source à large bande spectrale dans le trajet optique avec la longueur optique simple L, et

- des moyens pour accorder la cavité laser à peigne de fréquence (111) ou/et la cavité d'interférence multifaisceaux.

**10.** Agencement pour l'interférométrie robuste selon la revendication 9, **caractérisé en ce que** des moyens pour la synchronisation temporelle en vue de réaliser une modification de longueur optique delta_L de l'au moins une cavité laser à peigne de fréquence (111) disposée en amont de l'interféromètre ou/et de l'au moins une cavité d'interférence multifaisceaux disposée en aval de la source dans le trajet optique sont disposés avec l'enregistrement d'images au moyen d'un détecteur à balayage (12, 102).

**11.** Procédé pour l'interférométrie robuste en vue de la détection de distance, profondeur, profil, forme, ondulation et/ou rugosité ou du trajet optique dans ou sur des objets techniques ou biologiques, également sous forme de couche, ou également en vue de la tomographie en cohérence optique (OCT), notamment avec les moyens dans le préambule de l'agencement selon la revendication 1, et avec les étapes opératoires :

• génération d'au moins un faisceau de rayons d'objet de rayonnement électromagnétique en vue de l'éclairage de l'objet (7, 70, 700), dont les éléments de surface ou de volume à mesurer optiquement se trouvent dans un plan de mesure (ME1, ME2) ou un volume de mesure dans le chemin optique d'objet,
• génération d'au moins un faisceau de rayons de référence au moyen d'une division de rayons dans un interféromètre,
• génération d'interférences spatiales à cohérence courte de rayons d'objet et de référence,
• détection d'interférences spatiales à cohérence courte sur un détecteur à balayage (12, 102) de rayonnement électromagnétique,

**caractérisé en ce**

• **que** trois réflexions directement successives sont réalisées dans le chemin optique de référence sur à chaque fois un de trois miroirs plans (9, 10, 11),
• les faces de ces trois miroirs plans (9, 10, 11) se situent en l'occurrence chacune au moins approximativement perpendiculairement à un plan de référence commun BE et un réflecteur terminal de référence à trois miroirs plans (8, 8i) est ainsi formé,
• les trois traces des plans qui sont représentées par les faces des trois miroirs plans (9, 10, 11) forment un triangle ABC dans le plan de référence BE afin qu'un cisaillement latéral avec le montant delta_q soit introduit dans l'interféromètre grâce aux trois réflexions entre le faisceau de rayons d'objet et le faisceau de rayons de référence, moyennant quoi au moins un interférogramme spatial à cohérence courte est généré sur le détecteur à balayage (12, 102) et
• au moins un interférogramme spatial est évalué pour l'obtention d'informations concernant la distance, la profondeur, le profil, la forme, l'ondulation et/ou la rugosité ou le trajet optique d'un objet (7, 70, 700), même dans la tomographie en cohérence optique.

**12.** Procédé pour l'interférométrie robuste selon la revendication 11, **caractérisé en ce qu'**un éclairage ponctuel ou structuré latéralement de l'objet (7, 70, 700) est obtenu.

**13.** Procédé pour l'interférométrie robuste selon au moins une des revendications 11 à 12, **caractérisé en ce qu'**une division spectrale des rayonnements d'objet et de référence est effectuée dans le chemin optique de détection, dans lequel l'au moins un interférogramme spatial est détecté et évalué avec la division spectrale pour l'obtention d'informations concernant la distance, la profondeur, le profil, la forme, l'ondulation et/ou la rugosité ou le trajet optique d'un objet (7, 70, 700).

**14.** Procédé selon l'une quelconque des revendications 11 à 13 pour l'interférométrie robuste, notamment à large gamme, **caractérisé en ce que** :

- au moins une source de rayonnement électromagnétique à cohérence courte en vue de l'éclairage de l'objet sous la forme d'une cavité laser à peigne de fréquence (111) disposée en amont de l'interféromètre avec la longueur optique simple L et/ou d'au moins une cavité d'interférence multifaisceaux disposée en aval d'une source à large bande spectrale dans le trajet optique avec la longueur optique simple L est prévue en vue de la génération du rayonnement électromagnétique,

- une première superposition du rayonnement d'objet et du rayonnement de référence et une première détection des rayonnements d'objet et de référence superposés sont effectuées au moment t_i au moyen du détecteur à balayage (12, 102), puis

- un mouvement relatif en direction de la diffusion lumineuse entre l'interféromètre et l'objet (7, 70, 700),

- ou un mouvement du réflecteur terminal (8, 18, 118) dans le chemin optique de référence en direction de la diffusion lumineuse,

- ou une modification de longueur optique delta_L d'au moins une cavité laser à peigne de fréquence (111) disposée en amont de l'interféromètre ou/et d'au moins une cavité d'interférence multifaisceaux disposée en aval de la source dans le trajet optique

est effectué(e) dans la durée delta_tz, dans lequel

- le déplacement s du mouvement relatif entre l'interféromètre et l'objet (7, 70, 700),

- ou le déplacement s du mouvement du réflecteur terminal (8) dans le chemin optique de référence,

- ou la modification de longueur optique delta_L de l'au moins une cavité laser à peigne de fréquence (111) ou/et cavité d'interférence multifaisceaux se monte à au moins la moitié du montant de la longueur d'onde d'intensité Lambda_schwer dans la durée delta_tz,

et la modification spatiale delta_xr_max de la différence de chemin optique xr dans la région de superposition des rayonnements d'objet et de référence sur le détecteur à balayage (12, 102) présente au moins le montant entier de la longueur d'onde d'intensité Lambda_schwer du rayonnement interférent,

et au moins une seconde superposition des rayonnements d'objet et de référence et au moins une seconde détection des rayonnements d'objet et de référence superposés sont effectuées après la durée delta_tz au moment t_i+1 au moyen du détecteur à balayage (12, 102).

15. Procédé pour l'interférométrie robuste, notamment à large gamme, selon la revendication 14, **caractérisé en ce que** le déplacement s ou la modification de longueur optique delta_L dans la durée delta_tz présente au moins approximativement à chaque fois le montant d'un quart de la modification spatiale maximale delta_xr_max de la différence de chemin optique xr de l'interférogramme spatial enregistré sur le détecteur à balayage (12, 102).

**Figur 1**

Figur 2

EP 2 526 373 B1

Figur 3

Figur 4

Figur 5

Figur 6

**Figur 7**

EP 2 526 373 B1

Figur 8

**Figur 9**

delta_q

BE

R

O

g

VSE=F13=ME

13  15  16  17  y' 114  12 KKI

F13'  EK

<u>um 90° herausgedreht</u>

7

P1

BE

P2

Spurpunkt der
Geraden g

F13=VSE=ME

**Figur 10**

13  15  16  17 114  12 KKI

P2'

P1'

P1''

P2''

F13'

EP 2 526 373 B1

**Figur 11**

EP 2 526 373 B1

Figur 12

EP 2 526 373 B1

**Figur 13**

EP 2 526 373 B1

Figur 14

**Figur 15**

Figur 16

**Figur 17**

EP 2 526 373 B1

**Figur 18**

EP 2 526 373 B1

delta_beta

F17' EK

14   y'   17   110

22

12

51

2

F17   116a

Pupillenabbildung

67

3

4

VSE

8

F4'

R

52

6

O

7

ME

MP

**Figur 19**

0

Opt. Gangunterschied

0. Ordnung

KKI-22

mon_Int

Spektrale
Achse  k

Bereich ohne
spektrale Aufspaltung

PA

12

**Figur 20**

Figur 21

Figur 22

Detail K

Int

Δk

k

t1    t2

111

$L_1$    $L_2$

delta_L

2

FF

3

delta_q

8

4

R

6  5

O

IA

ZF

113

$4L_1$

$4L_2$

ME1

ME2

7

FO    P

Q

DOV

RHS    RW

OHS    OW

12

Detail L

t1

KKI

Detail M

t2    (-)y(t2)

12

U    Sk    KKI

Figur 23

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006015387 A1
- US 4643576 A
- US 1565533 A
- DE 10321895 A1

**In der Beschreibung aufgeführte Nicht-Patentliteratur**

- **M. HERING.** *Applied Optics,* 20. Januar 2009, vol. 48 (3), 525-538
- **M. HERING.** *Proceedings of SPIE,* 2006, vol. 6188, 61880E-161880E-11
- **D. MALACARA.** Optical Shop Testing. John Wiley & Sons, Inc, 1992, 140-141
- **D. KELSALL.** *Proc. Phys. Society,* 1959, vol. 73, 470